(19) Europäisches Patentamt / European Patent Office / Office européen des brevets

(11) **EP 3 293 671 B1**

(12) **EUROPEAN PATENT SPECIFICATION**

(45) Date of publication and mention of the grant of the patent:
**15.04.2020  Bulletin 2020/16**

(51) Int Cl.:
**G06K 9/00** *(2006.01)*          **G06T 7/593** *(2017.01)*

(21) Application number: **17190345.3**

(22) Date of filing: **11.09.2017**

(54) **IMAGE PROCESSING DEVICE, OBJECT RECOGNIZING DEVICE, DEVICE CONTROL SYSTEM, MOVING BODY, IMAGE PROCESSING METHOD, AND PROGRAM**

BILDVERARBEITUNGSVORRICHTUNG, OBJEKTERKENNUNGSVORRICHTUNG, VORRICHTUNGSSTEUERUNGSSYSTEM, BEWEGLICHER KÖRPER, BILDVERARBEITUNGSVERFAHREN UND PROGRAMM

DISPOSITIF DE TRAITEMENT D'IMAGE, DISPOSITIF DE RECONNAISSANCE D'OBJET, SYSTÈME DE COMMANDE DE DISPOSITIF, PROCÉDÉ DE TRAITEMENT D'IMAGE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2016   JP 2016177767**
                **12.09.2016   JP 2016177922**
                **26.06.2017   JP 2017124445**

(43) Date of publication of application:
**14.03.2018  Bulletin 2018/11**

(73) Proprietor: **Ricoh Company, Ltd.**
**Tokyo 143-8555 (JP)**

(72) Inventor: **MOTOHASHI, Naoki**
**Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**EP-A2- 2 767 927      US-A1- 2015 294 160**

• **YIRUO DAI ET AL: "Complex ground plane detection based on V-disparity map in off-road environment", 2013 IEEE INTELLIGENT VEHICLES SYMPOSIUM (IV), IEEE, 23 June 2013 (2013-06-23), pages 1137-1142, XP032502029, ISSN: 1931-0587, DOI: 10.1109/IVS.2013.6629619 [retrieved on 2013-10-10]**

**Description**

1. Field of the Invention

The present invention relates to an image processing device, an object recognizing device, a device control system, a moving body, an image processing method, and a program.

2. Description of the Related Art

Typically, regarding the safety of automobiles, there has been development in the body structure of automobiles from the perspective of how to protect a pedestrian and how to guard the passengers in the case of a collision between the pedestrian and the passengers. However, in recent years, with the advancement of the information processing technology and the image processing technology, a technology for detecting persons and automobiles at a fast rate has been developed. Moreover, the implementation of such technology has already led to the development of automobiles in which brakes are automatically applied before a collision with an object occurs, thereby preventing the collision from occurring. In order to achieve automatic control of vehicles, it is necessary to accurately measure the distance to objects such as persons and other vehicles. For that, distance measurement using millimeter-wave radars and laser radars as well as distance measurement using stereo cameras has been put to practical use. In order to achieve commercial viability of such automatic control of vehicles, the objects appearing on a screen need to be detected based on the information about the distance measurement performed by the abovementioned devices, and control needs to be performed on an object-by-object basis. For example, it is conceivable that the control is varied depending on whether the detected object is a person or a vehicle.

In the case of measuring the distance using stereo cameras, a disparity image can be generated based on the amount of disparity (parallax) in the local areas captured by the right and left cameras, and the distances between anterior objects and the concerned vehicle can be measured. Then, a clustering operation is performed in which a group of disparity pixels present at nearly same distances (i.e., a group of disparity pixels having nearly equal disparity values) is detected as a single object. However, if all disparity pixels in a disparity image are subject to clustering; then, apart from the target objects for detection, the disparity pixels of the white lines drawn on the road surface also get detected as objects, and thus some part of the road surface that is supposed to be flat is erroneously detected as objects. In that case, the automatic control system determines that an object is present anteriorly and applies sudden brakes, for example.

In order to solve that issue, a method is known in which a V-Disparity map (vertical axis: vertical coordinates of a disparity image, horizontal axis: disparity values) (hereinafter, sometimes simply called a "V map") (a frequency image) is generated in which, with respect to the vertical positions (the positions of the y-coordinate) of the disparity image, each disparity pixel (a point in the disparity image) is voted onto a lateral coordinate indicated by the disparity value of that disparity pixel; and the geometry of the road surface is estimated by applying a statistical method such as the least-square method with respect to the group of points that have been voted onto the V map (hereinafter, sometimes referred to as "disparity points"). A V-Disparity map is a two-dimensional histogram in which, as described above, the y-axis of the disparity image represents the vertical axis and the disparity values of the disparity image (or the distances) represent the horizontal axis, and which indicates the frequency distribution of the disparity values. Moreover, voting implies an operation of incrementing, by one, the values (pixel values) (initial value=0) of the disparity points having predetermined coordinates in the V map. Then, a clustering operation is performed using such disparity pixels of the disparity image which correspond to the disparity points positioned higher than the estimated road surface, so that the issue of erroneously detecting unnecessary disparity pixels, which are detected from the road surface, as objects can be mitigated.

As far as the technology for generating a V map and estimating the road surface is concerned, a technology has been proposed in which sample points are determined from a predetermined start point to a predetermined end point in the V map, and road surface estimation is performed by implementing the least-square method with respect to the group of sample points (see Japanese Patent Application Laid-open No. 2011-128844). More particularly, a histogram regarding the frequency of the disparity values along each horizontal line is generated from the bottom of the disparity image in the upward direction (i.e., from the near side toward the farther side); and the disparities having the highest frequencies are treated as sample points, and the geometry of the road surface is estimated by implementing a statistical method such as the least-square method with respect to the group of sample points.

However, while it is critical to appropriately detect the start position of the road surface during road surface estimation, in the technology disclosed in Japanese Patent Application Laid-open No. 2011-128844, there is a possibility that an inappropriate disparity point gets selected as a sample point and road surface estimation is performed using a group of sample points retrieved on the basis of the selected sample point. Hence, there is a possibility that road surface estimation is not performed in an appropriate manner.

US-A-2015/0294160 discloses an object detection apparatus that includes a map generator to generate a map indicating a frequency profile of disparity values correlating a horizontal direction distance of the object with respect to a movement direction of a moveable apparatus, and a distance to the object in the movement direction of the moveable apparatus based on the disparity image, an isolated area detection unit to detect an isolated area based on the frequency profile, an isolated area divider to divide the isolated area into two or more isolated areas based on the frequency profile in the isolated area, and an object detector to detect an object based on the divided isolated area.

EP-A-2767927 discloses a face information detection apparatus useable for a vehicle moveable on a face, and comprising, a parallax information generation unit to generate parallax information based on the plurality of captured images; a parallax histogram information generation unit to generate parallax histogram information indicating a frequency profile of parallax values in each line area obtainable by dividing the captured image in a plurality of areas in a upper-lower direction, based on the parallax information; a parallax value selection unit to determine parallax values having a frequency exceeding a given frequency threshold as selected targets to be processed based on the parallax histogram information, and to select a group of parallax values matched to a feature indicated by parallax values of the face among the selected targets based on the parallax histogram information; and a face information detection unit to detect face information based on a selection result of the parallax value selection unit, wherein the parallax value selection unit determines the selected targets based on parallax values previously selected

The present invention is made in view of the issues mentioned above, and has an object to provide an image processing device, an object recognizing device, a device control system, a moving body, an image processing method, and a program that enable road surface detection with accuracy.

## SUMMARY OF THE INVENTION

The invention provides an image processing device in accordance with claim 1

According to an aspect of the present invention, the road surface can be estimated with accuracy.

## BRIEF DESCRIPTION OF THE DRAWINGS

FIGS. 1A and 1B are diagrams illustrating an example in which a device control system according to a first embodiment is installed in a vehicle;

FIG. 2 is a diagram illustrating an exemplary external appearance of an object recognizing device according to the first embodiment;

FIG. 3 is a diagram illustrating an exemplary hardware configuration of the object recognizing device according to the first embodiment;

FIG. 4 is a diagram for explaining the principle behind deriving the distance from an imaging unit to an object;

FIGS. 5A and 5B are explanatory diagrams for explaining a case of obtaining corresponding pixels in a comparison image which correspond to reference pixels in a reference image;

FIG. 6 is a diagram illustrating an exemplary graph of the result of a block matching operation;

FIG. 7 is a diagram illustrating an exemplary functional block configuration of the object recognizing device according to the first embodiment;

FIGS. 8A and 8B are diagrams illustrating an example of a V-Disparity map (V map) generated from a disparity image;

FIGS. 9A and 9B are diagrams illustrating an example of V map in the case of a flat road surface;

FIGS. 10A and 10B are diagrams illustrating an example of V map in the case of reaching an uphill road;

FIGS. 11A and 11B are diagrams illustrating an example of V map in the case of reaching a downhill road;

FIGS. 12A and 12B are diagrams illustrating an example of a U-Disparity map (U map) generated from a disparity image;

FIG. 13 is a diagram illustrating an exemplary functional block configuration of a disparity value computing unit of the object recognizing device according to the first embodiment;

FIG. 14 is a diagram illustrating an exemplary functional block configuration of a road surface estimating unit of the object recognizing device according to the first embodiment;

FIG. 15 is a diagram for explaining an operation of generating a V map;

FIG. 16 is a diagram for explaining an operation of dividing a V map into segments;

FIGS. 17A and 17B are diagrams for explaining a start segment search operation according to the first embodiment;

FIG. 18 is a flowchart for explaining an example of the block matching operation performed by a disparity value deriving unit according to the first embodiment;

FIG. 19 is a flowchart for explaining an example of a road surface estimation operation performed by the road surface estimating unit according to the first embodiment;

FIG. 20 is a diagram illustrating an exemplary functional block configuration of a road surface estimating unit of an object recognizing device according to a modification example of the first embodiment;

FIGS. 21A and 21B are diagrams for explaining a start segment search operation according to the modification example of the first embodiment;

FIGS. 22A and 22B are diagrams illustrating an example in which an estimated road surface in a V map is affected by the disparity points of an object;

FIG. 23 is a diagram illustrating an exemplary functional block configuration of a road surface estimating unit of an object recognizing device according to a second embodiment;

FIG. 24 is a diagram for explaining an operation for setting a nearer segment as the start segment;

FIG. 25 is a flowchart for explaining an example of a road surface estimation operation performed by the road surface estimating unit according to the second embodiment;

FIG. 26 is a diagram illustrating an exemplary functional block configuration of a road surface estimating unit of an object recognizing device according to a modification example of the second embodiment;

FIGS. 27A and 27B are diagrams for explaining an exemplary operation of selecting an erroneous segment when road surface estimation is successful in a plurality of segments;

FIG. 28 is a diagram for explaining an operation of setting, as the start segment, a segment that includes the road surface close to a historical road surface;

FIGS. 29A and 29B are diagrams for explaining the change in the slope of a road surface in the absence of pitching;

FIGS. 30A and 30B are diagrams for explaining the change in the slope of a road surface in the case in which a vehicle tilts forward due to pitching;

FIGS. 31A and 31B are diagrams for explaining the change in the slope of a road surface in the case in which a vehicle tilts backward due to pitching;

FIG. 32 is a diagram for explaining a start segment search operation performed using a historical road surface in the case in which pitching is done; and

FIG. 33 is a flowchart for explaining an example of a road surface estimation operation performed by the road surface estimating unit according to the modification example of the second embodiment.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

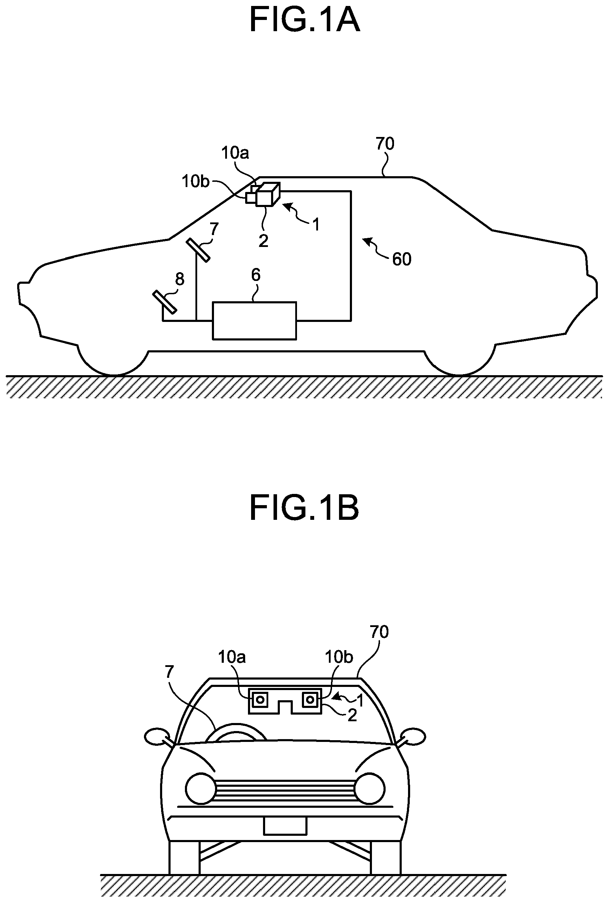

An embodiment of the present invention will be described in detail below with reference to the drawings. Exemplary embodiments of an image processing device, an object recognizing device, a device control system, a moving body, an image processing method, and a computer program product according to the present invention are described below in detail with reference to FIGS. 1 to 33. However, the present invention is not limited by the embodiments described below, and the constituent elements according to the embodiments are to be construed as embodying all modifications and alternative constructions that may occur to one skilled in the art that fairly fall within the basic teaching herein set forth.

First embodiment

Schematic configuration of vehicle including an object recognizing device

FIGS. 1A and 1B are diagrams illustrating an example in which a device control system according to a first embodiment is installed in a vehicle. Thus, explained with reference to FIGS. 1A and 1B is an example in which a device control system 60 according to the first embodiment is installed in a vehicle 70.

In FIGS. 1A and 1B, FIG. 1A is a lateral view of the vehicle 70 in which the device control system 60 is installed, and FIG. 1B is a front view of the vehicle 70.

As illustrated in FIG. 1, the vehicle 70 representing an automobile has the device control system 60 installed therein. The device control system 60 includes an object recognizing device 1, a vehicle control device 6 (a control device), a steering wheel 7, and a brake pedal 8 that are installed in the vehicle interior representing the cabin space of the vehicle 70.

The object recognizing device 1 has an imaging function for taking images in the travelling direction of the vehicle 70 and is installed, for example, on the inside of the front window of the vehicle 70 and near the rearview mirror. Although the configuration and the operations thereof are described later in detail, the object recognizing device 1 includes a main body 2 and includes imaging units 10a and 10b that are fixed to the main body 2. Herein, the imaging units 10a and 10b are fixed to the main body 2 in such a way that photographing subjects present in the travelling direction of the vehicle 70 are captured in images.

The vehicle control device 6 is an electronic control unit (ECU) that performs a variety of vehicle control based on recognition information received from the object recognizing device 1. As an example of vehicle control; based on the recognition information received from the object recognizing device 1, the vehicle control device 6 performs steering control in which the steering system (the target for control) including the steering wheel 7 is controlled to avoid obstacles, and performs braking control in which the brake pedal 8 (the target for control) is controlled to make the vehicle 70 decelerate and stop.

Thus, in the device control system 60 that includes the object recognizing device 1 and the vehicle control device 6, by performing vehicle control such as the steering control and the braking control, the driving safety of the vehicle 70 can be enhanced.

Meanwhile, as described above, the object recognizing device 1 takes images of the anterior side of the vehicle 70. However, that is not the only possible case. Alternatively, the object recognizing device 1 can be installed to take images of the rear side or the lateral sides of the vehicle 70. In that case, the object recognizing device 1 can detect trailing vehicles and persons present on the rear side of the vehicle 70 or can detect other vehicles and persons present on the lateral sides of the vehicle 70. Then, the vehicle control device 6 detects risks at the time of lane changing or lane merging of the vehicle 70, and can perform the vehicle control as described above. Moreover, at the time of reversing the vehicle 70 for parking, if a risk of collision is determined to be present based on the recognition information about the obstacles on the rear side of the vehicle 70 as output by the object recognizing device 1, then the vehicle control device 6 can perform the vehicle control as described above.

Configuration of object recognizing device

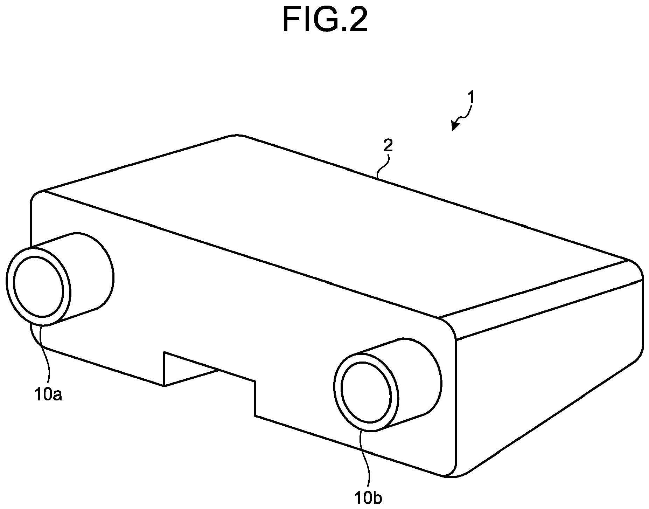

FIG. 2 is a diagram illustrating an exemplary external appearance of the object recognizing device according to the first embodiment. As illustrated in FIG. 2, the object recognizing device 1 includes the main body 2 and includes the imaging units 10a and 10b fixed to the main body 2 as described above. The imaging units 10a and 10b are configured with a pair of cylindrical cameras that are placed in a rectified manner with respect to the main body 2. Herein, for the purpose of illustration, with reference to FIG. 2, the imaging unit 10a is sometimes referred to as the right-side camera, and the imaging unit 10b is sometimes referred to as the left-side camera.

Hardware configuration of object recognizing device

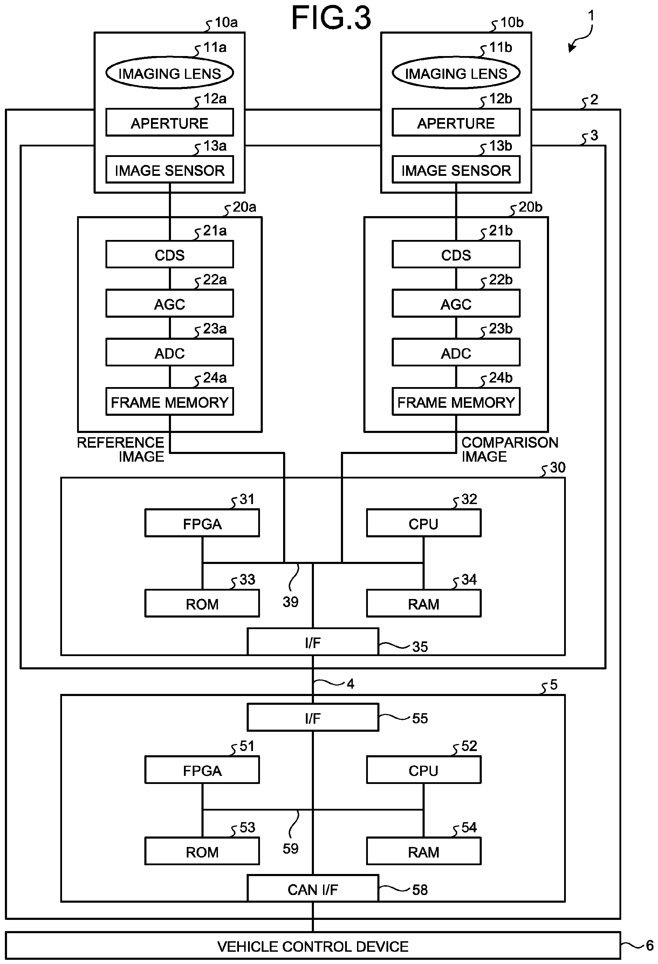

FIG. 3 is a diagram illustrating an exemplary hardware configuration of the object recognizing device according to the first embodiment. Thus, explained with reference to FIG. 3 is a hardware configuration of the object recognizing device 1.

As illustrated in FIG. 3, the object recognizing device 1 includes a disparity value deriving unit 3 and a recognition processing unit 5 inside the main body 2.

The disparity value deriving unit 3 derives, from a plurality of taken images in which an object is captured, a disparity value dp indicating the disparity with respect to the object; and outputs a disparity image (an example of a distance image) having the disparity value dp (an example of a distance value) as the pixel value of each pixel. Based on the disparity image output by the disparity value deriving unit 3, the recognition processing unit 5 performs an object recognition operation with respect to the object such as a person or a vehicle captured in the taken images; and outputs recognition information, which represents the result of the object recognition operation, to the vehicle control device 6. Meanwhile, images such as disparity images and taken images are assumed to include the concept of the aggregate of only information not accompanying any display.

As illustrated in FIG. 3, the disparity value deriving unit 3 includes the imaging units 10a and 10b, signal converting units 20a and 20b, and an image processing unit 30.

The imaging unit 10a is a processing unit for taking images of anterior photographic subjects and generating analog image signals. The imaging unit 10a includes an imaging lens 11a, an aperture 12a, and an image sensor 13a.

The imaging lens 11a is an optical element for refracting the incident light and forming an image of an object on the image sensor 13a. The aperture 12a is a member that blocks some of the light which has passed through the imaging lens 11a, and thus adjusts the amount of light input to the image sensor 13a. The image sensor 13a is a semiconductor element that converts the light, which had fallen on the imaging lens 11a and passed through the aperture 12a, into an electrical and analog image signal. The image sensor 13a is implemented using, for example, a solid-state image sensing device such as a charge-coupled device (CCD) or a complementary metal oxide semiconductor (CMOS).

The imaging unit 10b is a processing unit for taking images of anterior photographic subjects and generating analog image signals. The imaging unit 10b includes an imaging lens 11b, an aperture 12b, and an image sensor 13b. Herein, the imaging lens 11b, the aperture 12b, and the image sensor 13b have identical functions to the functions of the imaging lens 11a, the aperture 12a, and the image sensor 13a, respectively, described above. Meanwhile, the imaging lenses 11a and 11b are installed to have their principal surfaces in the substantially same plane so as to ensure that the right and left cameras take images under the same conditions.

The signal converting unit 20a is a processing unit for converting the analog image signal, which is generated by the imaging unit 10a, into digital image data. The signal converting unit 20a includes a CDS (which stands for Correlated Double Sampling) 21a, an AGC (which stands for Auto Gain Control) 22a, an ADC (which stands for Analog Digital Converter) 23a, and a frame memory 24a.

The CDS 21a removes noise from the analog image signal generated by the image sensor 13a using correlation double sampling, a lateral differential filter, and a vertical smoothing filter. The AGC 22a performs gain control for controlling the intensity of the analog image signal from which noise has been removed. The ADC 23a converts the analog image sensor, which has been subjected to gain control by the AGC 22a, into digital image data. The frame memory 24a is used to store the image data which is obtained by conversion by the ADC 23a.

The signal converting unit 20b is a processing unit for converting the analog image signal, which is generated by the imaging unit 10b, into digital image data. The signal converting unit 20b includes a CDS 21b, an AGC 22b, an ADC 23b, and a frame memory 24b. Herein, the CDS 21b, the AGC 22b, the ADC 23b, and the frame memory 24b having identical functions to the functions of the CDS 21a, the AGC 22a, the ADC 23a, and the frame memory 24a, respectively, described above.

The image processing unit 30 is a device that performs image processing with respect to the image data which has been obtained by conversion by the signal converting units 20a and 20b. The image processing unit 30 includes a field programmable gate array (FPGA) 31, a central processing unit (CPU) 32, a read only memory (ROM) 33, a random access memory (RAM) 34, an interface (I/F) 35, and a bus line 39.

The FPGA 31 is an integrated circuit and herein performs an operation of deriving the disparity value dp in an image formed based on the image data. The CPU 32 controls the various functions of the disparity value deriving unit 3. The ROM 33 is used to store an image processing program that is executed by the CPU 32 for controlling the various functions of the disparity value deriving unit 3. The RAM 34 is used as the work area for the CPU 32. The I/F 35 is an interface for performing communication with an I/F 55 of the recognition processing unit 5 via a communication line 4. As illustrated in FIG. 3, the bus line 39 represents an address bus and a data bus that communicably connect the FPGA 31, the CPU 32, the ROM 33, the RAM 34, and the I/F 35 to each other.

Meanwhile, although the image processing unit 30 includes the FPGA 31 as an integrated circuit for deriving the disparity value dp, that is not the only possible case. Alternatively, some other integrated circuit such as an application specific integrated circuit (ASIC) can be used.

As illustrated in FIG. 3, the recognition processing unit 5 includes an FPGA 51, a CPU 52, a ROM 53, a RAM 54, the I/F 55, a controller area network (CAN) I/F 58, and a bus line 59.

The FPGA 51 is an integrated circuit and herein, based on the disparity image received from the image processing unit 30, performs an object recognition operation with respect to the object. The CPU 52 controls the various functions of the recognition processing unit 5. The ROM 53 is used to store an object recognition program that is executed by the CPU 52 so that the object recognition operation is performed in the recognition processing unit 5. The RAM 54 is used as the work area for the CPU 52. The I/F 55 is an interface for performing data communication with the I/F 35 of the image processing unit 30 via the communication line 4. The CAN I/F 58 is an interface for performing communication with an external controller (such as the vehicle control device 6 illustrated in FIG. 3). As illustrated in FIG. 3, the bus line 59 that is connected to the CAN of the automobile represents, for example, an address bus and a data bus that communicably connect the FPGA 51, the CPU 52, the ROM 53, the RAM 54, the I/F 55, and the CAN I/F 58 to each other.

Meanwhile, although the recognition processing unit 5 includes the FPGA 51 as an integrated circuit for performing the object recognition operation, that is not the only possible case. Alternatively, some other integrated circuit such as an ASIC can be used.

As a result of such a configuration, when a disparity image is sent from the I/F 35 of the image processing unit 30 to the recognition processing unit 5 via the communication line 4, the FPGA 51 follows a command from the CPU 52 of the recognition processing unit 5 and, based on the disparity image, performs an object recognition operation of the objects such as persons and vehicles captured in the taken images.

Meanwhile, the computer programs mentioned above can be distributed by recording them as installable or executable files in a computer-readable recording medium. Examples of the recording medium include a compact disk read only memory (CD-ROM) and a secure digital (SD) memory card.

Meanwhile, as illustrated in FIG. 3, the image processing unit 30 of the disparity value deriving unit 3 is configured as a separate device from the recognition processing unit 5. However, that is not the only possible case. Alternatively, for example, the image processing unit 30 and the recognition processing unit 5 can be configured in the same device, and the generation of disparity images and the object recognition operation can be performed in that device. Moreover, the hardware configuration of the object recognizing device 1 as illustrated in FIG. 3 is only exemplary. That is, the hardware configuration is not limited to that example. Alternatively, a hardware circuit capable of implementing the identical functions to the functions described above can be used.

Principle of distance measurement

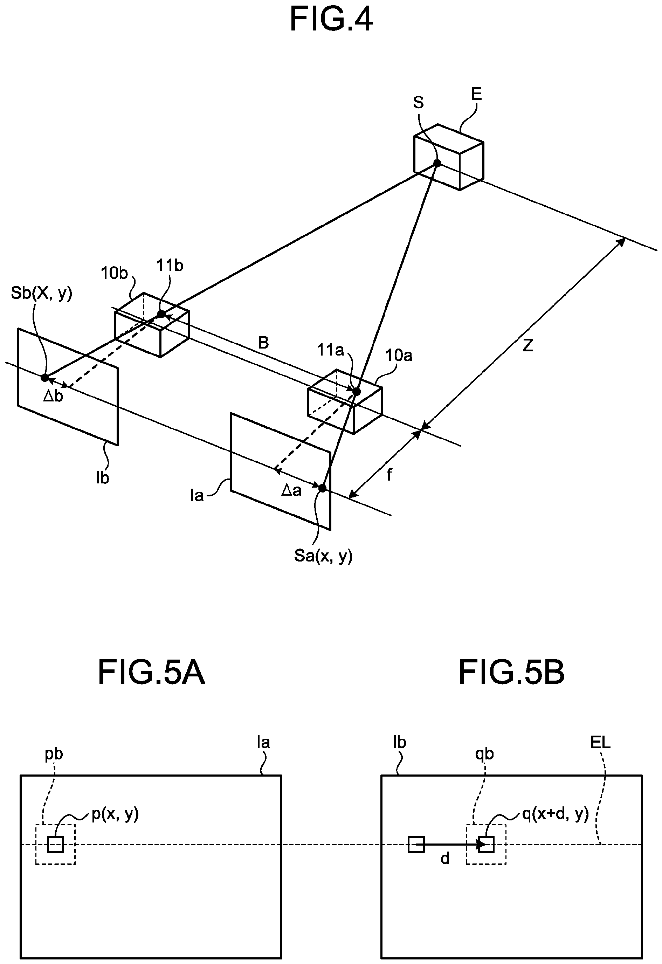

FIG. 4 is a diagram for explaining the principle behind deriving the distance from an imaging unit to an object. With reference to FIG. 4, the explanation is given about the principle by which the disparity with respect to an object from a stereo camera is derived according to a stereo matching operation and the distance from the stereo camera to the object is measured using the disparity value indicating the disparity.

An imaging system illustrated in FIG. 4 includes the imaging units 10a and 10b placed in a rectified manner. The imaging units 10a and 10b include the imaging lenses 11a and 11b, respectively, for refracting the incident light and forming an image of the object on respective image sensors representing solid-state imaging devices. The images taken by the imaging units 10a and 10b are referred to as a reference image Ia and a comparison image Ib, respectively. In FIG. 4, a point S of an object E present in the three-dimensional space is mapped at such positions in the reference image Ia and the comparison Ib which lie on a straight line parallel to the straight line joining the imaging lenses 11a and 11b. The point S that is mapped in the reference image Ia is referred to as a point Sa(x, y), and the point S that is mapped in the comparison image Ib is referred to as a point Sb(X, y). At that time, the disparity value dp is expressed as given below in (Equation 1) using the point Sa(x, y) present in the coordinates of the reference image Ia and the point Sb(X, y) present in the coordinates of the comparison image Ib.

$$dp=X-x \hspace{4cm} \text{(Equation 1)}$$

With reference to FIG. 4, if $\Delta a$ represents the distance between the point Sa(x, y) in the reference image Ia and the point of intersection of the perpendicular dropped from the imaging lens 11a onto the imaging area, and if $\Delta b$ represents the distance between the point Sb(X, y) in the comparison image Ib and the point of intersection of the perpendicular dropped from the imaging lens 11b onto the imaging area; then the disparity value dp can also be expressed as $dp=\Delta a+\Delta b$.

Subsequently, using the disparity value dp, a distance Z from the imaging units 10a and 10b to the object E is derived. The distance Z represents the distance from the straight line joining the focal positions of the imaging lenses 11a and 11b to the point S on the object E. As illustrated in FIG. 4, the distance Z can be calculated as given below in (Equation 2) using a focal length f of the imaging lenses 11a and 11b, a base length B representing the length between the imaging lenses 11a and 11b, and the disparity value dp.

$$Z=(B\times f)/dp \hspace{4cm} \text{(Equation 2)}$$

According to (Equation 2), it can be understood that, greater the disparity value dp, the shorter is the distance Z; and, smaller the disparity value dp, the longer is the distance Z.

Block matching operation

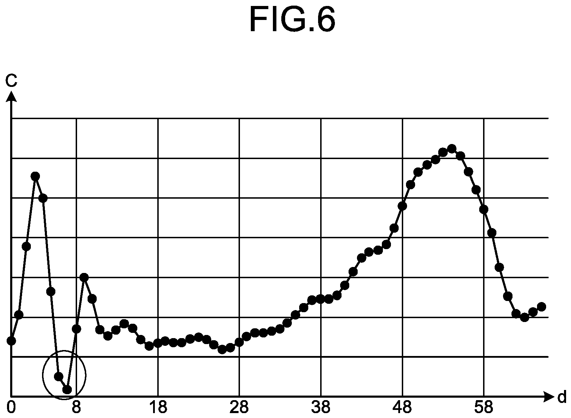

FIGS. 5A and 5B are explanatory diagrams for explaining a case of obtaining corresponding pixels in a comparison image which correspond to reference pixels in a reference image. FIG. 6 is a diagram illustrating an exemplary graph of the result of the block matching operation. Thus, explained below with reference to FIGS. 5 and 6 is a distance measurement method in which the block matching operation is used.

With reference to FIGS. 5A to 6, the explanation is given about a method of calculating a cost value C(p, d). In the following explanation, C(p, d) is assumed to express C(x, y, d).

In FIGS. 5A and 5B, FIG. 5A is a conceptual diagram indicating a reference pixel p and a reference area pb in the reference image Ia; and FIG. 5B is a conceptual diagram in the case of calculating the cost value C while sequentially shifting (moving) the candidate for corresponding pixel which is present in the comparison image Ib and which corresponds to the reference pixel p illustrated in FIG. 5A. Herein, a corresponding pixel represents such a pixel in the comparison image Ib which is the most similar to the reference pixel p in the reference image Ia. Moreover, the cost value C represents the evaluation value (degree of coincidence) indicating the degree of similarity or the degree of dissimilarity of each pixel in the comparison image Ib. In the following explanation, it is assumed that, smaller the cost value C, the more it represents the evaluation value indicating the degree of dissimilarity between a pixel in the comparison image Ib and the reference pixel p.

As illustrated in FIG. 5A, based on the luminance value (the pixel value) of the reference pixel p(x, y) in the reference image Ia and based on the luminance value (the pixel value) of a candidate pixel q(x+d, y) representing a candidate for corresponding pixel present on an epipolar line EL in the comparison image Ib with respect to the reference pixel p(x, y), the cost value C(p, d) is calculated for the candidate pixel q(x+d, y) that is a candidate for corresponding pixel with respect to the reference pixel p(x, y). Herein, d represents the amount of shift (the amount of movement) between the reference pixel p and the candidate pixel q, and the shift amount d is shifted in the unit of pixels. That is, while sequentially shifting the candidate pixel q(x+d, y) one pixel at a time in a pre-specified range (for example, 0<d<25), the cost value C(p, d) representing the degree of dissimilarity between the candidate pixel q(x+d, y) and the reference pixel p(x, y) is calculated. Meanwhile, as the stereo matching operation meant for obtaining the corresponding pixel of the reference pixel p, the block matching operation is performed in the first embodiment. In the block matching operation, the degree of dissimilarity is obtained between the reference area pb, which represents a predetermined area centered around the reference pixel p in the reference image Ia, and a candidate area qb (having the same size as the reference area pb) centered around the candidate pixel q of the comparison image Ib. As the cost value C indicating the degree of dissimilarity between the reference area pb and the candidate area qb, either the sum of absolute difference (SAD) is used, or the sum of squared difference (SSD) is used, or the zero-mean-sum of squared difference (ZSSD) obtained by subtracting the average value of each block from the SSD value is used. Regarding such an evaluation value, higher the correlation (i.e., higher the degree of similarity), the smaller is the evaluation value thereby indicating the degree of dissimilarity.

Meanwhile, as described above, since the imaging units 10a and 10b are placed in a rectified manner, the reference image Ia and the comparison image Ib too are in the rectification relationship. Hence, corresponding to the reference pixel p in the reference image Ia, the corresponding pixel in the comparison image Ib happens to be present on the epipolar line EL indicated as a horizontal line when viewed in FIG. 5. Thus, in order to obtain the corresponding pixel in the comparison image Ib, a search can be performed for such pixels of the comparison image Ib which are present on the epipolar line EL.

The cost value C(p, d) that is calculated in the block matching operation is expressed as, for example, the graph illustrated in FIG. 6 in relationship to the shift amount d. In the example illustrated in FIG. 6, the cost value C is the smallest when the shift amount d=7 holds true. Hence, the disparity value dp=7 is derived.

Configuration and operations of functional blocks of object recognizing device

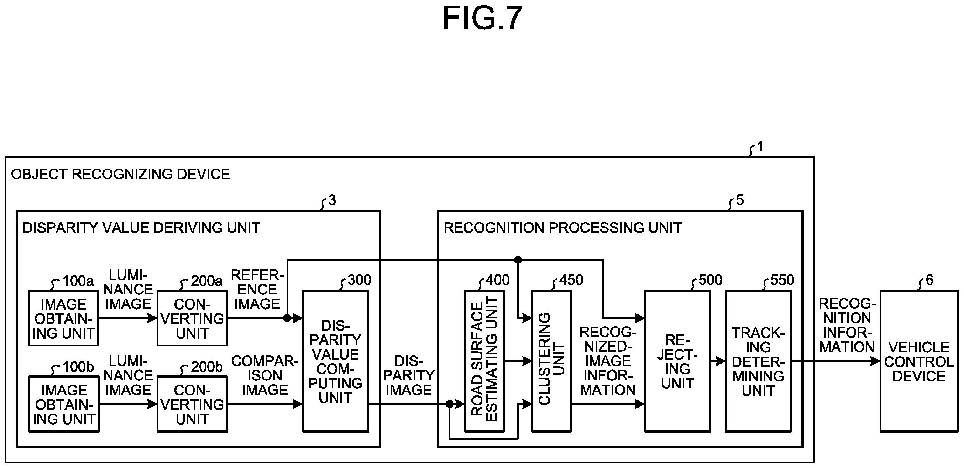

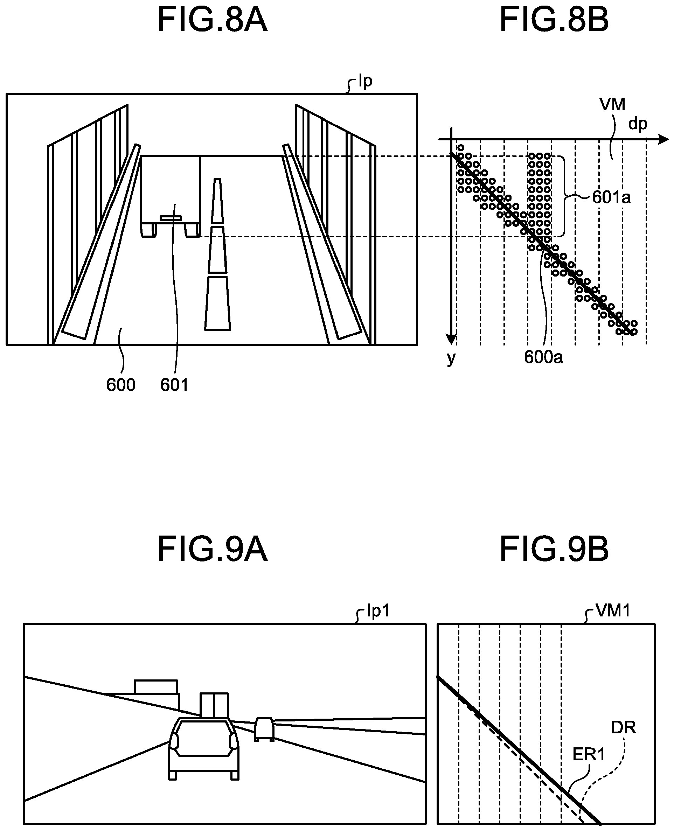

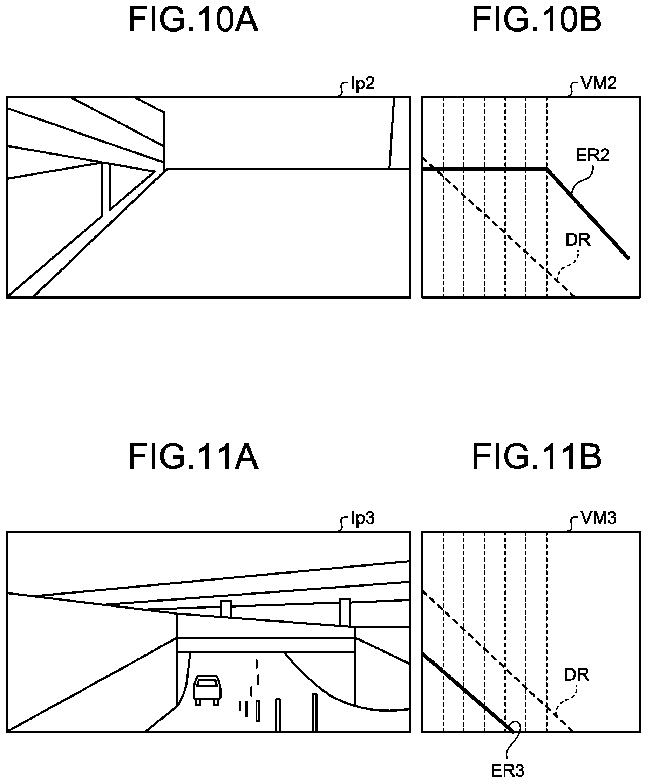

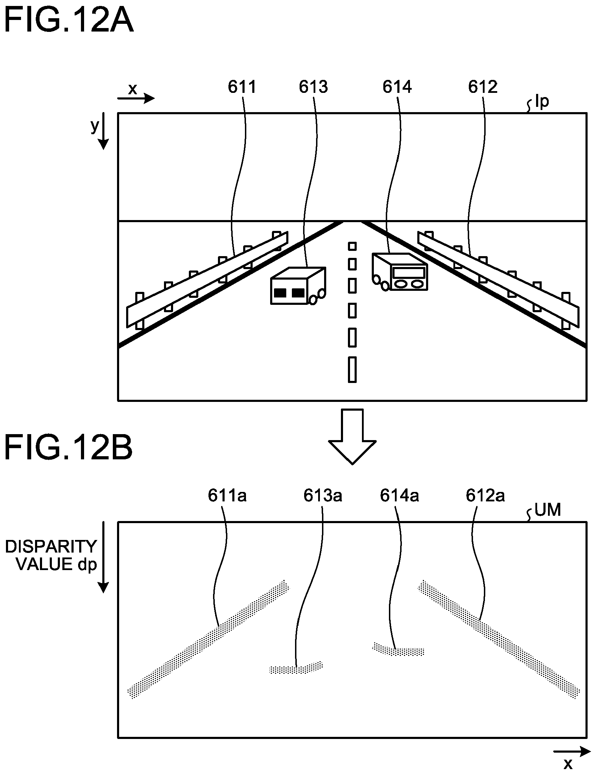

FIG. 7 is a diagram illustrating an exemplary functional block configuration of the object recognizing device according to the first embodiment. FIGS. 8A and 8B are diagrams illustrating an example of a V map generated from the disparity image. FIGS. 9A and 9B are diagrams illustrating an example of V map in the case of a flat road surface. FIGS. 10A and 10B are diagrams illustrating an example of V map in the case of reaching an uphill road. FIGS. 11A and 11B are diagrams illustrating an example of V map in the case of reaching a downhill road. FIGS. 12A and 12B are diagrams illustrating an example of a U map generated from the disparity image. Thus, explained with reference to FIGS. 7 to 12 is the configuration and the operations of the main part of the object recognizing device 1.

As described earlier with reference to FIG. 3 too, the object recognizing device 1 includes the disparity value deriving unit 3 and the recognition processing unit 5 as illustrated in FIG. 7. The disparity value deriving unit 3 includes an image obtaining unit 100a (a first imaging unit), an image obtaining unit 100b (a second imaging unit), converting units 200a and 200b, and a disparity value computing unit 300.

The image obtaining unit 100a is a functional unit that takes an image of an anterior photographic subject using the right-side camera, generates an analog image signal, and obtains a luminance image representing an image based on the image signal. The image obtaining unit 100a is implemented using the imaging unit 10a illustrated in FIG. 3.

The image obtaining unit 100b is a functional unit that takes an image of an anterior photographic subject using the left-side camera, generates an analog image signal, and obtains a luminance image representing an image based on the image signal. The image obtaining unit 100b is implemented using the imaging unit 10b illustrated in FIG. 3.

The converting unit 200a is a functional unit that removes noise from the image data of the luminance image obtained by the image obtaining unit 100a, and then converts the image data into digital image data and outputs it. The converting unit 200a is implemented using the signal converting unit 20a illustrated in FIG. 3.

The converting unit 200b is a functional unit that removes noise from the image data of the luminance image obtained by the image obtaining unit 100b, and then converts the image data into digital image data and outputs it. The converting unit 200b is implemented using the signal converting unit 20b illustrated in FIG. 3.

Of the image data of two luminance images (hereinafter, simply referred to as luminance images) output by the converting units 200a and 200b, the luminance image taken by the image obtaining unit 100a representing the left-side camera (the imaging unit 10a) is assumed to be the image data of the reference image Ia (hereinafter, simply referred to as the reference image Ia) (a first taken image), and the luminance image taken by the image obtaining unit 100b representing the right-side camera (the imaging unit 10b) is assumed to be the image data of the comparison image Ib (hereinafter, simply referred to as the comparison image Ib) (a second taken image). That is, based on the two luminance images output by the image obtaining units 100a and 100b, the converting units 200a and 200b output the reference image Ia and the comparison image Ib, respectively.

The disparity value computing unit 300 is a functional unit that derives the disparity value for each pixel of the reference image Ia based on the reference image Ia and the comparison image Ib received from the converting units 200a and 200b, respectively; and generates a disparity image in which a disparity value is associated with each pixel of the reference image Ia. Then, the disparity value computing unit 300 outputs the generated disparity image to the recognition processing unit 5.

As illustrated in FIG. 7, the recognition processing unit 5 includes a road surface estimating unit 400, a clustering unit 450, a rejecting unit 500, and a tracking determining unit 550.

The road surface estimating unit 400 is a functional unit that performs voting of each pixel (the disparity value) of the disparity image, which is received from the disparity value computing unit 300, with respect to the disparity point of the corresponding coordinates in the V map and generates a definitive V map; selects sample points from among the disparity points that are subjected to voting in the V map; and performs linear approximation (or curve approximation) with respect to the selected sample points for estimating the geometry of the road surface. In FIG. 8A is illustrated a disparity image Ip output by the disparity value computing unit 300, and in FIG. 8B is illustrated a V map VM generated from the disparity image Ip by the road surface estimating unit 400. As illustrated in FIG. 8B, the vertical axis of the V map VM corresponds to the y-coordinates of the disparity image Ip, and the horizontal axis corresponds to the disparity values dp. At the time of generating the V map VM, the disparity values present on the horizontal lines at predetermined y-coordinates in the disparity image Ip are voted onto the dp coordinates in the V map VM. Hence, in the pixel value at each coordinate of the V map VM, the frequency of the disparity value gets stored.

In the disparity image Ip illustrated in FIG. 8A, for example, a road surface 600 and a vehicle 601 is captured. The road surface 600 in the disparity image Ip corresponds to an estimated road surface 600a in the V map VM; while the vehicle 601 captured in the disparity image Ip corresponds to a vehicle portion 601a in the V map VM. As described below, the estimated road surface 600a represents the road surface geometry as estimated from the disparity points in the V map VM which correspond to the road surface 600.

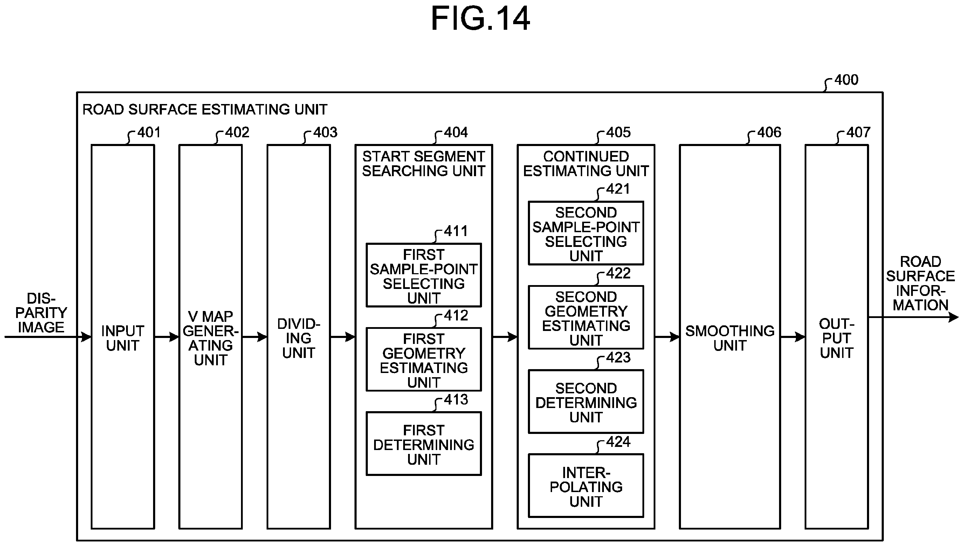

The road surface estimating unit 400 performs linear approximation with respect to the positions estimated to be the road surface in the generated V map VM. More particularly, the road surface estimating unit 400 selects, from among the disparity points voted with respect to the V map VM, sample points representing the representative points needed in estimating the geometry of the road surface; performs linear approximation with respect to the sample points using the least-square method; and estimates the geometry of the road surface so as to obtain the estimated road surface 600a. If the road surface is flat in nature, then approximation is possible with a single straight line. However, in the case of a road surface having varying road gradients, it becomes necessary to divide the V map VM into sections and then perform linear approximation with accuracy. Moreover, since the disparity values go on increasing as the distance to the concerned vehicle becomes shorter, the lower disparity values become greater as compared to the upper disparity values. Hence, as illustrated in FIG. 8B, the estimated road surface 600a on the V map VM becomes negatively sloped (i.e., has a rising diagonal slope toward the top left). At that time, the disparity representing the object is voted onto the range of y-coordinates in which the object is present (in the range between horizontal dashed lines illustrated in FIG. 8). Since the object is positioned higher than the road surface, the distribution in the V map VM extends in the vertical direction. That is because, in the case of the same object, the distance from the object recognizing device 1 is nearly constant, and the disparity values obtained for that object are mutually close values. Meanwhile, regarding the detailed configuration and operations of the road surface estimating unit 400, the explanation is given later with reference to FIGS. 14 to 17 and FIG. 19.

In the V map VM, the vehicle portion 601a that represents the mass positioned on the upper side of the estimated road surface 600a is equivalent to the vehicle 601 representing the object on the actual road surface (the road surface 600). When a U-Disparity map is generated by the clustering unit 450 (described later), information of only the portion on the upper side of the estimated road surface is used for noise removal.

Given below is the explanation of the types of the estimated road surface. That is, the explanation is given about the specific manner in which the disparity values of a road surface having various gradients are distributed in a V map. To start with, in FIG. 9A is illustrated a disparity image Ip1 in the case in which a vehicle is travelling on a flat road surface, and in FIG. 9B is illustrated a V map VM1 that is generated from the disparity image Ip1. As indicated in the V map VM1 illustrated in FIG. 9B, when the vehicle is travelling on a flat road surface, an estimated road surface ER1 nearly coincides with a default road surface DR that represents a virtual road surface assumed to be flat (hereinafter, called a "default road surface").

In FIG. 10A is illustrated a disparity image Ip2 in the case in which the vehicle reaches an uphill road, and in FIG. 10B is illustrated a V map VM2 that is generated from the disparity image Ip2. As indicated in the V map VM2 illustrated in FIG. 10B, an estimated road surface ER2 representing the estimated road surface of the uphill road is present on the upper side of the default road surface DR, and the start point of the estimated road surface ER2 too is present on the right-hand side of the default road surface DR. Meanwhile, while travelling on an uphill road, since the vehicle runs parallel to the road surface of the uphill road, the disparity of the road surface becomes identical to the disparity in the case of travelling on a flat road surface.

FIG. 11A illustrates a disparity image Ip3 in the case in which the vehicle reaches a downhill road, and in FIG. 11B is illustrated a V map VM3 that is generated from the disparity image Ip3. As indicated in the V map VM3 illustrated in FIG. 11B, an estimated road surface ER3 representing the estimated road surface of the downhill road is present on the lower side of the default road surface DR, and the start point of the estimated road surface ER3 too is present on the left-hand side of the default road surface DR. Meanwhile, while travelling on a downhill road, since the vehicle runs parallel to the road surface of the downhill road, the disparity of the road surface becomes identical to the disparity in the case of travelling on a flat road surface.

The typical types of the estimated road surface are described above. However, when the disparity values present on a single horizontal line in a disparity image are evaluated, if areas having different distances are included at the same time, then the disparity points disperse in the lateral direction (dp coordinates) in the V map. For example, when the area of the road surface for travelling and an area farther than the road surface for travelling are included in a single horizontal line in the disparity image, the disparity values in the farther area are smaller than the disparity values in the area of the road surface for travelling, and thus get voted as noise with respect to the V map. The disparity points that are voted as noise sometimes have an identical distribution profile in the V map to the distribution profile of the road surface. Thus, if the disparity points corresponding to noise are erroneously determined as the start position of the road surface, then the estimated road surface happens to be at a lower position in the V map than the actual road surface. Usually, in road surface estimation, the road surface is estimated from a predetermined position toward another position in the V map. For example, regarding the road surface in the vicinity, a large surface area gets captured in a disparity image, thereby resulting in an increase in the number and the frequency of the disparity points corresponding to that road surface in the V map. Hence, it can be assumed that the estimated road surface has a high degree of reliability. In that regard, it is possible to think of a method in which estimation is done in order from the nearer road surface to the further road surface. However, as described earlier with reference to FIGS. 9 to 11, the positions of distribution of the disparity points corresponding to the actual road surface are different in each scenario, thereby making it difficult to fix the start position in the road surface estimation operation. Moreover, if estimation of the load surface is sequentially performed from a short distance when disparity points corresponding to noise exist at a long distance, there is a possibility that the position where the noise exists is erroneously set as the start position. In that case, the road surface estimation cannot be started from the correct start position that should be at a shorter distance, and thus there is a risk that the estimation result becomes inappropriate. In this way, in the road surface estimation operation, even in various scenarios such as a scenario in which a road surface having different slopes is included in a disparity image or a scenario in which noise is included in a disparity image, the start position of the road surface needs to be detected with accuracy.

The clustering unit 450 is a functional unit that, based on the reference image (the luminance image) and the disparity image received from the disparity value deriving unit 3 and based on the V map and the information on the estimated road surface as output by the road surface estimating unit 400, detects the objects appearing in the disparity image. More particularly, firstly, the clustering unit 450 refers to the information positioned only on the upper side of the estimated road surface in the V map as estimated by the road surface estimating unit 400, that is, refers to the information corresponding to, for example, a left-side guardrail 611, a right-side guardrail 612, and vehicles 613 and 614 in the disparity image Ip illustrated in FIG. 12A; and generates a U map UM that represents a U-Disparity map illustrated in FIG. 12B (hereinafter, simply called a "U map") to be used in object recognition. A U-Disparity map is a two-dimensional histogram in which the x-axis of the disparity image Ip represents the horizontal axis and the disparity values dp (or the distances) of the disparity image Ip represent the vertical axis, and which indicates the frequency distribution of the disparity values dp. The left-side guardrail 611 in the disparity image Ip illustrated in FIG. 12A corresponds to a left-side guardrail 611a in the U map UM. Similarly, the right-side guardrail 612 corresponds to a right-side guardrail 612a, the vehicle 613 corresponds to a vehicle portion 613a, and the vehicle 614 corresponds to a vehicle portion 614a. Meanwhile, the clustering unit 450 can alternatively generate a Real U-Disparity map from the disparity image Ip. A Real U-Disparity map is a two-dimensional histogram in which the actual range in the direction from the imaging unit 10b (the left-side camera) toward the imaging unit 10a (the right-side camera) represents the horizontal axis, and the disparity values dp of the disparity image (or the distances in the depth direction converted from the disparity values dp) represent the vertical axis.

Meanwhile, the image that is input to the clustering unit 450 from the disparity value deriving unit 3 is not limited to the reference image Ia, and alternatively the comparison image Ib can be input.

From the generated U map, the clustering unit 450 can identify the positon in the x-axis direction and the width (xmin, xmax) of an object in the disparity image and the reference image Ia. Moreover, from height information (dmin, dmax) of the object in the generated U map, the clustering unit 450 can identify the actual depth. Furthermore, from the received V map, the clustering unit 450 can identify the position in the y-axis direction and the height (ymin="y-coordinate equivalent to the maximum height from the road surface having the maximum disparity value", ymax="y-coordinate indicating the height of the road surface as obtained from the maximum disparity value") of the object in the disparity image and the reference image Ia. Moreover, from the width (xmin, xmax) in the x-axis direction, the height (ymin, ymax) in the y-axis direction, and the disparity values dp corresponding to the width and the height of the object identified in the disparity image; the clustering unit 450 can identify the actual size of the object in the x-axis direction and the y-axis direction. In this way, the clustering unit 450 can refer to the V map and the U map; and can identify the position, the actual width, the actual height, and the actual depth of the object in the reference image Ia. Moreover, since the position of the object in the reference image Ia is identified, the position thereof in the disparity image also gets decided; and the clustering unit 450 can also identify the distance to the object.

Meanwhile, from the identified actual size (the width, the height, and the depth) of the object, the clustering unit 450 can identify the type of the object using (Table 1) given below. For example, if the object has the width of 1300 [mm], has the height of 1800 [mm], and has the depth of 2000 [mm]; then the object can be identified to be a "standard-sized vehicle". Meanwhile, the width, the height, and depth, and the type (object type) of the objects as held in a corresponding manner in (Table 1) can be stored as a table in the RAM 54.

Table 1

| Object type | Width | Height | Depth |
|---|---|---|---|
| Automobile, bicycle | <1100 | <2500 | >1000 |
| Pedestrian | <1100 | <2500 | <1000 |
| Compact vehicle | <1700 | <1700 | <10000 |
| Standard-sized vehicle | <1700 | <2500 | <10000 |
| Cargo truck | <3500 | <3500 | <15000 |
| Other | Vehicles not fitting in sizes mentioned above | | |
| Unit( mm) | | | |

Then, the clustering unit 450 outputs the information (for example, the coordinates indicating the position in the reference image Ia, and the size) of the image of the detected object (the recognized image) (hereinafter, simply called "recognized-image information").

The rejecting unit 500 is a functional unit that, based on the reference image Ia output from the disparity value deriving unit 3 and based on the recognized-image information output from the clustering unit 450, performs rejection determination for determining whether or not to reject the recognized image indicated by the recognized-image information. Herein, rejection implies an operation of excluding the concerned object in the subsequent operations (such as a tracking operation).

The tracking determining unit 550 is a functional unit that, based on the result of the rejection determination from the rejecting unit 500, determines whether or not tracking is to be performed with respect to the object included in the recognized image. For example, the tracking determining unit 550 determines that tracking is to be performed with respect to the object that was not rejected in the determination performed by the rejecting unit 500, and includes information indicating the intention to perform tracking in the recognized-image information of the object, and outputs the recognized-image information of the object as recognition information to the vehicle control device 6.

Meanwhile, the road surface estimating unit 400, the clustering unit 450, the rejecting unit 500, and the tracking determining unit 550 of the recognition processing unit 5 illustrated in FIG. 7 are implemented using the FPGA 51 illustrated in FIG. 3. Alternatively, instead of using the FPGA 51 that is a hardware circuit, some or all of the road surface estimating unit 400, the clustering unit 450, the rejecting unit 500, and the tracking determining unit 550 can be implemented as a result of execution of computer programs, which are stored in the ROM 53, by the CPU 52.

Herein, the "image processing device" according to the present invention may imply the road surface estimating unit 400 or may imply the recognition processing unit 5 including the road surface estimating unit 400.

The functional units of the disparity value deriving unit 3 and the recognition processing unit 5 illustrated in FIG. 7 are meant to illustrate the functions in a conceptual manner, and the configuration is not limited to the configuration illustrated in FIG. 7. Alternatively, for example, the functional units that are illustrated as independent functional units in the disparity value deriving unit 3 and the recognition processing unit 5 in FIG. 7 can be configured as a single functional unit. In contrast, the functions of a single functional unit in the disparity value deriving unit 3 and the recognition processing unit 5 illustrated in FIG. 7 can be divided into a plurality of functions, and the functional unit can be configured as a plurality of functional units.

Functional block configuration of disparity value computing unit

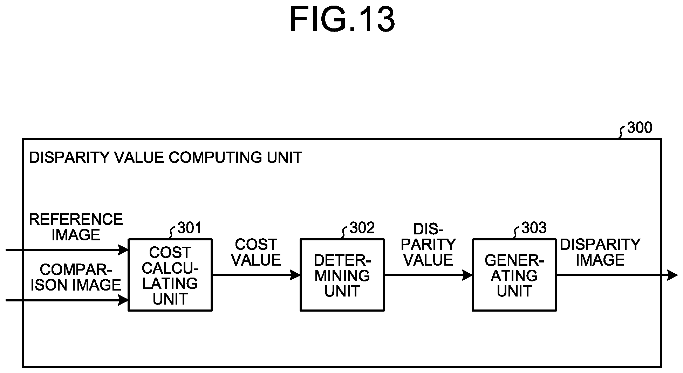

FIG. 13 is a diagram illustrating an exemplary functional block configuration of the disparity value computing unit of the object recognizing device according to the first embodiment. Thus, explained with reference to FIG. 13 is a specific configuration and operations of the functional blocks of the disparity value computing unit 300.

As illustrated in FIG. 13, the disparity value computing unit 300 includes a cost calculating unit 301, a determining unit 302, and a generating unit 303.

The cost calculating unit 301 is a functional unit that, based on the luminance value of the reference pixel $p(x, y)$ in the reference image Ia and based on the luminance value of each candidate pixel $q(x+d, y)$ that represents a candidate for corresponding pixel identified by shifting the pixels by the shift amount d from the pixel corresponding to the position of the reference pixel $p(x, y)$ on the epipolar line EL in the comparison image Ib on the basis of the reference pixel $p(x, y)$, calculates the cost value $C(p, d)$ of that candidate pixel $q(x+d, y)$. More particularly, the cost calculating unit 301 performs the block matching operation and calculates, as the cost value C, the degree of dissimilarity between the reference area pb, which represents a predetermined area centered around the reference pixel p in the reference image Ia, and the candidate area qb (having the same size as the reference area pb) centered around the candidate pixel q of the comparison image Ib.

The determining unit 302 is a functional unit that determines the shift amount d corresponding to the smallest of the cost values C, which are calculated by the cost calculating unit 301, to be the disparity value dp for such pixels in the reference image Ia for which the cost value C was calculated.

The generating unit 303 is a functional unit that, based on the disparity values dp determined by the determining unit 302, generates a disparity image in which the pixel value of each pixel in the reference image Ia is substituted with the disparity value dp corresponding to that pixel.

Meanwhile, the cost calculating unit 301, the determining unit 302, and the generating unit 303 illustrated in FIG. 13 are implemented using the FPGA 31 illustrated in FIG. 3. Alternatively, instead of using the FPGA 31 that is a hardware circuit, some or all of the cost calculating unit 301, the determining unit 302, and the generating unit 303 can be implemented as a result of execution of computer programs, which stored in the ROM 33, by the CPU 32.

Moreover, the cost calculating unit 301, the determining unit 302, and the generating unit 303 of the disparity value computing unit 300 illustrated in FIG. 13 are meant to illustrate the functions in a conceptual manner, and the configuration is not limited to the configuration illustrated in FIG. 13. Alternatively, for example, the functional units that are illustrated as independent functional units in the disparity value computing unit 300 in FIG. 13 can be configured as a single functional unit. In contrast, the functions of a single functional unit in the disparity value computing unit 300 illustrated in FIG. 13 can be divided into a plurality of functions, and the functional unit can be configured as a plurality of functional units.

Functional block configuration of road surface estimating unit

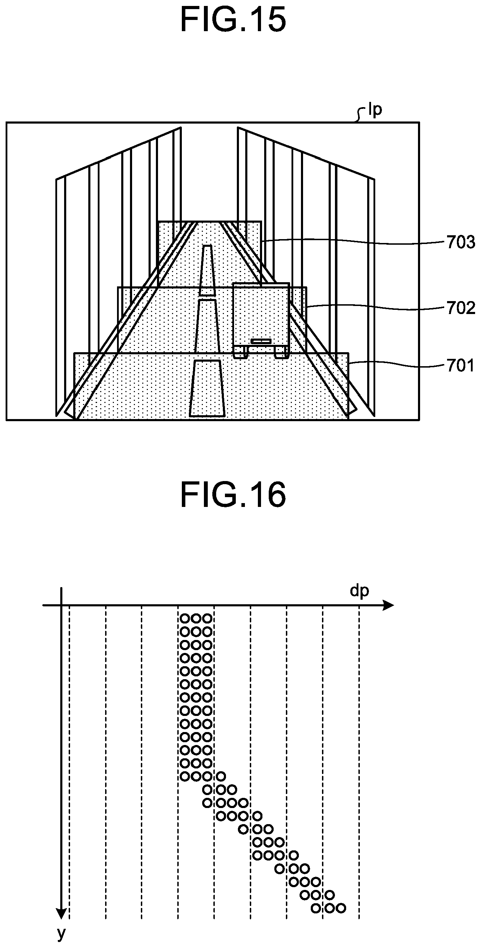

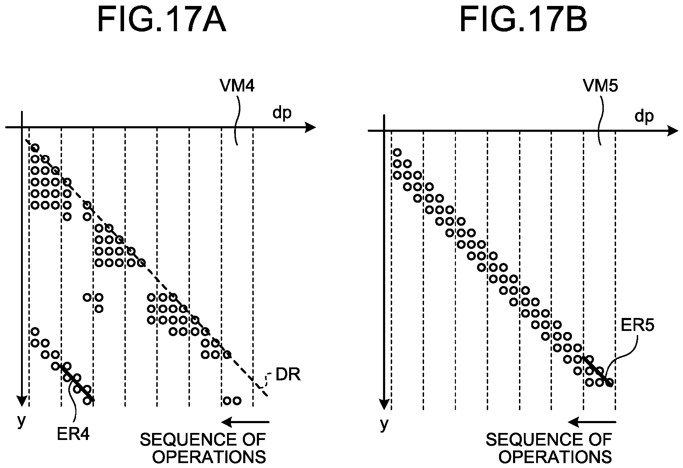

FIG. 14 is a diagram illustrating an exemplary functional block configuration of the road surface estimating unit of the object recognizing device according to the first embodiment. FIG. 15 is a diagram for explaining an operation of generating a V map. FIG. 16 is a diagram for explaining an operation of dividing a V map into segments. FIGS. 17A and 17B are diagrams for explaining a start segment search operation according to the first embodiment. Thus, explained with reference to FIGS. 14 to 17 is the specific configuration and operations of the functional blocks of the road surface estimating unit 400.

As illustrated in FIG. 14, the road surface estimating unit 400 includes an input unit 401, a V map generating unit 402, a dividing unit 403, a start segment searching unit 404, a continued estimating unit 405, a smoothing unit 406, and an output unit 407.

The input unit 401 is a functional unit that receives input of a disparity image from the disparity value computing unit 300.

The V map generating unit 402 is a functional unit that generates a V map by voting the disparity values of the disparity pixels of the disparity image, which is received by the input unit 401, onto the corresponding disparity points in the V map. During the generation of the V map by the V map generating unit 402, the y-coordinates of the disparity image and the y-coordinates of the V map are in a correspondence relationship, and the disparity value present on the horizontal line at a particular y-coordinate in the disparity image is voted onto any one disparity point present on the horizontal line of the corresponding y-coordinate in the V map. Thus, sometimes same disparity values are included in a single horizontal line in the disparity image, and hence the disparity point at arbitrary coordinates in the V map happens to store the frequency of a disparity value. In a particular horizontal line in the disparity image, the disparity values are similar to each other on the same road surface. Hence, in the V-map, the disparity points corresponding to the road surface get voted in a clustered manner.

Meanwhile, the V map generating unit 402 may vote the disparity values of all disparity pixels present in the disparity image. However, alternatively, as illustrated in the disparity image Ip in FIG. 15, predetermined areas (for example, voting areas 701 to 703 illustrated in FIG. 15) can be set and the disparity values of the disparity pixels included only in those areas can be voted. For example, it is conceivable to set a predetermined number of voting areas matching with the width of the road surface as illustrate in FIG. 15, utilizing the nature that the road surface becomes narrower towards the vanishing point as the distance becomes farther. As a result of restricting the voting areas in this manner, the noise originating from other than the road surface can be prevented from getting mixed into the V map.

Meanwhile, the disparity pixels on a single horizontal in the disparity image can be voted after being appropriately thinned. Moreover, the thinning can be performed not only with respect to the horizontal direction but also with respect to the vertical direction.

The dividing unit 403 is a functional unit that divides the V map, which is generated by the V map generating unit 402, into segments representing one or more partial areas along the dp coordinates (lateral coordinates). Then, the geometry of the road surface is estimated for each segment obtained by division by the dividing unit 403. As a result of obtaining segments by division, it becomes possible to estimate a road surface having a more complex geometry (for example, the geometry of a road surface having an uphill road or a downhill road midway of a flat road). Moreover, if the segments are obtained by more finely dividing the V map, the road map having a more complex geometry can be estimated. In FIG. 16 is illustrated an example of the V map that is divided into a plurality of segments.

In the example illustrated in FIG. 16, although the division is not done along the y-coordinates, segments can be obtained by division along the y-coordinates too. For example, in the V map, when the position of distribution of the disparity points corresponding to the road surface can be identified, the segments can be obtained by division along the y-coordinates so that it becomes possible to process a more restricted area as compared to the segments obtained by division along the dp direction only. That enables achieving enhancement in the noise constraining influence, specifically, can prevent the problem that disparity points corresponding to noise are erroneously selected and the road surface is estimated in a raised manner, and contributes in the shortening of the processing time of the road surface estimation operation. Meanwhile, in the first embodiment, the explanation is given under the assumption that the segments represent strip-like partial areas obtained by dividing the V map only along the dp direction as illustrated in FIG. 16.

The start segment searching unit 404 is a functional unit that performs a start segment search operation in which, from the segments obtained by division by the dividing unit 403, the segment including the start position of the road surface on which the vehicle 70 is travelling is searched, that is, the start segment representing such a segment of the road surface captured in the disparity image which includes the road surface portion nearest to the vehicle 70, in which the object recognizing device 1 is installed, is searched. The start segment retrieved in the start segment search operation indicates the segment including the road surface which serves as the reference at the time of performing road surface estimation in the V map. Usually, since road surface estimation is performed from the nearer road surface to the distant road surface, such a segment in the V map which includes the nearest road surface represents the start segment.

Given below is the detailed explanation of the start segment search operation. When the V map is divided into a predetermined number of segments, usually the road surface estimation is performed with respect to a predetermined segment and then the road surface estimation with respect to the next segment is performed based on the result of road surface estimation at the previous segment. That is the inevitable sequence of operations attributed to the fact that the surface is continuous. For example, the estimation is done in order from the nearer road surface to the distant road surface. Thus, in the road surface estimation operation, appropriate detection of the start position of the road surface is a critical factor in defining the accuracy of road surface estimation in the V map of a single frame. In FIGS. 17A and 17B is illustrated a V map indicating the distribution of two types of disparity points, and the result of the road surface estimation operation. As illustrated in FIG. 17, the V map is divided into seven segments (strip-like partial areas), and the segments are called a first segment to a seventh segment in order from the right-hand side while viewing FIG. 17. However, the number of segments obtained by division is not limited to seven, and the V map can be divided into an arbitrary number of segments.

In FIG. 17A is illustrated a V map VM4 that includes disparity points of a downhill road and includes other disparity points corresponding to objects. In the road surface estimation operation, the estimation is sequentially performed from a closer segment to a farther segment only one time, and thus processing of retuning to a segment at which the estimation has been performed once, and performing the estimation again is not usually performed. Firstly, for example, the explanation is given under the assumption that the start segment is fixed to the first segment. If the road surface estimation in the first segment ends up in failure, then the default road surface (the default road surface DR illustrated in FIG. 17A or a historical road surface is assigned as the estimated road surface in the first segment, and the road surface estimation of the next surface is performed with reference to that estimated road surface. Herein, a historical road surface indicates an estimated road surface that was estimated in the past in a frame positioned earlier by one or more frames, and can represent the road surface obtained by averaging the road surfaces estimated in a predetermined number of past frames. In the example illustrated in FIG. 17A, the definitive estimated road surface is close to the default road surface. In that case, even though the disparity points of the road surface of the downhill road are present on the lower side (in an estimated road surface ER4 in the sixth segment illustrated in FIG. 17A), road surface estimation cannot be performed using those disparity points. That is, in the case in which the start segment is fixed to the first segment, although road surface estimation can be performed correctly when the disparity points of the road surface are included in the first segment, it is not possible to correctly estimate the road surface when the disparity points of the road surface are included in some other segment as in the case of the downhill road.

Given below is the explanation of the start segment search operation according to the first embodiment in which the road surface estimation is performed till a predetermined segment; and, if no road surface is determined to be successful in the success-failure determination of the road surface estimation, then the road surface estimation is again performed by returning to the initial segment. Firstly, in the first round of road surface estimation, each segment is subjected to the road surface estimation according to a strict success-failure determination condition. Herein, the segment to be initially subjected to the segment search need not always be the first segment. If the strict success-failure determination performed in the first round indicates that the segment includes a successful distribution of disparity points, then the road surface estimation is adopted considering low risk of erroneous estimation because of a high degree of reliability as a road surface. However, if there is no successful segment under the strict success-failure determination condition, then the success-failure determination condition is relaxed as compare to the first round, and the second round of road surface estimation is performed from the initial segment.

For example, in the V map VM4 illustrated in FIG. 17A, assume that the disparity points present at the position of the default road surface DR represent the disparity points corresponding to the correct road surface. Moreover, assume that the first round of road surface estimation is performed in order from the first segment under a strict success-failure determination condition and that the road surface estimation is not successful till the sixth segment. Subsequently, in the second round of road surface estimation, the success-failure determination condition is relaxed and road surface estimation is again performed in order from the first segment. As a result, road surface estimation with respect to the second segment, which has comparatively less disparity dispersion, is determined to be successful and the second segment can be adopted as the estimated road surface. Thus, although the search is performed up to a distant segment (herein, the sixth segment), if the appropriate road surface is not found, then the start segment search in the first round is given up and is left to the second round onward. As a result of such operations, the search for the start segment is not forcedly done under a lax success-failure determination condition. Hence, the start segment can be determined, that is, the start position of the road surface can be detected in a robust state against the noise. In the example illustrated in FIG. 17A, since the second segment can be set as the start segment, the definitive estimated road surface becomes close to the default road surface DR, thereby becoming close to the actual road surface.

However, as a result of relaxing the success-failure determination condition in the second round of road surface estimation, even though there are dispersed disparity points due to noise, there is a possibility that success-failure determination of the estimated road surface is determined to be successful. That is, in an identical manner to the first round, if the start segment search operation is performed up to the sixth segment in the second round, then the road surface estimation performed in the sixth segment using the disparity points dispersed due to noise may be erroneously determined to be successful. In that regard, every time the operations are repeated (in every subsequent round); the scope of search can be narrowed. For example, it is possible to think of a method in which, in the first round of the search segment search operation, the search is performed up to the sixth segment and, in the second round of the search segment search operation, the search is performed up to the fifth segment. Of course, the scope of search can be kept same in the first round and the second round. Moreover, the start segment search operation can be repeated two or more rounds.

Meanwhile, in the case in which there is not much information on the disparity from the beginning, even though the success-failure determination condition is gradually relaxed and the start segment search operation is repeated several times, the probability of succeeding in road surface estimation is low. Thus, in every subsequent round, the scope of search can be narrowed and the search can be performed for a predetermined number of times, and if there is no success in finding the estimated road surface; the segment that was initially searched, that is, the first segment can be treated as the start segment, and the default road surface or a historical road surface can be set in that segment. In the subsequent segments too, if there is no success in finding the estimated road surface; then either the default road surface or a historical road surface can be assigned or the historical road surface of the first segment can be extended. That is, when there is not much information on the disparities, it is desirable to set such a road surface which is least likely to lead to erroneous control. Even if there is a road surface having various slopes, since a vehicle often travels on a flat road surface, in case the road surface cannot be estimated, it is often desirable to assign the default road surface. However, the road surface to be assigned is not limited to the default road surface, and any other road surface can be assigned. Moreover, if there is not much information on the disparity so that the road surface estimation cannot be performed, then instead of forcedly assigning a road surface, road surface estimation may not be performed in order to skip the operations in that frame.

FIG. 17B illustrates a V map VM5 that includes the disparity points of only the flat road surface. In that case, since the disparity in the first segment is accurately extracted, even if road surface estimation is performed under a strict success-failure determination condition, it can be ensured that the estimation is successful in the first segment. Then, the road surface estimation in the subsequent segments is performed with reference to an estimated road surface ER5. Consequently, the estimated road surface becomes close to the default road surface DR that is assumed to be a flat surface, and a correct road surface can be obtained. That is, it is illustrated that the road surface estimation can be performed in an identical sequence even when the road surface is flat.

In the start segment search operation described above, the road surface estimation is performed up to a predetermined segment and if there is a road surface midway through for which the success-failure determination is successful, the segment including that road surface serves as the start segment. That eliminates the need to perform operations in several rounds. On the other hand, if there is no road surface for which the success-failure determination is successful, then the road surface estimation is performed by relaxing the success-failure determination condition. That enhances the possibility of being able to determine one of the segments as the start segment. Hence, while holding down an increase in the processing time of the entire object recognizing device 1, the start position of the road surface can be detected in a robust state against the noise. As a result, the road surface can be detected with accuracy.

As illustrated in FIG. 14, the start segment searching unit 404 includes a first sample-point selecting unit 411 (a first selecting unit), a first geometry estimating unit 412 (a first estimating unit), and a first determining unit 413 (a determining unit).

The first sample-point selecting unit 411 is a functional unit that, in the start segment search operation, selects, from among the disparity points (an example of frequency points) voted onto the V map, at least one representative point (hereinafter, called "sample point") from the position of each dp coordinate in the target segment for processing (hereinafter, sometimes called "target segment"). Examples of the method of selecting the sample points include a method in which, for example, with respect to each dp coordinate, from among the disparity points present in the perpendicular (vertical) direction, the disparity points simply having the highest frequency (the most frequent points) are selected; and a method in which the dp coordinate of interest along with a plurality of right and left pixels of that dp coordinate is advanced from the downward direction toward the upward direction, and the most frequent points are selected therefrom after restricting the area including the disparity points of the road surface, so that the disparity points of the road surface are captured with more accuracy. Alternatively, the positions (coordinates) not having the disparity points can be selected as the sample points. For example, if there is no disparity point at the coordinates $(dp, y)$ of interest but if disparity points having a high frequency are concentrated surrounding the coordinates $(dp, y)$, then the disparity point at the coordinates $(dp, y)$ is likely to be missing only incidentally. Hence, that missing position can be selected as a sample point.

Meanwhile, the first sample-point selecting unit 411 can also remove inappropriate sample points from the selected sample points. With that, when the first geometry estimating unit 412 (described later) performs linear approximation with respect to the group of sample points, it becomes possible to prevent a situation in which the geometry of the estimated road surface becomes inappropriate due to the effect of the inappropriate points (outlier points). Examples of the method for removing the outlier points include a method in which, for example, linear approximation is performed once according to the least-square method using all sample points in the target segment, and then sample points separated by a predetermined distance from the approximated straight line are removed. In that case, after the outlier points are removed, the road surface that is again estimated according to the least-square method becomes the definitive estimated road surface.

The first geometry estimating unit 412 is a functional unit that, in the start segment search operation, estimates the geometry of the road surface (performs road surface estimation) from the group of sample points selected by the first sample-point selecting unit 411. Examples of the method for estimating the road surface include a method in which linear approximation is performed with respect to the group of sample points according to the least-square method, and a method in which the curve geometry is estimated using polynomial approximation. Alternatively, it is possible to implement a method in which the degree of reliability is calculated for use in the success-failure determination with respect to the result of the road surface estimation. For example, when linear approximation is performed using the least-square method, the coefficient of correlation can be used as the degree of reliability. In the following explanation, unless otherwise specified, road surface estimation is performed using linear approximation.

The first determining unit 413 is a functional unit that, in the start segment search operation, determines whether or not the road surface estimated by the first geometry estimating unit 412 is appropriate (successful). For example, if it is estimated that the sample points are diagonally aligned toward top right, then the first determining unit 413 determines that the estimated road surface is inappropriate (failure) as the road surface. Examples of the cause of such an issue include the fact that the selection of individual sample points is performed in an independent manner. Meanwhile, in the success-failure determination performed by the first determining unit 413, if the degree of reliability of the road surface can be quantified, then the determination can be performed using an arbitrary scale. For example, when the number of sample points is smaller than a predetermined value, since the estimated road surface is estimated in the state of not having much information about it, there is a possibility of an inappropriate slope. Thus, the predetermined value can be used as a threshold value for determining whether the estimation is a success or a failure. Moreover, the state of dispersion of the group of sample points can also be used in the success-failure determination. For example, at the time of estimating the geometry of the road surface, if the least-square method is implemented, then the coefficient of correlation can also be calculated at the time of calculating the approximated straight line. Hence, if the coefficient of correlation is equal to or smaller than a predetermined value, then it can be determined that the estimated road surface is estimated from a dispersed group of sample points, and the estimated road surface can be determined to be a failure. Furthermore, drawing on the quality that the road surface is continuous among the segments, it can be determined whether or not the angle with the road surface estimated in the previous segment of the target segment is within a predetermined range. If the angle is not within the predetermined range, then the estimated road surface can be determined to be a failure.

When the road surface estimated by the first geometry estimating unit 412 (a first estimated road surface) is determined to be appropriate, the first determining unit 413 determines the segment including that estimated road surface to be the start segment. However, for example, regardless of repeatedly performing the start segment search operation for a predetermined number of rounds, if the road surface estimated by the first geometry estimating unit 412 is determined to be inappropriate, then the first determining unit 413 supplements a substitute road surface for the estimated road surface. Examples of the method for supplementing a road surface include a method of assigning the default road surface or a historical road surface.

The continued estimating unit 405 is a functional unit that performs a continued estimation operation for estimating the road surface in the segments following the start segment determined by the start segment searching unit 404. That is, after the start segment has been determined as a result of the start segment search operation performed by the start segment searching unit 404, the continued estimating unit 405 performs road surface estimation in the usual unit of segments following the start segment. That is, the continued estimating unit 405 performs road surface estimation with respect to a single segment and, after the estimation is over, performs road surface estimation with respect to the next segment; and continues with such road surface estimation up to a predetermined segment (usually, the last segment obtained by division). When the continued estimating unit 405 finishes the continued estimation operation, the estimated road surface in a single frame reaches completion.

As illustrated in FIG. 14, the continued estimating unit 405 includes a second sample-point selecting unit 421 (a selecting unit), a second geometry estimating unit 422 (a second estimating unit, an estimating unit), a second determining unit 423, and an interpolating unit 424.

The second sample-point selecting unit 421 is a functional unit that, in the continued estimation operation, selects, from among the disparity points voted onto the V map, at least one sample point from the position of each dp coordinate in the target segment excluding the start segment. The method of selecting the sample point is identical to the selection method implemented by the first sample-point selecting unit 411. Moreover, in an identical manner to the first sample-point selecting unit 411, the second sample-point selecting unit 421 can remove inappropriate sample points from the selected sample points.

The second geometry estimating unit 422 is a functional unit that, in the continued estimation operation, estimates the geometry of the road surface (performs road surface estimation) from the sample point group selected by the second sample-point selecting unit 421. The method of road surface estimation is identical to the method implemented by the first geometry estimating unit 412.

The second determining unit 423 is a functional unit that, in the continued estimation operation, determines whether or not the road surface estimated by the second geometry estimating unit 422 (a second estimated road surface) is appropriate (successful). The determination method is identical to the method implemented by the first determining unit 413. When the road surface estimated by the second geometry estimating unit 422 is determined to be appropriate, the second determining unit 423 determines the estimated road surface to be the appropriate estimated road surface in the target segment. However, if the road surface estimated by the second geometry estimating unit 422 is determined to be inappropriate, then the second determining unit 423 supplements a substitute road surface for the estimated road surface. The method of supplementing a road surface is identical to the method implemented by the first determining unit 413. Meanwhile, the success-failure determination condition applied by the second determining unit 423 can be, for example, either the condition applied in the first round or a condition applied in the second round onward of the start segment search operation.

The interpolating unit 424 is a functional unit that, when the start segment has been determined by the start segment searching unit 404 and when segments nearer than the start segment are present, interpolates the road surface in the nearer segments. For example, if the third segment is set as the start segment as a result of the start segment search operation, the road surface in the first and second segments that are nearer than the third segment remains unestimated. Regarding the road surface in those segments, either the road surface in the start segment can be extended or the un-estimated state can be kept as it is because of the possibility of unavailability of information on the disparity in the first place. Alternatively, for example, the interpolating unit 424 can interpolate, as the road surface of the segments that are nearer than the start segment, a straight line joining a predetermined fixed point (for example, the position of the default road surface at the anterior position of the vehicle 70 (although dependent on the vehicle type, the position of the default road surface is at the vicinity of 1 [m] from the position where the camera is attached, for example)) to either the start point of the estimated road surface in the start segment (i.e., the right-side end of the estimated road surface in the start segment) or the end point of the estimated road surface in the start segment (i.e., the left-side end of the estimated road surface in the start segment). As a result of joining the fixed points, even though the estimated road surface in the start segment has an inappropriate slope, the ill effect thereof can be mitigated. For example, if the estimated road surface in the start segment of the n-th frame is the default road surface and if the start segment in the (n+1)-th frame (assumed to have the same segment position as the n-th frame) includes a road surface having a steep slope as compared to the default road surface, in case the segments nearer than the start segment are interpolated by extending the start segment, then the nearer road surfaces among the frames undergo severe fluctuation. However, if the interpolation is done by joining the fixed points, it becomes possible to hold down a sharp fluctuation among the frames.

The smoothing unit 406 is a functional unit that performs a smoothing operation with respect to the road surface estimated by the start segment searching unit 404 and the continued estimating unit 405. When a V map is divided into a plurality of segments, there is a possibility of discontinuity in the road surface estimated across the segments. In that regard, of the estimated road surface in two particular segments, correction is done in such a way that the coordinates of the start point of the road surface in one segment and the coordinates of the end point of the road surface in the other segment pass through a predetermined y-coordinate. That is, the slope and the intercept of the estimated road surface in the V map are varied so as to guarantee continuity in the estimated road surface across the segments. As far as the predetermined y-coordinate is concerned, for example, it is possible to use the y-coordinate of the midpoint of the y-coordinate of the start point of the estimated road surface in one segment and the y-coordinate of the end point of the estimated road surface in the other segment. As a result of performing such a smoothing operation, if the estimation result in a particular segment is not appropriate, there is a possibility that the estimation result gets corrected, thereby leading to the enhancement in the accuracy of road surface estimation.

The output unit 407 is a functional unit that outputs, to the clustering unit 450, information about the estimated road surface in the V map (road surface information) after the smoothing unit 406 has performed the smoothing operation. Meanwhile, if the information about the estimated road surface in the V map is not particularly needed in the subsequent stage (the clustering unit 450), the road surface information can be stored in, for example, the RAM 54 illustrated in FIG. 3. Alternatively, in that case, the smoothing unit 406 and the output unit 407 may be omitted.

Meanwhile, the input unit 401, the V map generating unit 402, the dividing unit 403, the start segment searching unit 404, the continued estimating unit 405, the smoothing unit 406, and the output unit 407 that are illustrated in FIG. 14 are implemented using the FPGA 51 illustrated in FIG. 3. Alternatively, instead of using the FPGA 51 that is a hardware circuit, some or all of the input unit 401, the V map generating unit 402, the dividing unit 403, the start segment searching unit 404, the continued estimating unit 405, the smoothing unit 406, and the output unit 407 can be implemented as a result of execution of computer programs, which are stored in the ROM 53, by the CPU 52.

Moreover, the input unit 401, the V map generating unit 402, the dividing unit 403, the start segment searching unit 404, the continued estimating unit 405, the smoothing unit 406, and the output unit 407 of the road surface estimating unit 400 illustrated in FIG. 14 are meant to illustrate the functions in a conceptual manner, and the configuration is not limited to the configuration illustrated in FIG. 14. Alternatively, for example, the functional units that are illustrated as independent functional units in the road surface estimating unit 400 in FIG. 14 can be configured as a single functional unit. In contrast, the functions of a single functional unit in the road surface estimating unit 400 illustrated in FIG. 14 can be divided into a plurality of functions, and the functional unit can be configured as a plurality of functional units.

Operations performed in object recognizing device

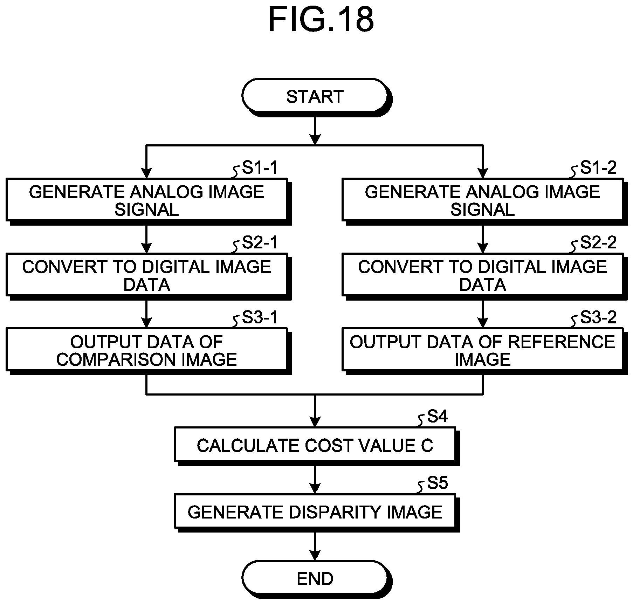

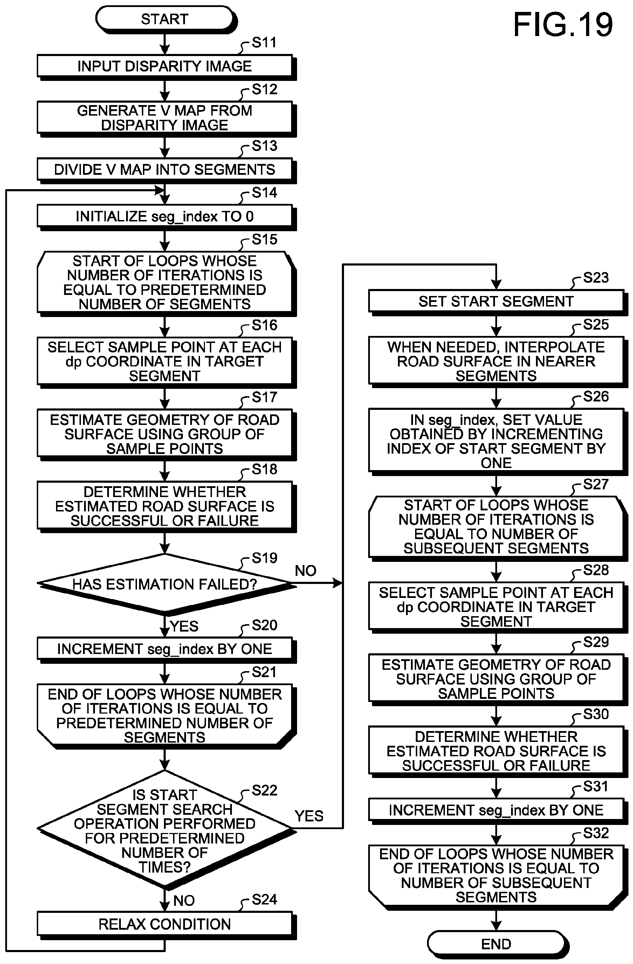

Explained below with reference to FIGS. 18 and 19 are specific operations performed in the object recognizing device 1.

Block matching operation performed by disparity value deriving unit

FIG. 18 is a flowchart for explaining an example of the block matching operation performed by the disparity value deriving unit according to the first embodiment. Thus, explained below with reference to FIG. 18 is a flow of operations in the block matching operation performed by the disparity value deriving unit 3 of the object recognizing device 1.

Step S1-1

The image obtaining unit 100b of the disparity value deriving unit 3 takes an image of an anterior photographic subject using the left-side camera (the imaging unit 10b), generates an analog image signal, and obtains a luminance image representing an image based on the image signal. With that, the image signal to be subjected to image processing at a subsequent stage is obtained. Then, the system control proceeds to Step S2-1.

Step S1-2

The image obtaining unit 100a of the disparity value deriving unit 3 takes an image of an anterior photographic subject using the right-side camera (the imaging unit 10a), generates an analog image signal, and obtains a luminance images representing an image based on the image signal. With that, the image signal to be subjected to image processing at a subsequent stage is obtained. Then, the system control proceeds to Step S2-2.

Step S2-1

The converting unit 200b of the disparity value deriving unit 3 removes noise from the analog image signal obtained as a result of imaging performed by the imaging unit 10b, and then converts the analog image signal into digital image data. As a result of converting the image signal into digital image data, it becomes possible to perform pixel-by-pixel image processing with respect to the image based on the image data. Then, the system control proceeds to Step S3-1.

Step S2-2

The converting unit 200a of the disparity value deriving unit 3 removes noise from the analog image signal obtained as a result of imaging performed by the imaging unit 10a, and then converts the analog image signal into digital image data. As a result of converting the image signal into digital image data, it becomes possible to perform pixel-by-pixel image processing with respect to the image based on the image data. Then, the system control proceeds to Step S3-2.

Step S3-1

The converting unit 200b outputs the image, which is based on the digital image data obtained by conversion at Step S2-1, as the comparison image Ib to be used in the block matching operation. With that, the image to be compared for the purpose of obtaining the disparity value in the block matching operation is obtained. Then, the system control proceeds to Step S4.

Step S3-2

The converting unit 200a outputs the image, which is based on the digital image data obtained by conversion at Step S2-2, as the reference image Ia to be used in the block matching operation. With that, the image to be used as the reference for obtaining the disparity value in the block matching operation is obtained. Then, the system control proceeds to Step S4.

Step S4

Based on the luminance value of the reference pixel p(x, y) in the reference image Ia and based on the luminance value of each candidate pixel q(x+d, y) that represents a candidate for corresponding pixel identified by shifting the pixels by the shift amount d from the pixel corresponding to the position of the reference pixel p(x, y) on the epipolar line EL in the comparison image Ib on the basis of the reference pixel p(x, y), the cost calculating unit 301 of the disparity value computing unit 300 of the disparity value deriving unit 3 calculates the cost value C(p, d) of that candidate pixel q(x+d, y). More particularly, the cost calculating unit 301 performs the block matching operation and calculates, as the cost value C, the degree of dissimilarity between the reference area pb, which represents a predetermined area centered around the reference pixel p in the reference image Ia, and the candidate area qb (having the same size as the reference area pb) centered around the candidate pixel q in the comparison image Ib. Then, the system control proceeds to Step S5.

Step S5

The determining unit 302 of the disparity value computing unit 300 of the disparity value deriving unit 3 determines the shift amount d corresponding to the smallest of the cost values C, which are calculated by the cost calculating unit 301, to be the disparity value dp for such pixels in the reference image Ia for which the cost value C was calculated. Then, based on the disparity value dp determined by the determining unit 302, the generating unit 303 of the disparity value computing unit 300 of the disparity value deriving unit 3 generates a disparity image in which the luminance value of each pixel in the reference image Ia is expressed using the disparity value dp corresponding to that pixel. Subsequently, the generating unit 303 outputs the generated disparity image to the recognition processing unit 5.

Meanwhile, although the block matching operation is explained as an example of the stereo matching operation, that is not the only possible case. Alternatively, it is possible to perform operations using the semi-global matching (SGM) method.

Road surface estimation operation

FIG. 19 is a flowchart for explaining an example of the road surface estimation operation performed by the road surface estimating unit according to the first embodiment. Thus, explained with reference to FIG. 19 is a flow of operations in the road surface estimation operation performed by the road surface estimating unit 400 of the recognition processing unit 5.

Step S11

The input unit 401 receives input of a disparity image from the disparity value computing unit 300. Meanwhile, it is alternatively possible to directly receive input of a disparity image generated in the disparity value deriving unit 3 constituting a stereo camera. The information on the disparity image can be stored in advance either in a recording medium such as a compact disk (CD), a digital versatile disc (DVD), or a hard disk drive (HDD); or in a network storage. Then, as may be necessary, the disparity image can be read from the storage destination and used. Meanwhile, either the input of only a single disparity image can be received, or the frame-by-frame input of video data can be sequentially received. Subsequently, the system control proceeds to Step S12.

Step S12

The V map generating unit 402 generates a V map by voting the disparity values of the disparity pixels of the disparity image, which is received by the input unit 401, onto the corresponding disparity points in the V map. Then, the system control proceeds to Step S13.

Step S13

The dividing unit 403 divides the V map, which is generated by the V map generating unit 402, into one or more segments, which represent partial areas, along the dp coordinates (lateral coordinates). Then, the geometry of the road surface is estimated for each segment that is obtained by division by the dividing unit 403. Meanwhile, the segments obtained by division need not have the same horizontal width (the width in the dp direction). For example, when the distant road surface is to be estimated more finely, farther the distance (smaller the dp value in the V map), the greater can be the reduction in the width of the segments. Then, the system control proceeds to Step S14.

Step S14

In order to start the start segment search operation, when seg_index represents the currently-processed index, the start segment searching unit 404 initializes that variable to 0. The range of values of seg_index is from 0 to ((number of divisions)-1). In the following explanation, the index has the value of ((segment number)-1). For example, when the dividing unit 403 divides the V map into seven segments, then those segments are referred to as the first segment to the seventh segment, and have the corresponding indexes set to 0 to 6, respectively. Then, the system control proceeds to Step S15.

Step S15

The start segment searching unit 404 starts the start segment search operation. In the start segment search operation, the start segment searching unit 404 repeatedly performs road surface estimation and success-failure determination for a number of times equal to a predetermined number of segments (Steps S16 to S20). For example, when the predetermined number of segments is five, then the start segment searching unit 404 treats the first to fifth segments as the targets for processing and searches for the start segment among those segments. Subsequently, the system control proceeds to Step S16.

Step S16

In the start segment search operation, the first sample-point selecting unit 411 of the start segment searching unit 404 selects, from among the disparity points voted onto the V map, at least one sample point from the position of each dp coordinate in the target segment for processing. At that time, the number of sample points selected at each dp coordinate is not limited to one point, and a plurality of sample points may get selected. Moreover, since there are some dp coordinates in the V map at which the disparity points are not present in the perpendicular direction, it is possible to have dp coordinates at which sample points are not selected. Then, the system control proceeds to Step S17.

Step S17

In the start segment search operation, the first geometry estimating unit 412 of the start segment searching unit 404 estimates the geometry of the road surface (performs road surface estimation) from the group of sample points selected by the first sample-point selecting unit 411. Then, the system control proceeds to Step S18.

Step S18

In the start segment search operation, the first determining unit 413 of the start segment searching unit 404 determines whether or not the road surface estimated by the first geometry estimating unit 412 is appropriate (successful). Then, the system control proceeds to Step S19.

Step S19

If the first determining unit 413 determines that the estimated road surface is inappropriate (failure) (Yes at Step S19), then the system control proceeds to Step S20. On the other hand, if the estimated road surface is determined to be appropriate (successful) (No at Step S19), then the system control proceeds to Step S23. When the estimated road surface is determined to be appropriate, the first determining unit 413 determines the segment including that estimated road surface to be the start segment.

Step S20

If the first determining unit 413 determines that the estimated road surface is not appropriate; then, with the aim of further searching for the start segment, the start segment searching unit 404 increments the index seg_index by one so as to treat the next segment as the target segment. Then, the system control proceeds to Step S21.

Step S21

The start segment searching unit 404 determines whether or not the operations from Step S16 to S20 have been performed for the number of times equal to the predetermined number of segments. When the operations have been performed for all of the predetermined number of segments, the system control proceeds to Step S22. However, if the operations are not yet performed for all of the predetermined number of segments, then the system control returns to Step S16.

Step S22

The start segment searching unit 404 determines whether or not the start segment search operation (Steps S14 to S21) has been performed for a predetermined number of times. When the start segment search operation has been performed for a predetermined number of times (Yes at Step S22), the system control proceeds to Step S23. However, if the start segment search operation is not yet performed for a predetermined number of times (No at Step S22), then the system control proceeds to Step S24.

Step S23

The start segment searching unit 404 sets, as the start segment, the segment including the estimated road surface determined to be appropriate by the first determining unit 413 at Step S19. Moreover, even when it is determined at Step S22 that the start segment search operation has been performed for a predetermined number of times, if no estimated road surface is determined to be successful, then the start segment searching unit 404 (a setting unit) sets a predetermined segment (for example, the first segment) as the start segment, and sets the default road surface or a historical road surface in that start segment. Then, the system control proceeds to Step S25.

Step S24

At the time of performing the start segment search operation for the second round onward, the start segment searching unit 404 relaxes the success-failure determination condition that was applied to the estimated road surfaces in the first round of the start segment search operation. Examples of the method for relaxing the success-failure determination condition include relaxing various parameters used at the time of performing the success-failure determination, and reducing the number of conditions to be used at the time of performing the success-failure determination. For example, as a specific method for reducing the number of conditions to be used at the time of performing the success-failure determination, the three conditions including the number of sample points, the dispersion, and the estimated road surface are reduced to any two conditions. In any case, as long as the success-failure determination condition is such that the estimated road surface can be more easily determined to be appropriate in the start segment search operation performed for the second time onward than in the start segment search operation performed for the first time, it serves the purpose. Subsequently, the system control returns to Step S14.

Step S25

The interpolating unit 424 implements the method described earlier and interpolates the road surface of the nearer segments as needed, that is, when there are nearer segments than the start segment that is set. Then, the system control proceeds to Step S26.

Step S26

The continued estimating unit 405 sets the index seg_index to the value obtained by incrementing the index of the start segment by one, so as to start the continued estimation operation for estimating the road surface in the segments subsequent to the start segment that is set at Step S23. Herein, the value obtained by incrementing the currently-used index seg_index by one is not used as a new index seg_index because, as described earlier at Step S23, the estimated road surface determined to be appropriate by the first determining unit 413 is not necessarily set as the start segment. Then, the system control proceeds to Step S27.

Step S27

The continued estimating unit 405 starts the continued estimation operation. In the continued estimation operation, the continued estimating unit 405 repeatedly performs road surface estimation and success-failure determination (Steps S28 to S31) for a number of times equal to the number of remaining segments subsequent to the start segment from among the predetermined number of segments set at Step S15. For example, if the third segment is set as the start segment and if the search is to be performed up to the seventh segment, then the fourth to seventh segments representing the remaining segments represent the targets for processing. Thus, the continued estimating unit 405 performs the continued estimation operation with respect to those remaining segments. Then, the system control proceeds to Step S28.

Step S28

In the continued estimation operation, the second sample-point selecting unit 421 of the continued estimating unit 405 selects, from among the disparity points voted onto the V map, at least one sample point from the position of each dp coordinate in the target segment excluding the start segment. At that time, the number of sample points selected at each dp coordinate is not limited to one point, and a plurality of sample points may get selected. Moreover, since there are some dp coordinates in the V map at which the disparity points are not present in the perpendicular direction, it is possible to have dp coordinates at which sample points are not selected. Then, the system control proceeds to Step S29.

Step S29

In the continued estimation operation, the second geometry estimating unit 422 of the continued estimating unit 405 estimates the geometry of the road surface (performs road surface estimation) from the group of sample points selected by the second sample-point selecting unit 421. Then, the system control proceeds to Step S30.

Step S30

In the continued estimation operation, the second determining unit 423 of the continued estimating unit 405 determines whether or not the road surface estimated by the second geometry estimating unit 422 is appropriate (successful). If the estimated road surface is inappropriate (failure), then the second determining unit 423 supplements a substitute road surface for that estimated road surface. Examples of the method for supplementing a road surface include a method of assigning the default road surface or a historical road surface. Then, the system control proceeds to Step S31.

Step S31

In order to set the next segment as the target segment, the continued estimating unit 405 increments the index seg_index by one. Then, the system control proceeds to Step S32.

Step S32

The continued estimating unit 405 determines whether or not the operations from Steps S28 to S31 have been performed for a number of times equal to the number of remaining segments subsequent to the start segment. When the operations have been performed for all of the remaining segments, the smoothing unit 406 performs a smoothing operation with respect to the road surface estimated by the start segment searching unit 404 and the continued estimating unit 405. Subsequently, the output unit 407 outputs, to the clustering unit 450, information about the estimated road surface in the V map (road surface information) after the smoothing unit 406 has performed the smoothing operation. It marks the end of the road surface estimation operation. On the other hand, if the operations have not been performed for all of the remaining segments, then the system control returns to Step S28. Meanwhile, in the smoothing operation performed by the smoothing unit 406, after the estimated road surface in the segment of interest is obtained, smoothing can be sequentially performed with respect to that estimated road surface and with respect to the estimated road surface in the previous segment of the segment of interest.

As a result of performing the operations from Steps S11 to S32, the road surface estimating unit 400 performs the road surface estimation operation.

Meanwhile, in the flowchart illustrated in FIG. 19, the operations performed by the start segment searching unit 404 from Steps S16 to S19 and the operations performed by the continued estimating unit 405 from Steps S28 to S30 can be serially executed on a segment-by-segment basis, or the operation at each step can be performed in parallel for all segments.

As described above, if the start segment is not found in the first round of the road surface estimation operation performed by the start segment searching unit 404, the success-failure determination condition applied by the first determining unit 413 is relaxed and the road surface estimation operation is performed again. Hence, the search for the start segment is not forcedly done under a lax success-failure determination condition. Hence, the start segment can be determined, that is, the start position of the road surface can be detected in a robust state against the noise. As a result, the road surface can be detected with accuracy.

Moreover, in the start segment search operation, road surface estimation is performed up to a predetermined segment and if there is a road surface midway for which the success-failure determination is successful, the segment including that road surface serves as the start segment. That eliminates the need to perform operations in several rounds. On the other hand, if there is no road surface for which the success-failure determination is successful, road surface estimation is performed by relaxing the success-failure determination condition. That enhances the possibility of being able to determine one of the segments as the start segment. Hence, while holding down an increase in the processing time of the entire object recognizing device 1, the start position of the road surface can be detected in a robust state against the noise. As a result, the road surface can be detected with accuracy.

Modification example of first embodiment

Regarding an object recognizing device according to a modification example of the first embodiment, the explanation is given with the focus on the differences with the object recognizing device 1 according to the first embodiment. In the first embodiment, the explanation is given under the assumption that the method for road surface estimation in the start segment search operation is identical to the method for road surface estimation in the continued estimation operation. In the modification example, the explanation is given about the operations of a different method for road surface estimation in the start segment search operation than the method for road surface estimation in the continued estimation operation.

The object recognizing device according to the modification example has an identical hardware configuration and an identical functional block configuration to that described in the first embodiment. Moreover, the block matching operation performed by the disparity value deriving unit 3 according to the modification example is also identical to the operation described in the first embodiment.

Functional block configuration and operations of road surface estimating unit

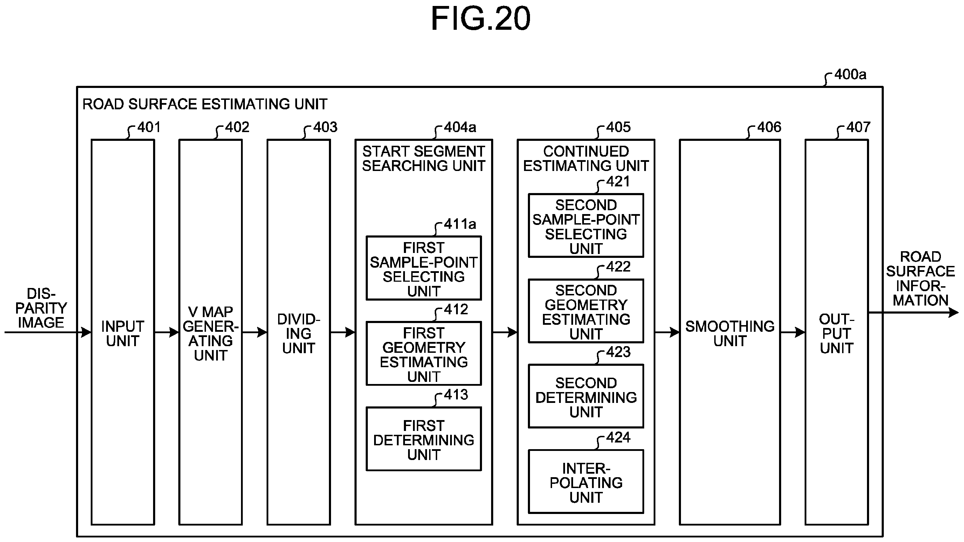

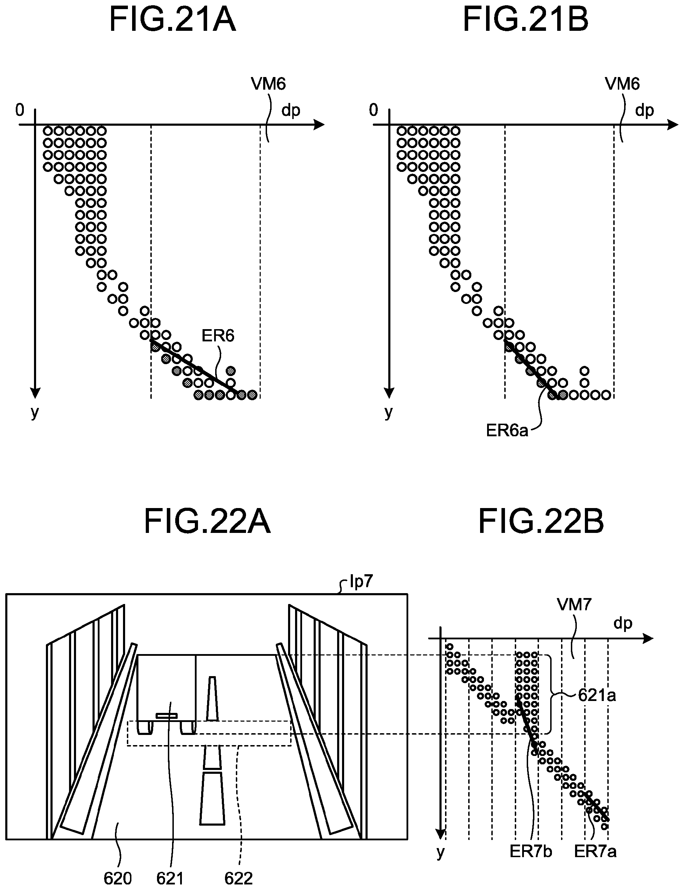

FIG. 20 is a diagram illustrating an exemplary functional block configuration of a road surface estimating unit of the object recognizing device according to the modification example of the first embodiment. FIGS. 21A and 21B are diagrams for explaining the start segment search operation according to the modification example of the first embodiment. Thus, explained with reference to FIGS. 20 and 21 is a specific functional block configuration and operations of a road surface estimating unit 400a.

As illustrated in FIG. 20, the road surface estimating unit 400a in the object recognizing device according to the modification example includes the input unit 401, the V map generating unit 402, the dividing unit 403, a start segment searching unit 404a, the continued estimating unit 405, the smoothing unit 406, and the output unit 407. Herein, the input unit 401, the V map generating unit 402, the dividing unit 403, the continued estimating unit 405, the smoothing unit 406, and the output unit 407 have identical functions to the functions described in the first embodiment.

The start segment searching unit 404a is a functional unit that performs a start segment search operation in which, from the segments obtained by division by the dividing unit 403, the start segment including the start position of the road surface on which the vehicle 70 is travelling is searched. In the start segment search operation performed by the start segment searching unit 404a, in consideration of the characteristics peculiar to the start segment, a restriction is applied on the sample points to be selected from the disparity points included in a segment. Regarding the specific manner of selecting the sample points, the explanation is given later during the explanation of the operations performed by a first sample-point selecting unit 411a.

As illustrated in FIG. 20, the start segment searching unit 404a includes the first sample-point selecting unit 411a, the first geometry estimating unit 412, and the first determining unit 413. Herein, the first geometry estimating unit 412 and the first determining unit 413 have identical functions to the functions described in the first embodiment.

The first sample-point selecting unit 411a is a functional unit that, in the start segment search operation, selects, from among the disparity points voted onto the V map, at least one sample point from the position of each dp coordinate in the target segment.

Usually, in the start segment that includes the start position of the road surface, as illustrated in FIG. 21A, the disparity points tend to get aligned in a clinging manner to the lower side of a V map VM6. In that state, if it is attempted to select a sample point from the disparity points at each dp coordinate, as illustrated in FIG. 21A, the laterally-aligned disparity points present at the lower side of the V map VM6 may get selected as sample points. Moreover, if linear approximation according to the least-square method is performed with respect to the group of sample points, then the estimated road surface (an estimated road surface ER6) gets affected by the group of laterally-aligned sample points and happens to have a gentler slope as compared to the actual road surface. In that regard, in the present embodiment, in the operation of selecting sample points as performed by the first sample-point selecting unit 411a in the start segment search operation, a restriction is applied to the number of laterally-aligned sample points. For example, an upper limit is set to the number of sample points positioned at the same y-coordinate, and the first sample-point selecting unit 411a ensures that the number of selected sample points does not exceed the upper limit.

In FIG. 21B is illustrated an example in which sample points are selected upon setting an upper limit to the number of laterally-aligned sample points. In the example illustrated in FIG. 21B, the number of laterally-aligned sample points is set to have the upper limit of "2", and the sample points are accordingly selected by the first sample-point selecting unit 411a. In this way, in the operation of selecting the sample points during the start segment search operation, the number of laterally-aligned sample points (the sample points aligned in the dp direction) are held down to the bare minimum number (two in the example illustrated in FIG. 21B), thereby enabling estimation of a road surface having the appropriate slope (an estimated road surface ER6a). Moreover, in the operation of selecting the sample points as performed by the first sample-point selecting unit 411a, regarding the method for selecting the sample points within the upper limit, the following method is implemented, for example. Firstly, the sequence of selecting the sample points is set from the left-side end toward the right-side end of the target segment, and the sample points selected at a particular dp coordinate are stored along with the y-coordinates of those sample points. Then, in the case of evaluating the candidate sample points at the next dp coordinate, if the y-coordinates of those candidate sample points are already exceeding the upper limit, then those candidate sample points are not selected as the sample points. Such a method can be considered as an exemplary selection method. Meanwhile, for example, the upper limit of the number of laterally-aligned sample points can be set based on a variance value that is conceivable as a disparity point of the road surface, or can be arbitrarily set to a value that does lead to inappropriate estimation.

Meanwhile, in the start segment search operation, the sample point selection operation performed by the first sample-point selecting unit 411a according to the method described above can be performed with respect to predetermined segments. For example, if it is known that, farther a segment, the lower is the probability of the disparity points getting laterally aligned at the lower side of the V map; then the sample point selection operation during the start segment search operation can be performed only with respect to predetermined segments.

Second embodiment

Regarding an object recognizing device according to a second embodiment, the explanation is given with the focus on the differences with the object recognizing device 1 according to the first embodiment. In the first embodiment, the explanation is given for an example in which, in the start segment search operation, as soon as a segment that includes the road surface satisfying a predetermined success-failure determination condition is found, that segment is set as the start segment. In the second embodiment, the explanation is given for an example in which, if there is a plurality of segments of the road surface that is determined to be successful in success-failure determination, the segment considered to be the most appropriate is set as the start segment.

The object recognizing device according to the second embodiment has an identical hardware configuration and an identical functional block configuration to that described in the first embodiment. Moreover, the block matching operation performed by the disparity value deriving unit 3 according to the second embodiment is also identical to the operation described in the first embodiment.

Functional block configuration of road surface estimating unit

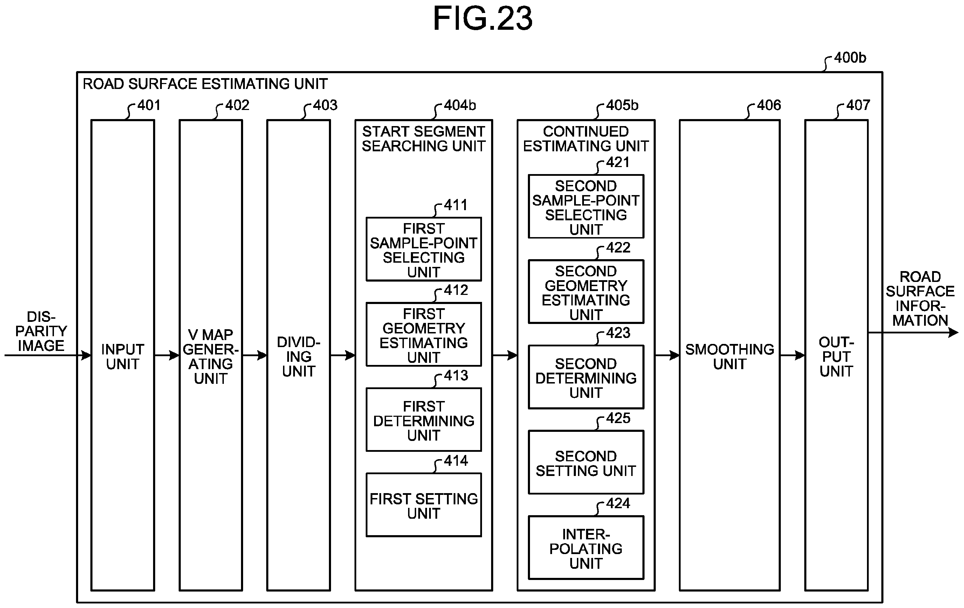

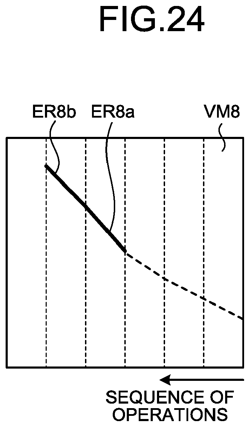

FIGS. 22A and 22B are diagrams illustrating an example in which the estimated road surface in a V map is affected by the disparity points of an object. FIG. 23 is a diagram illustrating an exemplary functional block configuration of a road surface estimating unit of the object recognizing device according to the second embodiment. FIG. 24 is a diagram for explaining an operation for setting a nearer segment as the start segment. Thus, explained with reference to FIGS. 22 to 24 is a specific functional block configuration and operations of a road surface estimating unit 400b according to the second embodiment.

When the disparity values of a road surface are correctly extracted as illustrated in FIG. 8, if it is assumed that the dividing unit 403 of the road surface estimating unit 400b (described later) divides the V map VM into seven segments (strip-like partial areas) and if the segments are called the first segment to the seventh segment in order from the right-hand side while viewing the drawings, then the estimated road surface included in the first segment is determined to be appropriate as the road surface indicating the start of the road surface. Then, with reference to that estimated road surface, the road surface in the subsequent segments is estimated. Hence, the definitive result represents the estimated road surface 600a.

In contrast, in FIGS. 22A and 22B is illustrated an example in which there is a plurality of successfully estimated road surfaces but some of those road surfaces are inappropriately estimated. In a disparity image Ip7 illustrated in FIG. 22A, for example, a road surface 620 and a vehicle 621 are captured, but the road surface 620 includes a disparity un-extracted area 622 representing an area in which the disparity values cannot be extracted. In that case, there is a possibility that the estimated road surface gets pulled by such disparity points in the V map which correspond to the vehicle 621 representing the object, and the estimated road surface ends up having a steep slope. When the distribution of disparity points of the estimated road surface is similar to the distribution of disparity points of an uphill road, there is a possibility that the estimation of the road surface is successful and the estimated road surface gets set as the road surface indicating the start of the road surface. In FIG. 22B is illustrated a V map VM7 that is generated from the disparity image Ip7. In the V map illustrated in FIG. 22B, the estimation of the road surface is successful in the first and fourth segments, and the successfully-estimated road surfaces are referred to as estimated road surfaces ER7a and ER7b, respectively. Moreover, a vehicle portion 621a of the V map VM7 corresponds to the vehicle 621 in the disparity image Ip7. Of the estimated road surfaces ER7a and ER7b in the V map VM7, if the estimated road surface ER7b in the fourth segment is set as the road surface indicating the start of the road surface, then there is a possibility that the definitive estimated road surface in the V map VM7 ends up as an inappropriate result.

For example, in the case of performing estimation in the subsequent segments with reference to the segment including the road surface indicating the start of the road surface (the road surface ER7b), if the search for sample points is attempted with reference to the end point of the estimated road surface included in the reference segment (the fourth segment), the position of the end point is higher as compared to the position of the end point of the actual road surface. Hence, it may not be possible to correctly search for the sample points. Moreover, even if the sample points can be retrieved and the road surface can be estimated, the angle with the estimated road surface in the reference segment does not match with a predetermined criterion. Hence, the road surface estimation may be determined to have ended up in failure. Furthermore, if the road surface present in the opposite direction of the reference segment (i.e., in this case, the road surface in the first to third segments) is interpolated by extending the estimated road surface included in the reference segment, since the road surface in the fourth segment has an inappropriate slope, there is a possibility that a road surface that is far too low than the actual road surface gets interpolated. In that case, if the first to third segments are the nearer segments, it may lead to the clustering of a large number of disparity points of the actual road surface on the nearer side, thereby resulting in the appearance of a large number of falsely-recognized objects on the road surface on the nearer side.

Meanwhile, of the estimated road surfaces ER7a and ER7b in the V map VM7, if the estimated road surface ER7a included in the first segment can be set as the road surface indicating the start of the road surface, then the estimated road surface happens to be identical to the result illustrated in FIG. 8, and the road surface estimation in the V map VM7 becomes successful. In this way, in the V map, when the road surface estimation is successful in a plurality of segments, in what way can the actual road surface be selected from among a plurality of estimated road surfaces becomes the critical factor in defining the accuracy of road surface estimation in the V map of a single frame.

As illustrated in FIG. 23, the road surface estimating unit 400b includes the input unit 401, the V map generating unit 402 (a second generating unit), the dividing unit 403, a start segment searching unit 404b, a continued estimating unit 405b, the smoothing unit 406, and the output unit 407. Herein, the input unit 401, the V map generating unit 402, the dividing unit 403, the smoothing unit 406, and the output unit 407 have identical functions to the functions of the corresponding functional units in the road surface estimating unit 400 according to the first embodiment.

The start segment searching unit 404b is a functional unit that performs a start segment search operation in which, from the segments obtained by division by the dividing unit 403, the segment including the start position of the road surface on which the vehicle 70 is travelling is searched, that is, the start segment representing the segment including the nearest road surface portion to the vehicle 70, in which the object recognizing device is installed, is searched from among the road surfaces captured in the disparity image. The start segment retrieved in the start segment search operation represents the segment including the reference road surface in the V map at the time of performing the road surface estimation, and implies the segment including the nearest road surface in the V map because usually the road surface estimation is performed from the nearer side toward the distant side.

Herein, the explanation is given about a start segment search operation in which, when road surface estimation is performed up to a predetermined segment and when a plurality of road surfaces is determined to be successful in the success-failure determination of the road surface estimation, the nearest segment is set as the start segment. Firstly, the road surface estimation is performed in order from a predetermined segment, and the road surface estimation with respect to each segment is performed under a predetermined success-failure determination condition. For example, as illustrated in FIG. 24, a V map VM8 is divided into segments from a first segment to a sixth segment in order from the right-hand side in FIG. 24; and, more rightward the position of a segment, the nearer it is assumed to be. The disparity has a high accuracy on the nearer side; but, as the distance increases, the resolution is prone to become lower and the degree of reliability decreases thereby making it easier for the disparity values to disperse. For that reason, the disparity points onto which the disparity values are voted in the V map have a higher degree of reliability at nearer positions. In consideration of such characteristics, when the road surface estimation is performed up to a predetermined segment, if a plurality of road surfaces is determined to be successful in the success-failure determination of the road surface estimation, then the segment including the nearest estimated road surface is set as the start segment. For example, in the example illustrated in FIG. 24, a state is illustrated in which the road surface estimation is performed from the first segment, and an estimated road surface ER8a included in the fourth segment and an estimated road surface ER8b included in the fifth segment have satisfied the success-failure determination condition. That is, a state is illustrated in which the road surface estimation is successful in the fourth and fifth segments. Then, of the fourth and fifth segments in which the road surface estimation is successful, the nearer segment, that is, the fourth segment including the estimated road surface ER8a is set as the start segment. Thus, the segment that includes the estimated road surface based on the disparity points having a high degree of reliability is set as the start segment. Hence, the start position of the road surface can be detected with accuracy. Consequently, the road surface can be detected with accuracy.

Meanwhile, the segment to be treated as the initial search target for the start segment need not always be the first segment. Moreover, the search need not be performed with respect to all target segments for the start segment search operation (for example, in FIG. 24, with respect to the first to sixth segments). Alternatively, the search can be performed from the nearest segment and, as soon as a segment is found in which the road surface estimation is successful, that segment can be set as the start segment, and the search with respect to the subsequent segments can be terminated. For example, in the example illustrated in FIG. 24, the start segment search operation is started from the first segment and, as soon as the road surface estimation is successful in the fourth segment, the operations are terminated and the search operation with respect to the fifth and sixth segments is skipped. As a result, since the road surface estimation need not be performed with respect to unnecessary segments, it becomes possible to shorten the processing time of the start segment search operation.

Meanwhile, the start segment searching unit 404b can perform the start segment search operation for a plurality of number of times. That is, if the start segment cannot be found in the first round of the start segment search operation; then, for example, the success-failure determination condition can be relaxed as compared to the first round, and the second round of the start segment search operation can be performed from the initial segment. In that case, every time the operations are repeated (in every subsequent round), the scope of search can be narrowed. For example, it is possible to think of a method in which, in the first round of the search segment search operation, the search is performed up to the sixth segment and, in the second round of the search segment search operation, the search is performed up to the fifth segment. Of course, the scope of search can be kept same in the first round and the second round.

Meanwhile, in the case in which there is not much information on the disparity from the beginning, even if the start segment search operation is performed, the probability of succeeding in the road surface estimation is low. Hence, if a successful estimated road surface is not found, then the initial target segment for search, that is, the first segment can be treated as the start segment, and the default road surface or a historical road surface can be assigned to that segment. For the subsequent segments too, if a successful estimated road surface is not found, the default road surface or a historical road surface is assigned, or the historical road surface of the first segment can be extended. That is, when there is not much information on the disparity, it is desirable to set such a road surface which is least likely to lead to erroneous control. Even if there is a road surface having various slopes, since a vehicle often travels on a flat road surface, in case the road surface cannot be estimated, it is often desirable to assign the default road surface. However, the road surface to be assigned is not limited to the default road surface, and any other road surface can be assigned. Moreover, if there is not much information on the disparity so that the road surface estimation cannot be performed, then instead of forcedly assigning a road surface, road surface estimation may not be performed in order to skip the operations in that frame.

As illustrated in FIG. 23, the start segment searching unit 404b includes the first sample-point selecting unit 411 (a first selecting unit), the first geometry estimating unit 412 (a first estimating unit), the first determining unit 413 (a determining unit), and a setting unit 414. Herein, the first sample-point selecting unit 411 and the first geometry estimating unit 412 have identical functions to the corresponding functions of the functional units of the start segment searching unit 404 according to the first embodiment.

The first determining unit 413 is a functional unit that, in the start segment search operation, determines whether or not the road surface estimated by the first geometry estimating unit 412 (a first estimated road surface) satisfies a predetermined success-failure determination condition (a first condition) and accordingly determines whether or not the road surface estimation is appropriate (successful). For example, if it is determined that the sample points are diagonally aligned toward top right, then the first determining unit 413 determines that the estimated road surface is inappropriate (failure) as the road surface. Examples of the cause of such an issue include the fact that the selection of individual sample points is performed in an independent manner. Meanwhile, in the success-failure determination performed by the first determining unit 413, if the degree of reliability of the road surface can be quantified, then the determination can be performed using an arbitrary scale. For example, when the number of sample points is smaller than a predetermined value, since the estimated road surface is estimated in the state of not having much information about it, there is a possibility of an inappropriate slope. Thus, the predetermined value can be used as a threshold value for determining whether the estimation is a success or a failure. Moreover, the state of dispersion of the group of sample points can also be used in the success-failure determination. For example, at the time of estimating the geometry of the road surface, if the least-square method is implemented, then the coefficient of correlation can also be calculated at the time of calculating the approximated straight line. Hence, if the coefficient of correlation is equal to or smaller than a predetermined value, then it can be determined that the estimated road surface is estimated from a dispersed group of sample points, and the estimation can be determined to be a failure. Furthermore, drawing on the quality that the road surface is continuous among the segments, it can be determined whether the angle with the road surface estimated in the previous segment of the target segment is within a predetermined range. If the angle is not within the predetermined range, then the estimated road surface can be determined to be a failure.

The first setting unit 414 is a functional unit that sets the start segment based on the result of the success-failure determination performed by the first determining unit 413. If a plurality of estimated road surfaces is determined to be successful by the first determining unit 413, then the first setting unit 414 sets the segment including the nearest estimated road surface (an example of an estimated road surface "satisfying a predetermined criterion") as the start segment. On the other hand, when no estimated road surface is determined to be appropriate by the first determining unit 413, the first setting unit 414 sets a predetermined segment as the start segment and supplements a substitute road surface for that segment. Examples of the method for supplementing a road surface include a method of assigning the default road surface or a historical road surface.

The continued estimating unit 405b is a functional unit that performs a continued estimation operation for estimating the road surface in the segments following the start segment determined by the start segment searching unit 404b. That is, after the start segment has been determined as a result of the start segment search operation performed by the start segment searching unit 404b, the continued estimating unit 405b performs road surface estimation in the usual unit of segments following the start segment. That is, the continued estimating unit 405b performs road surface estimation with respect to a single segment and, after the estimation is over, performs road surface estimation with respect to the next segment; and continues with such road surface estimation up to a predetermined segment (usually, the last segment obtained by division). When the continued estimating unit 405b finishes the continued estimation operation, the estimated road surface in a single frame reaches completion.

As illustrated in FIG. 23, the continued estimating unit 405b includes the second sample-point selecting unit 421 (a second selecting unit), the second geometry estimating unit 422 (a second estimating unit), the second determining unit 423, the interpolating unit 424, and a second setting unit 425. Herein, the second sample-point selecting unit 421, the second geometry estimating unit 422, and the interpolating unit 424 have identical functions to the corresponding functions of the functional units of the continued estimating unit 405 according to the first embodiment.

The second determining unit 423 is a functional unit that, in the continued estimation operation, determines whether or not the road surface estimated by the second geometry estimating unit 422 (a second estimated road surface) satisfies a predetermined success-failure determination condition (a second condition) and accordingly determines whether or not the road surface estimation is appropriate (successful). Herein, the determination method is identical to the method implemented by the first determining unit 413. Moreover, the success-failure determination condition applied by the second determining unit 423 may or may not be identical to the success-failure determination condition applied by the first setting unit 414.

The second setting unit 425 is a functional unit that sets an appropriate road surface in the target segment based on the result of the success-failure determination performed by the second determining unit 423. For example, if the road surface estimated by the second geometry estimating unit 422 is determined to be appropriate, then the second setting unit 425 sets that estimated road surface as the appropriate road surface in the target segment. However, if the road surface estimated by the second geometry estimating unit 422 is determined to be inappropriate, then the second setting unit 425 supplements a substitute road surface for that road surface. The method of supplementing a road surface is identical to the method implemented by the first setting unit 414.

Road surface estimation operation

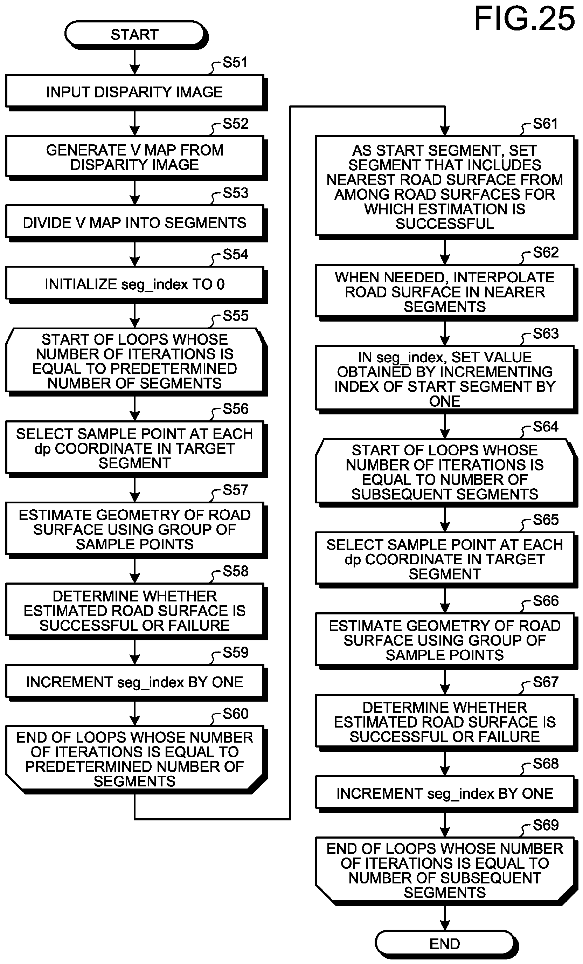

FIG. 25 is a flowchart for explaining an example of a road surface estimation operation performed by the road surface estimating unit according to the second embodiment. Thus, explained with reference to FIG. 25 is a flow of operations in the road surface estimation operation performed by the road surface estimating unit 400b of the recognition processing unit 5.

Step S51

The input unit 401 receives input of a disparity image from the disparity value computing unit 300. Meanwhile, it is alternatively possible to directly receive input of a disparity image generated in the disparity value deriving unit 3 constituting a stereo camera. The information on the disparity image can be stored in advance either in a recording medium such as a CD, a DVD, or an HDD; or in a network storage. Then, as may be necessary, the disparity image can be read from the storage destination and used. Meanwhile, either the input of only a single disparity image can be received, or the frame-by-frame input of video data can be sequentially received. Subsequently, the system control proceeds to Step S52.

Step S52

The V map generating unit 402 generates a V map by voting the disparity values of the disparity pixels of the disparity image, which is received by the input unit 401, onto the corresponding disparity points in the V map. Then, the system control proceeds to Step S53.

Step S53

The dividing unit 403 divides the V map, which is generated by the V map generating unit 402, into one or more segments, which represent partial areas, along the dp coordinates (lateral coordinates). Then, the geometry of the road surface is estimated for each segment that is obtained by division by the dividing unit 403. Meanwhile, the segments obtained by division need not have the same horizontal width (the width in the dp direction). For example, when the distant road surface is to be estimated more finely, farther the distance (smaller the dp value in the V map), the greater can be the reduction in the width of the segments. Then, the system control proceeds to Step S54.

Step S54

In order to start the start segment search operation, when seg_index represents the currently-processed index, the start segment searching unit 404 initializes that variable to 0. The range of values of seg_index is from 0 to ((number of divisions)-1). In the following explanation, the index has the value of ((segment number)-1). For example, when the dividing unit 403 divides the V map into seven segments, then those segments are referred to as the first segment to the seventh segment, and have the corresponding indexes set to 0 to 6, respectively. Then, the system control proceeds to Step S55.

Step S55

The start segment searching unit 404b starts the start segment search operation. In the start segment search operation, the start segment searching unit 404b repeatedly performs road surface estimation and success-failure determination for a number of times equal to a predetermined number of segments (Steps S56 to S59). For example, when the predetermined number of segments is five, then the start segment searching unit 404b treats the first to fifth segments as the targets for processing and searches for the start segment among those segments. Subsequently, the system control proceeds to Step S56.

Step S56

In the start segment search operation, the first sample-point selecting unit 411 of the start segment searching unit 404b selects, from among the disparity points voted onto the V map, at least one sample point from the position of each dp coordinate in the target segment for processing. At that time, the number of sample points selected at each dp coordinate is not limited to one point, and a plurality of sample points may get selected. Moreover, since there are some dp coordinates in the V map at which the disparity points are not present in the perpendicular direction, it is possible to have dp coordinates at which sample points are not selected. Then, the system control proceeds to Step S57.

Step S57

In the start segment search operation, the first geometry estimating unit 412 of the start segment searching unit 404b estimates the geometry of the road surface (performs road surface estimation) from the group of sample points selected by the first sample-point selecting unit 411. Then, the system control proceeds to Step S58.

Step S58

In the start segment search operation, the first determining unit 413 of the start segment searching unit 404b determines whether or not the road surface estimated by the first geometry estimating unit 412 satisfies a predetermined success-failure determination condition and accordingly determines whether or not the road surface estimation is appropriate (successful). Then, the system control proceeds to Step S59.

Step S59

With the aim of further searching for the start segment, the start segment searching unit 404b increments the index seg_index by one so as to treat the next segment as the target segment. Then, the system control proceeds to Step S60.

Step S60

The start segment searching unit 404b determines whether or not the operations from Step S56 to S59 have been performed for the number of times equal to the predetermined number of segments. When the operations have been performed for all of the predetermined number of segments, the system control proceeds to Step S61. However, if the operations are not yet performed for all of the predetermined number of segments, then the system control returns to Step S56.

Step S61

The first setting unit 414 sets the start segment based on the result of the success-failure determination performed by the first determining unit 413. If a plurality of estimated road surfaces is determined to be appropriate by the first determining unit 413, then the first setting unit 414 sets the segment including the nearest estimated road surface as the start segment. On the other hand, when no estimated road surface is determined to be appropriate by the first determining unit 413, the first setting unit 414 sets a predetermined segment as the start segment and supplements a substitute road surface for that segment. Examples of the method for supplementing a road surface include a method of setting a predetermined segment (for example, the first segment) as the start segment and assigning the default road surface or a historical road surface to that segment. Then, the system control proceeds to Step S62.

Step S62

The interpolating unit 424 implements the method described earlier and interpolates the road surface of the nearer segments as needed, that is, when there are nearer segments than the start segment that is set. Then, the system control proceeds to Step S63.

Step S63

The continued estimating unit 405b sets the index seg_index to the value obtained by incrementing the index of the start segment by one, so as to start the continued estimation operation for estimating the road surface in the segments subsequent to the start segment that is set at Step S61. Herein, the value obtained by incrementing the currently-used index seg_index by one is not used as a new index seg_index because, as described earlier at Step S61, the estimated road surface determined to be appropriate by the first determining unit 413 is not necessarily set as the start segment. Then, the system control proceeds to Step S64.

Step S64

The continued estimating unit 405b starts the continued estimation operation. In the continued estimation operation, the continued estimating unit 405b repeatedly performs road surface estimation and success-failure determination (Steps S65 to S68) for a number of times equal to the number of remaining segments subsequent to the start segment from among the predetermined number of segments set at Step S55. For example, if the third segment is set as the start segment and if the search is to be performed up to the seventh segment, then the fourth to seventh segments representing the remaining segments represent the targets for processing. Thus, the continued estimating unit 405b performs the continued estimation operation with respect to those remaining segments. Then, the system control proceeds to Step S65.

Step S65

In the continued estimation operation, the second sample-point selecting unit 421 of the continued estimating unit 405b selects, from among the disparity points voted onto the V map, at least one sample point from the position of each dp coordinate in the target segment excluding the start segment. At that time, the number of sample points selected at each dp coordinate is not limited to one point, and a plurality of sample points may get selected. Moreover, since there are some dp coordinates in the V map at which the disparity points are not present in the perpendicular direction, it is possible to have dp coordinates at which sample points are not selected. Then, the system control proceeds to Step S66.

Step S66

In the continued estimation operation, the second geometry estimating unit 422 of the continued estimating unit 405b estimates the geometry of the road surface (performs road surface estimation) from the group of sample points selected by the second sample-point selecting unit 421. Then, the system control proceeds to Step S67.

Step S67

In the continued estimation operation, the second determining unit 423 of the continued estimating unit 405b determines whether or not the road surface estimated by the second geometry estimating unit 422 satisfies a predetermined success-failure determination condition and accordingly determines whether or not the road surface estimation is appropriate (successful).
The second setting unit 425 sets an appropriate road surface in the target segment based on the result of the success-failure determination performed by the second determining unit 423. For example, if the road surface estimated by the second geometry estimating unit 422 is determined to be appropriate, then the second setting unit 425 sets that estimated road surface as the appropriate road surface in the target segment. However, if the road surface estimated by the second geometry estimating unit 422 is determined to be inappropriate, then the second setting unit 425 supplements a substitute road surface for that road surface. Then, the system control proceeds to Step S68.

Step S68

In order to set the next segment as the target segment, the continued estimating unit 405b increments the index seg_index by one. Then, the system control proceeds to Step S69.

Step S69

The continued estimating unit 405b determines whether or not the operations from Steps S65 to S68 have been performed for a number of times equal to the number of remaining segments subsequent to the start segment. When the operations have been performed for all of the remaining segments, the smoothing unit 406 performs a smoothing operation with respect to the road surface estimated by the start segment searching unit 404b and the continued estimating unit 405b. Subsequently, the output unit 407 outputs, to the clustering unit 450, information about the estimated road surface in the V map (road surface information) after the smoothing unit 406 has performed the smoothing operation. It marks the end of the road surface estimation operation. On the other hand, if the operations have not been performed for all of the remaining segments, then the system control returns to Step S65. Meanwhile, in the smoothing operation performed by the smoothing unit 406, after the estimated road surface in the segment of interest is obtained, smoothing can be sequentially performed with respect to that estimated road surface and with respect to the estimated road surface in the previous segment of the segment of interest.

As a result of performing the operations from Steps S51 to S69, the road surface estimating unit 400b performs the road surface estimation operation.

Meanwhile, in the flowchart illustrated in FIG. 25, the operations performed by the start segment searching unit 404b from Steps S56 to S58 and the operations performed by the continued estimating unit 405b from Steps S65 to S67 can be serially executed on a segment-by-segment basis, or the operation at each step can be performed in parallel for all segments.

As described above, when the road surface estimation is performed with respect to each segment of the V map, if a plurality of road surfaces is determined to be successful in the success-failure determination of the road surface estimation, then the segment including the nearest estimated road surface is set as the start segment. The disparity has a high accuracy on the nearer side; but, as the distance increases, the resolution is prone to become lower and the degree of reliability decreases thereby making it easier for the disparity values to disperse. For that reason, the disparity points onto which the disparity values are voted in the V map have a higher degree of reliability at nearer positions. In that regard, since the segment that includes the estimated road surface based on the disparity points having a high degree of reliability is set as the start segment, the start position of the road surface can be detected with accuracy. As a result, the road surface can be detected with accuracy.

Modification example of second embodiment

Regarding an object recognizing device according to a modification example of the second embodiment, the explanation is given with the focus on the differences with the object recognizing device according to the second embodiment. In the second embodiment, it is explained that, if a plurality of road surfaces is determined to be successful in the success-failure determination of the road surface estimation, then the segment including the nearest estimated road surface is set as the start segment in consideration of the characteristics that the disparity points onto which the disparity values are voted in the V map have a higher degree of reliability at nearer positions. In the modification example, the explanation is given about the operations in which, if a plurality of road surfaces is determined to be successful in the success-failure determination of the road surface estimation, then the segment that includes the road surface whose difference from a historical road surface of the past is smallest is set as the start segment.

The object recognizing device according to the modification example has an identical hardware configuration and an identical functional block configuration to that described in the second embodiment. Moreover, the block matching operation performed by the disparity value deriving unit 3 according to the modification example is also identical to the operation described in the second embodiment.

Functional block configuration and operations of road surface estimating unit

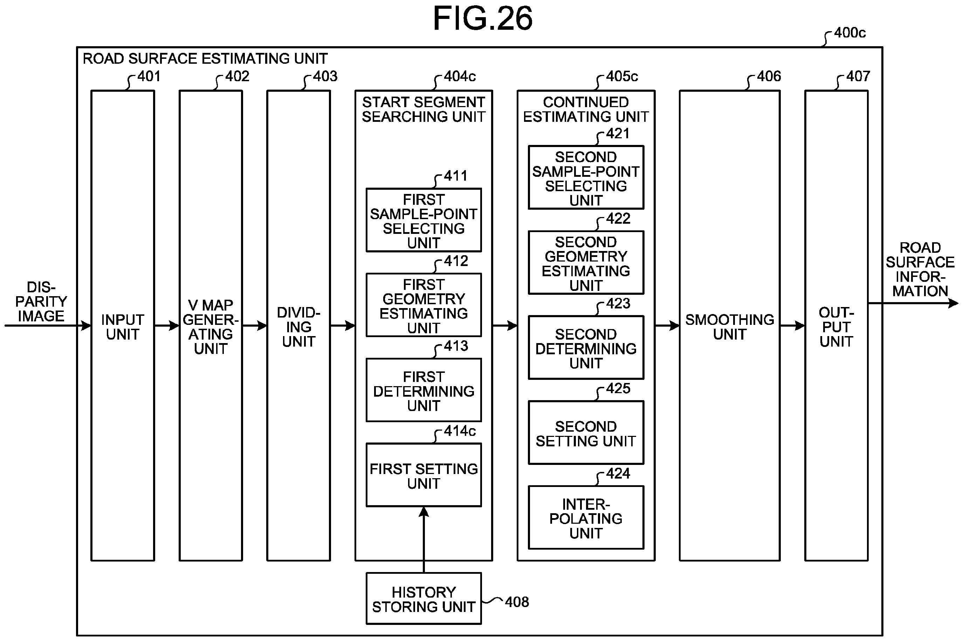

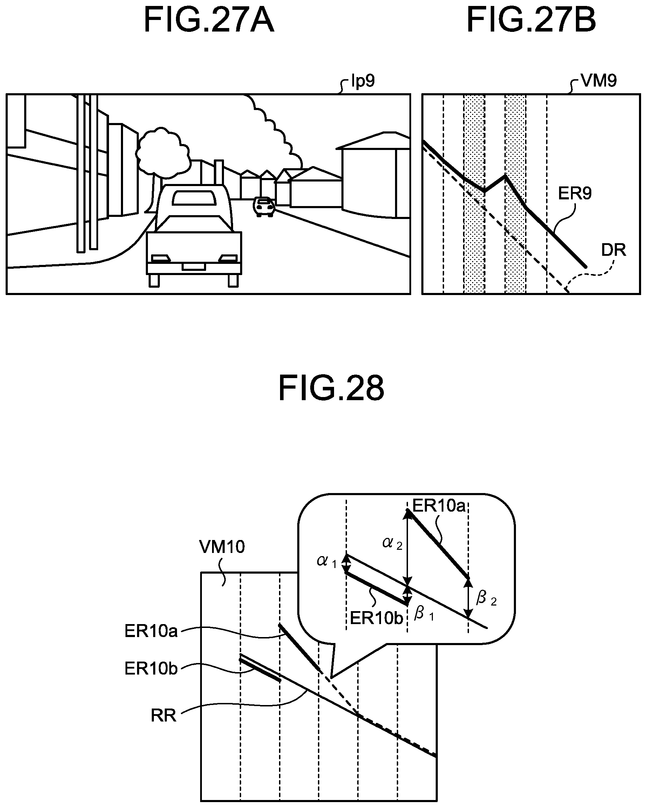

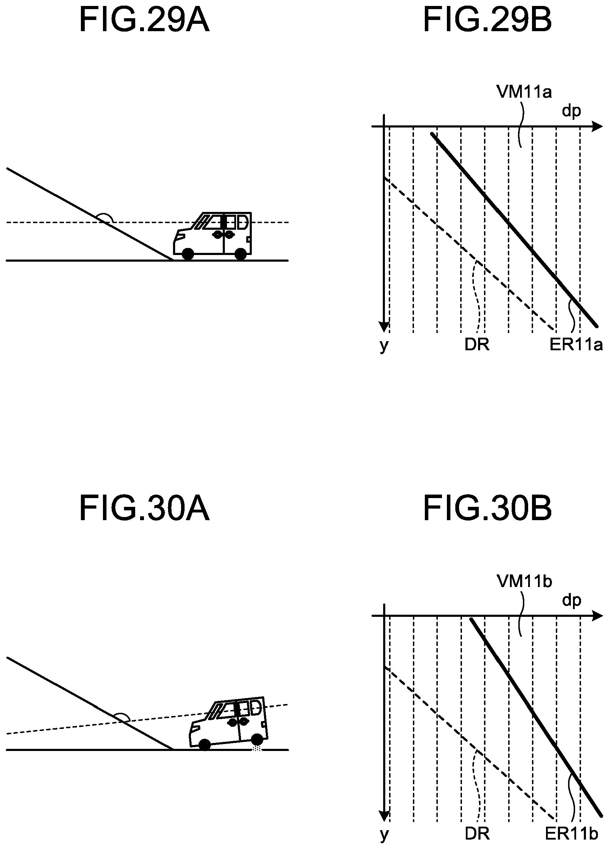

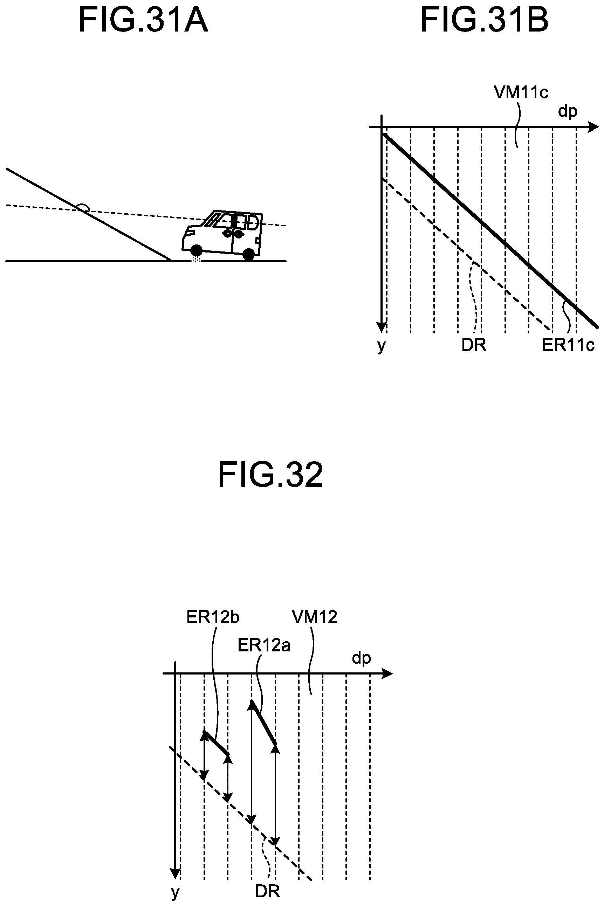

FIG. 26 is a diagram illustrating an exemplary functional block configuration of a road surface estimating unit of the object recognizing device according to the modification example of the second embodiment. FIGS. 27A and 27B are diagrams for explaining an exemplary operation of selecting an erroneous segment when the road surface estimation is successful in a plurality of segments. FIG. 28 is a diagram for explaining the operation of setting, as the start segment, a segment that includes the road surface close to a historical road surface. FIGS. 29A and 29B are diagrams for explaining the change in the slope of a road surface in the absence of pitching. FIGS. 30A and 30B are diagrams for explaining the change in the slope of a road surface in the case in which a vehicle tilts forward due to pitching. FIGS. 31A and 31B are diagrams for explaining the change in the slope of a road surface in the case in which a vehicle tilts backward due to pitching. FIG. 32 is a diagram for explaining a start segment search operation performed using a historical road surface in the case in which pitching is done. Thus, explained with reference to FIGS. 26 to 32 is a specific functional block configuration and operations of a road surface estimating unit 400c.

As illustrated in FIG. 26, the road surface estimating unit 400c of the object recognizing device according to the present embodiment includes the input unit 401, the V map generating unit 402 (a second generating unit), the dividing unit 403, a start segment searching unit 404c, a continued estimating unit 405c, the smoothing unit 406, the output unit 407, and a history storing unit 408. Herein, the input unit 401, the V map generating unit 402, the dividing unit 403, the smoothing unit 406, and the output unit 407 have identical functions to the functions described in the second embodiment. Moreover, the continued estimating unit 405c has the identical function to the function of the continued estimating unit 405b according to the second embodiment.

The start segment searching unit 404c is a functional unit that performs a start segment search operation in which, from the segments obtained by division by the dividing unit 403, the start segment including the start position of the road surface, on which the vehicle 70 is travelling, is searched.

Given below is the detailed explanation of the start segment search operation according to the modification example. FIGS. 27A and 27B illustrate an example in which: a V map VM9 (see FIG. 27B) that is generated from a disparity image Ip9 (see FIG. 27A) is divided into the first to seventh segments; the road surface estimation is successful in a plurality of segments (the third to fifth segments); and a definitively-obtained estimated road surface ER9 is compared with the default road surface DR. Moreover, FIGS. 27A and 27B illustrate an example in which, in the V map VM9, the disparity value of a pickup truck captured in the disparity image Ip9 is erroneously determined as the disparity value of the road surface and a road surface different than the actual road surface gets estimated in the third segment. Herein, for example, as explained in the second embodiment, from among a plurality of segments in which the road surface estimation is successful, if the third segment including the nearest estimated road surface is set as the start segment, then the subsequent segments (in the example illustrated in FIG. 27, the fourth to seventh segments) get sequentially estimated with reference to the third segment, thereby increasing the risk of failure in the road surface estimation. For example, if the area of search for searching for sample points is determined to be the estimated road surface of the previous segment, then it becomes less possible to search for the sample points in the preferred way; and if the success-failure determination is performed using the angular difference from the estimated road surface of the previous segment, there is an increased risk of erroneous determination of failure even if the correct road surface is estimated. Moreover, regarding the nearer segments than the start segment, if interpolation is attempted by extending the start segment, then the extended road surface also becomes inappropriate, thereby leading to an inappropriate geometry of the estimated road surface in the entire frame.

Meanwhile, with reference to FIG. 27B, if it is assumed that the fifth segment correctly captures the disparity of the road surface and that the road surface estimation is successful in the fifth segment, then it is desirable that the fifth segment is selected as the start segment. However, in a single frame, it is difficult to determine the segment in which the road surface position is correctly captured. Hence, a historical road surface calculated in a frame in the past is used and, from among the segments in which the road surface estimation is successful, the segment that includes the estimated road surface whose difference from the historical road surface is smallest is set as the start segment. Herein, the historical road surface either can be the estimated road surface in the most recent frame or can be the road surface obtained by averaging and synthesizing the historical road surface of a predetermined number of frames. In this way, as a result of setting the start segment using a historical road surface, it becomes possible to predict the degree of reliability of the estimation result of the road surface in the frame of interest, and the start position of the road surface can be detected with accuracy because the segment including the estimated road surface having the highest degree of reliability is set as the start segment. Regarding a specific method for calculating the difference between a historical road surface and an estimated road surface, the explanation is given later during the explanation of the operations performed by a first setting unit 414c (described later).

As illustrated in FIG. 26, the start segment searching unit 404c includes the first sample-point selecting unit 411 (a first selecting unit), the first geometry estimating unit 412 (a second estimating unit), the first determining unit 413, and the first setting unit 414c. Herein, the first sample-point selecting unit 411, the first geometry estimating unit 412, and the first determining unit 413 have identical functions to the functions described in the second embodiment.

The first setting unit 414c is a functional unit that sets the start segment based on the result of the success-failure determination performed by the first determining unit 413. If a plurality of estimated road surfaces is determined to be appropriate by the first determining unit 413, then the first setting unit 414c sets, as the start segment, the segment that, from among the segments in which the road surface estimation is successful, includes the estimated road surface (an example of an estimated road surface "satisfying a predetermined criterion") whose difference from the historical road surface which is obtained based on the estimated road surface estimated in the previous frames stored in the history storing unit 408 is smallest. On the other hand, if no estimated road surface is determined to be appropriate by the first determining unit 413, then the first setting unit 414c sets a predetermined segment as the start segment and supplements a substitute road surface for that segment. Examples of the method for supplementing a road surface include assigning the default road surface or a historical road surface.

In FIG. 28 is illustrated an exemplary method for setting, as the start segment, the segment that, from among a plurality of segments in which the road surface estimation is successful, includes the estimated road surface whose difference from the historical road surface is smallest. A V map VM10 illustrated in FIG. 28 is divided into segments from the first segment to the sixth segment, and it is assumed that the road surface estimation is successful in the fourth and fifth segments. Moreover, it is assumed that an estimated road surface ER10a in the fourth segment gets estimated in a raised manner from the actual road surface due to the effect of the disparity value of the object. As illustrated in FIG. 28, the first setting unit 414c calculates the difference between a historical road surface RR, which is read from the history storing unit 408, and the estimated road surface ER10a in the fourth segment as well as an estimated road surface ER10b in the fifth segment. More particularly, for example, the first setting unit 414c calculates the difference in the y-direction between the historical road surface RR and the start point (the right-side end) as well as the end point (the left-side end) of the estimated road surface in each segment in which the road surface estimation is successful, and sets the segment that includes the estimated road surface having the smallest sum of differences as the start segment. In the example illustrated in FIG. 28, when the sum of differences $(\alpha_2+\beta_2)$ between the estimated road surface ER10a in the fourth segment and the historical road surface RR is compared with the sum of differences $(\alpha_1+\beta_1)$ between the estimated road surface ER10b in the fifth segment and the historical road surface RR, the sum $(\alpha_1+\beta_1)$ is smaller than the sum $(\alpha_2+\beta_2)$. Hence, the fifth segment is set as the start segment.

Other examples of the method for calculating the difference from the historical road surface include a method for calculating the difference in the y-direction between the estimated road surface at the dp coordinate of the center of each segment and the historical road surface, and a method for calculating the difference of the slope of each estimated road surface with the slope of the historical road surface. That is, if the difference from the historical road surface can be quantified, it becomes possible to use an arbitrary scale.

As described above, the segment that, from among the segments in which the road surface estimation is successful, includes the estimated road surface whose difference from the historical road surface is smallest is set as the start segment. That enables achieving reduction in the risk of erroneously setting, as the start segment, a segment that incidentally includes a raised road surface or a withdrawn road surface due to the disparity value or the noise of the object. Hence, the start segment can be set with accuracy, thereby enhancing the accuracy of road surface estimation.

Consider a case in which a vehicle does pitching due to unevenness. When a vehicle does pitching, the disparity pixels of the road surface which appear across the frames (across the disparity images) are prone to move in a manner close to parallel translation. That is because, when the same road surface is viewed after the imaging direction of the object recognizing device has changed as a result of pitching, the slope of the road surface appears to have changed when viewed from the perspective of the object recognizing device. For example, while travelling on a flat road surface, if the imaging direction of the object recognizing device turns downward due to pitching, then the road surface appears to be an uphill road in a relative manner.

As illustrated in FIGS. 29 to 31, assume that the road surface of an uphill road is present right before the vehicle. In the example illustrated in FIG. 29, the state of no pitching is illustrated in FIG. 29A. As illustrated in a V map VM11a in FIG. 29B, an estimated road surface ER11a for that road surface is positioned higher as compared to the default road surface DR. In the V map VM11a, since the estimated road surface ER11a and the default road surface DR are illustrated midway through the distance, the start points of the road surfaces do not match. However, if the road surfaces are extended up to the nearer side, then the start points thereof match. The same is the case in FIGS. 30B and 31B (described later).

Subseu1ently, as illustrated in FIG. 30A, consider a case in which pitching is done so that the imaging direction of the object recognizing device, which is installed in the vehicle, tilts downward. In that case, the angle formed by the imaging direction of the object recognizing device with the road surface of the uphill road becomes steep and, as illustrated in a V map VM11b in FIG. 30B, an estimated road surface ER11b is positioned on the upper side than the estimated road surface ER11a illustrated in FIG. 29B.

Moreover, as illustrated in FIG. 31A, consider a case in which pitching is done so that the imaging direction of the object recognizing device, which is installed in the vehicle, tilts upward. In that case, the angle formed by the imaging direction of the object recognizing device with the road surface of the uphill road becomes gentle and, as illustrated in a V map VM11c in FIG. 31B, an estimated road surface ER11c is positioned on the further lower side than the estimated road surface ER11a illustrated in FIG. 29B and is positioned nearer to the default road surface DR.

In this way, at the time of pitching, the estimated road surface shifts in the vertical direction, and the amount of shift across the frames is not often large. However, the amount of shift of the estimated road surface is dependent on the frame rate and, higher the frame rate, the smaller is the amount of shift. Meanwhile, in the method of calculating the difference between the historical road surface and the estimated road surface according to the modification example, even if the estimated road surface shifts in the vertical direction due to pitching, as indicated by estimated road surfaces ER12a and ER12b in a V map VM12 illustrated in FIG. 32, only the sum of differences calculated for each estimated road surface increases but the relative relationship among the sums of differences calculated for the estimated road surfaces is hard to change. Hence, as described in the modification example, in the case in which the segment that, from among the segments in which the road surface estimation is successful, includes the estimated road surface whose difference from the historical road surface is smallest is set as the start segment, the accuracy of road surface estimation is robust against the pitching motion of the vehicle.

The history storing unit 408 is a functional unit used to store information on the historical road surface that represents the estimated road surface calculated in the previous frames. The history storing unit 408 is implemented using, for example, the RAM 54 illustrated in FIG. 3.

Meanwhile, the input unit 401, the V map generating unit 402, the dividing unit 403, the start segment searching unit 404c, the continued estimating unit 405c, the smoothing unit 406, and the output unit 407 that are illustrated in FIG. 26 are implemented using the FPGA 51 illustrated in FIG. 3. Alternatively, instead of using the FPGA 51 that is a hardware circuit, some or all of the input unit 401, the V map generating unit 402, the dividing unit 403, the start segment searching unit 404c, the continued estimating unit 405c, the smoothing unit 406, and the output unit 407 can be implemented as a result of execution of computer programs, which are stored in the ROM 53, by the CPU 52.

Moreover, the input unit 401, the V map generating unit 402, the dividing unit 403, the start segment searching unit 404c, the continued estimating unit 405c, the smoothing unit 406, the output unit 407, and the history storing unit 408 of the road surface estimating unit 400c illustrated in FIG. 26 are meant to illustrate the functions in a conceptual manner, and the configuration is not limited to the configuration illustrated in FIG. 26. Alternatively, for example, the functional units that are illustrated as independent functional units in the road surface estimating unit 400c in FIG. 26 can be configured as a single functional unit. In contrast, the functions of a single functional unit in the road surface estimating unit 400c illustrated in FIG. 26 can be divided into a plurality of functions, and the functional unit can be configured as a plurality of functional units.

Road surface estimation operation

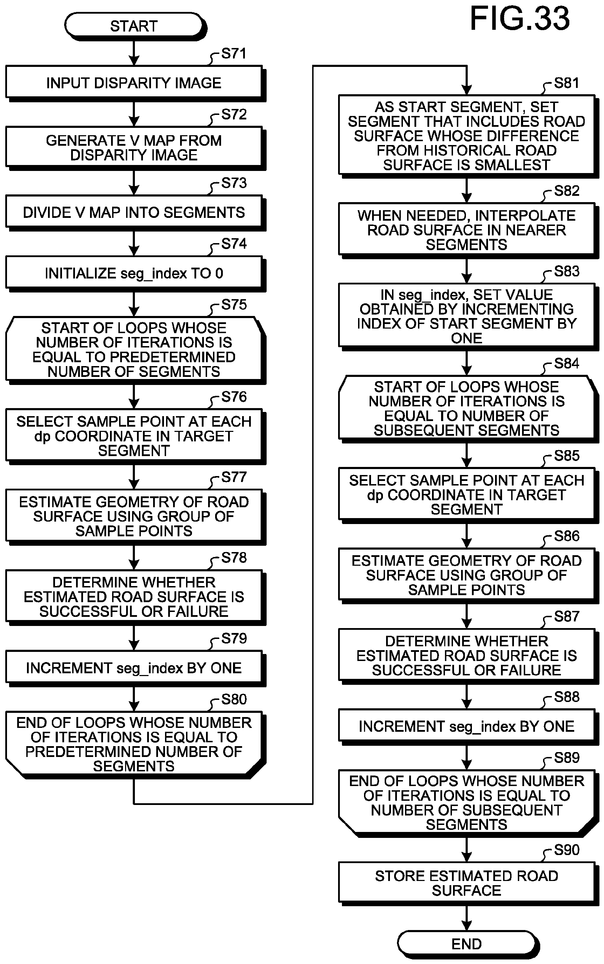

FIG. 33 is a flowchart for explaining an example of a road surface estimation operation performed by the road surface estimating unit according to the modification example of the second embodiment. Thus, explained with reference to FIG. 33 is a flow of operations in the road surface estimation operation performed by the road surface estimating unit 400c of the recognition processing unit 5.

Steps S71 to S80

The operations from Steps S71 to S80 are identical to the operations from Steps S51 to S60 illustrated in FIG. 25 according to the second embodiment. Subsequently, the system control proceeds to Step S81.

Step S81

If a plurality of estimated road surfaces is determined to be appropriate by the first determining unit 413, then the first setting unit 414c of the road surface estimating unit 400c sets, as the start segment, the segment that, from among the segments in which the road surface estimation is successful, includes the estimated road surface whose difference from the historical road surface which is obtained based on the estimated road surface estimated in the previous frames stored in the history storing unit 408 is smallest. On the other hand, if no estimated road surface is determined to be appropriate by the first determining unit 413, then the first setting unit 414c sets a predetermined segment as the start segment and supplements a substitute road surface for that segment. Examples of the method for supplementing a road surface include a method of setting a predetermined segment (for example, the first segment) as the start segment and assigning the default road surface or the historical road surface to that segment. Meanwhile, regarding the method for calculating the difference between the historical road surface and the estimated road surface in each segment in which the road surface estimation is successful, the explanation is given earlier. Then, the system control proceeds to Step S82.

Steps S82 to S89

The operations from Steps S82 to S89 are identical to the operations from Steps S62 to S69 illustrated in FIG. 25 according to the second embodiment. Subsequently, the system control proceeds to Step S90.

Step S90

The start segment searching unit 404c and the continued estimating unit 405c store the information about the entire estimated road surface, which is estimated in the V map, in the history storing unit 408. Regarding the method of storing the information about the estimated road surface; for example, simply the latest estimated road surface that was stored in the history storing unit 408 can be overwritten. Alternatively, if a plurality of buffers is available, the information can be added as information about a new estimated road surface. In that case, when the buffer capacity is limited, the information about the historical road surface of an earlier frame can be deleted using the first-in first-out (FIFO) method. Meanwhile, in the case of synthesizing the estimated road surface across a plurality of frames and generating a historical road surface, the estimated road surfaces can be stored in a predetermined buffer and can be used in generating a historical road surface at the next instance of the road surface estimation.

As a result of performing the operations from Steps S71 to S90, the road surface estimating unit 400c performs the road surface estimation operation.

Meanwhile, in the flowchart illustrated in FIG. 33, the operations performed by the start segment searching unit 404c from Steps S76 to S78 and the operations performed by the continued estimating unit 405c from Steps S85 to S87 can be serially executed on a segment-by-segment basis, or the operation at each step can be performed in parallel for all segments.

As described above, when the road surface estimation is performed with respect to each segment of a V map, if a plurality of road surfaces is determined to be successful in the success-failure determination of the road surface estimation, then the segment that, from among the segments in which the road surface estimation is successful, includes the estimated road surface whose difference from the historical road surface of the previous frames stored in the history storing unit 408 is smallest is set as the start segment. That enables achieving reduction in the risk of erroneously setting, as the start segment, a segment that incidentally includes a raised road surface or a withdrawn road surface due to the disparity value or the noise of the object. Hence, the start segment can be set with accuracy, thereby enhancing the accuracy of road surface estimation.

Meanwhile, in the embodiments and the modification examples described above, although the cost value C represents the evaluation value indicating the degree of dissimilarity, it can alternatively represent the evaluation value indicating the degree of similarity. In that case, the shift amount d having the highest (extreme) cost value C, which represents the degree of similarity, serves as the disparity value dp.

Moreover, in the embodiments and the modification examples described above, although the explanation is given for an object recognizing device installed in an automobile represented by the vehicle 70, that is not the only possible case. Alternatively, for example, the object recognizing device can be installed in a vehicle such as a motorbike, a bicycle, a wheelchair, or a farm tiller. Besides, examples of the moving body not only include vehicles but also include robots.

Meanwhile, in the embodiments and the modification examples described above, if at least one of the functional units of the disparity value deriving unit 3 and the recognition processing unit 5 of the object recognizing device is implemented using a computer program, then that computer program is stored in advance in a ROM. Alternatively, the computer program executed in the object recognizing device according to the embodiments and the modification examples described above can be recorded as an installable file or as an executable file in a computer-readable recording medium such as a CD-ROM, a flexible disk (FD), a compact disk recordable (CD-R), or a DVD. Still alternatively, the computer program executed in the object recognizing device according to the embodiments and the modification examples described above can be stored in a downloadable manner in a computer connected to a network such as the Internet. Still alternatively, the computer program executed in the object recognizing device according to the embodiments and the modification examples described above can be distributed over a network such as the Internet. Meanwhile, the computer program executed in the object recognizing device according to the embodiments and the modification examples described above contains a module of at least one of the abovementioned functional units. As far as the actual hardware is concerned, the CPU 52 (the CPU 32) reads the computer program from the ROM 53 (the ROM 33) and executes it, so that the functional units are loaded and generated in a main memory device (the RAM 54 (the RAM 34)).

The invention is defined by the appended claims.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1.  An image processing device comprising:

    a dividing unit (403) configured to divide a frequency image, in which the vertical axis of the image corresponds to the y coordinates of a distance image and the horizontal axis corresponds to distance values of the distance image, and the distance values present on the horizontal lines at predetermined y coordinates in the distance image are voted into the horizontal coordinates in the image, into one or more segments along a direction of the distance values;
    a first selecting unit (411) configured to select, in one or more predetermined segments from among the segments obtained by division by the dividing unit (403), sample points from the position of each horizontal coordinate of each segment;
    a first estimating unit (412) configured to estimate geometry of a road surface from a group of sample points selected by the first selecting unit (411);
    a first determining unit (413) configured to, in order to determine whether or not a segment that includes a first estimated road surface being the road surface estimated by the first estimating unit (412) is a start segment for performing road surface estimation, determine whether or not the first estimated road surface satisfies a success-failure determination condition, wherein the determining unit (413) is configured to sequentially determine whether or not each of the segments obtained by division by the dividing unit (403) satisfies a success-failure determination condition, to determine a start segment; and
    a second estimating unit (422) configured to sequentially process the segments starting from the start segment determined by the determining unit, to estimate geometry of a road surface, wherein
    the determining unit (413) is configured to, when it is determined that no segment satisfies the success-failure determination condition, sequentially determine whether or not a relaxed condition obtained by relaxing the success-failure determination condition is satisfied for each of the segments, to determine the start segment, wherein the success-failure determination condition comprises a number of conditions, and relaxing the success-failure determination condition comprises reducing the number of conditions to be used at the time of performing the determination.

2.  The image processing device according to claim 1, wherein, the first selecting unit (411) is configured to select, in the one or more predetermined segments, the sample points in such a way that a number of sample points at each of the positions is equal to or smaller than a predetermined number.

3.  The image processing device according to claim 1 or 2, wherein the relaxed condition represents a condition in which at least any of a number of sample points selected by the first selecting unit (411) as specified in the success-failure determination condition, dispersion of the sample points as specified in the success-failure determination condition, and a condition regarding angle of the first estimated road surface as specified in the success-failure determination condition is relaxed.

4.  The image processing device according to any one of claims 1 to 3, wherein, when the start segment is not determined from the one or more predetermined segments by the first determining unit (413), selection of sample points by the first selecting unit (411), estimation of geometry of the road surface by the first estimating unit (412), and determination by the first determining unit (413) about whether or not the relaxed condition is satisfied are repeated the predetermined number of times in fewer segments than the predetermined one or more segments.

5.  The image processing device according to any one of claims 1 to 4, further comprising a setting unit configured to set a predetermined segment, from among the segments obtained by division by the dividing unit (403), as the start segment when the start segment is not determined by the first determining unit (413) even though selection of sample points by the first selecting unit (411), estimation of geometry of the road surface by the first estimating unit (412), and determination by the first determining unit (413) about whether or not the relaxed condition is satisfied are repeated the predetermined number of times.

6.  The image processing device according to claim 5, wherein the setting unit sets, as the first estimated road surface corresponding to the start segment that has been set, a road surface assumed to be a flat road surface or a road surface that is based on a road surface estimated in earlier frames than a frame corresponding to the distance image.

7. The image processing device according to any one of claims 1 to 6, further comprising:

a second selecting unit configured to, after the start segment has been determined, select, in a farther segment than the start segment, sample points from the position of each horizontal coordinate of each segment; the second estimating unit configured to estimate geometry of a road surface from a group of sample points selected by the second selecting unit; and a second determining unit configured to determine whether or not a second estimated road surface being the road surface estimated by the second estimating unit satisfies a success-failure determination condition to determine whether or not the second estimated road surface is appropriate, and determine, if the second estimated road surface satisfies the success-failure determination condition, the second estimated road surface to be an appropriate estimated road surface in the concerned segment.

8. The image processing device according to any one of claims 1 to 7, further comprising an interpolating unit configured to, if a segment is present in an opposite direction of a direction of a process of determination by the first determining unit (413) about whether or not the success-failure determination condition is satisfied, after the start segment has been determined, interpolate, as a road surface in a segment present in the opposite direction of the direction of the process, a straight line joining a predetermined point on the first estimated road surface included in the start segment and a predetermined point present in the opposite direction of the direction of the process with reference to the predetermined point on the first estimated road surface.

9. The image processing device according to any one of claims 1 to 7, further comprising an interpolating unit configured to, if a segment is present in an opposite direction of direction of a process of determination by the first determining unit (413) about whether or not the success-failure determination condition is satisfied after the start segment has been determined, interpolate, as a road surface in the segment present in the opposite direction of the direction of the process, a road surface formed by extending the first estimated road surface included in the start segment in the opposite direction of the direction of the process.

10. The image processing device according to any one of claims 1 to 9, wherein the dividing unit (403) is configured to divide the frequency image in such a way that, farther a segment, smaller is a width of the segment along a direction of the distance values.

11. The image processing device according to claim 1, wherein
the first determining unit (413) is configured to determine whether or not the first estimated road surface satisfies a first condition being the success-failure determination condition, and
the image processing device (400) further comprises a first setting unit configured to, when the first determining unit (413) determines that a plurality of first estimated road surfaces satisfy the first condition is satisfied, set, as the start segment, a segment which includes one first estimated road surface which meets a second condition for determining the most appropriate segment as the start segment.

12. The image processing device according to claim 11, wherein the first setting unit is configured to set, as the start segment, a segment that, as the segment meeting the predetermined criterion, includes a first estimated road surface which is nearest from among the plurality of first estimated surfaces determined to satisfy the first condition.

13. The image processing device according to claim 12, wherein the first setting unit is configured to set, as the start segment, a segment that, as the segment meeting the predetermined criterion, includes a first estimated road surface whose difference from a historical road surface which is based on a road surface estimated in an earlier frame than a frame corresponding to the distance image, is smallest, from among the plurality of first estimated surfaces determined to satisfy the first condition.

14. The image processing device according to claim 13, further comprising a memory unit configured to store information about a road surface estimated in an earlier frame than a frame corresponding to the distance image, wherein the first setting unit is configured to read, from the memory unit, the road surface estimated in the earlier frame and obtain the historical road surface.

15. The image processing device according to claim 13 or 14, wherein the first setting unit is configured to, in a segment including a first estimated surface determined to satisfy the first condition, obtain, as the difference, sum of differences in the vertical direction between the first estimated road surface and the historical road surface at positions of both ends in the direction of the distance values.

16. The image processing device according to any one of claims 11 to 15, wherein the first condition represents a condition regarding at least any of a number of the sample points selected by the first selecting unit (411), dispersion of the sample points, or an angle of the first estimated road surface.

17. The image processing device according to any one of claims 11 to 16, wherein the first setting unit is configured to, when the first determining unit (413) determines that the first road estimating surface satisfying the first condition is not present, set, as the start segment, a predetermined segment from among the segments obtained by division by the dividing unit (403).

18. The image processing device according to claim 17, wherein the first setting unit is configured to set, as the first estimated road surface corresponding to the start segment that has been set, a road surface assumed to be a flat road surface or a historical road surface that is based on a road surface estimated in an earlier frame than a frame corresponding to the distance image.

19. The image processing device according to any one of claims 11 to 18, further comprising:

a second selecting unit configured to, after the start segment has been determined, select, in a farther segment than the start segment, sample points from the position of each horizontal coordinate of each segment;
the second estimating unit configured to estimate geometry of a road surface from a group of sample points selected by the second selecting unit;
a second determining unit configured to determine whether or not a second estimated road surface being the road surface estimated by the second estimating unit satisfies a second condition; and
a second setting unit configured to, when the second determining unit determines that the second estimating unit satisfies the second condition, set the second estimated road surface as an appropriate estimated road surface in the concerned segment.

20. The image processing device according to any one of claims 11 to 19, further comprising an interpolating unit configured to, if a segment is present in an opposite direction of a direction of a process of determination by the first determining unit (413) about whether or not the first condition is satisfied, after the start segment has been set, interpolate, as a road surface in the segment present in the opposite direction of the direction of the process, a straight line joining a predetermined point on the first estimated road surface included in the start segment and a predetermined point present in the opposite direction of the direction of the process with reference to the predetermined point on the first estimated road surface.

21. The image processing device according to any one of claims 11 to 19, further comprising an interpolating unit configured to, if a segment is present in an opposite direction of a direction of a process of determination by the first determining unit (413) about whether or not the first condition is satisfied, after the start segment has been set, interpolate, as a road surface in the segment present in the opposite direction of the direction of the process, a road surface formed by extending the first estimated road surface included in the start segment in the opposite direction of the direction of the process.

22. An object recognizing device including the image processing device (400) according to any one of claims 1 to 21, and comprising:

a first imaging unit configured to take an image of a photographic subject, to obtain a first taken image;
a second imaging unit installed at a different position than a position of the first imaging unit, and configured to take an image of the photographic subject, to obtain a second taken image;
a first generating unit configured to generate the distance image based on the distance values obtained with respect to the photographic subject from the first taken image and the second taken image; and
a second generating unit configured to generate the frequency image based on the distance image.

23. A device control system comprising:

the object recognizing device according to claim 22; and
a control device configured to control a target for control based on information on the object detected by the object recognizing device.

24. A moving body comprising the device control system according to claim 23.

25. An computer implemented image processing method comprising:

dividing a frequency image, in which the vertical axis of the image corresponds to the y coordinates of a distance image and the horizontal axis corresponds to distance values of the distance image, and the distance values present on the horizontal lines at predetermined y coordinates in the distance image are voted into the horizontal coordinates in the image, into one or more segments along direction of the distance values;

selecting, in one or more predetermined segments from among the segments obtained by division at the dividing, sample points from the position of each horizontal coordinate of each segment;

estimating geometry of a road surface from a group of sample points selected at the selecting; and

determining, in order to determine whether or not a segment that includes a first estimated road surface being the road surface estimated at the estimating is a start segment for performing road surface estimation, whether or not the first estimated road surface satisfies a success-failure determination condition; wherein the determining comprises sequentially determining whether or

not each of the segments obtained by division satisfies a success-failure determination condition, to determine a start segment; and

sequentially processing the segments starting from the determined start segment, to estimate geometry of a road surface, wherein when it is determined that no segment satisfies the predetermined success-failure determination condition, sequentially determining whether or not a relaxed condition obtained by relaxing the success-failure determination condition is satisfied for each of the segments, to determine the start segment, wherein the predetermined success-failure determination condition comprises a number of conditions, and relaxing the success-failure determination condition comprises reducing the number of conditions to be used at the time of performing the determination.

26. A computer program comprising instructions which, when the program is executed by a computer, cause the computer to carry out the steps of the method of claim 25.

**Patentansprüche**

1. Bildverarbeitungsvorrichtung, umfassend:

eine Unterteilungseinheit (403), welche konfiguriert ist, um ein Frequenzbild, in welchem die vertikale Achse des Bilds den y-Koordinaten eines Abstandsbilds und die horizontale Achse Abstandswerten des Abstandsbilds entspricht, und wobei die Abstandswerte, die auf den horizontalen Linien an vorbestimmten y-Koordinaten in dem Abstandsbild liegen, als die horizontalen Koordinaten in dem Bild gestimmt werden, in ein oder mehrere Segmente entlang einer Richtung der Abstandwerte zu unterteilen;

eine erste Auswahleinheit (411), welche konfiguriert ist, um, in einem oder in mehreren vorbestimmten Segmenten unter den Segmenten, welche durch Unterteilung durch die Unterteilungseinheit (403) erhalten werden, Probepunkte aus der Position jeder horizontalen Koordinate jedes Segments auszuwählen;

eine erste Schätzeinheit (412), welche konfiguriert ist, um die Geometrie einer Straßenoberfläche aus einer Gruppe von Probepunkten zu schätzen, welche durch die Auswahleinheit (411) ausgewählt werden;

eine erste Bestimmungseinheit (413), welche dazu konfiguriert ist, um zu bestimmen, ob ein Segment, welches eine erste geschätzte Straßenoberfläche, welche die durch die erste Schätzeinheit (412) geschätzte Straßenoberfläche ist, ein Startsegment zum Ausführen einer Straßenoberflächenschätzung ist, um zu bestimmen, ob die erste geschätzte Straßenoberfläche eine Erfolg-Fehlerbestimmungsbedingung erfüllt, wobei die Bestimmungseinheit (413) konfiguriert ist, um sequentiell zu bestimmen, ob jedes der Segmente, welche durch Unterteilung durch die Unterteilungseinheit (403) erhalten werden, eine Erfolg-Fehlerbestimmungsbedingung erfüllt, um ein Startsegment zu bestimmen; und

eine zweite Schätzeinheit (422), welche konfiguriert ist, um die Segmente sequentiell zu verarbeiten, beginnend mit dem Startsegment, welches durch die Bestimmungseinheit bestimmt wurde, um die Geometrie einer Straßenoberfläche zu schätzen, wobei

die Bestimmungseinheit (413) konfiguriert ist, um, wenn bestimmt wird, dass kein Segment die Erfolg-Fehlerbestimmungsbedingung erfüllt, sequentiell zu bestimmen, ob für jedes der Segmente eine erleichterte Bedingung erfüllt ist, welche durch Erleichtern der Erfolg-Fehlerbestimmungsbedingung erhalten wird, um das Startsegment zu bestimmen, wobei die Erfolg-Fehlerbestimmungsbedingung eine Anzahl von Bedingungen umfasst, und das Erleichtern der Erfolg-Fehlerbestimmungsbedingung das Reduzieren der Anzahl von Bedingungen umfasst, welche bei der Ausführung der Bestimmung zu verwenden sind.

2. Bildverarbeitungsvorrichtung nach Anspruch 1, wobei die erste Auswahleinheit (411) konfiguriert ist, um in dem einen oder in den mehreren vorbestimmten Segmenten, die Probepunkte so auszuwählen, dass eine Anzahl von Probepunkten an jeder der Positionen gleich oder kleiner als eine vorbestimmte Anzahl ist.

3. Bildverarbeitungsvorrichtung nach Anspruch 1 oder 2, wobei die erleichterte Bedingung eine Bedingung darstellt, in welcher mindestens einer aus einer Anzahl von Probepunkten, welche durch die erste Auswahleinheit (411) ausgewählt werden, wie in der Erfolg-Fehlerbestimmungsbedingung spezifiziert, eine Streuung der Probepunkte, wie in der Erfolg-Fehlerbestimmungsbedingung spezifiziert, und eine Bedingung bezüglich eines Winkels der ersten geschätzten Straßenoberfläche, wie in der Erfolg-Fehlerbestimmungsbedingung spezifiziert, erleichtert wird.

4. Bildverarbeitungsvorrichtung nach einem der Ansprüche 1 bis 3, wobei, wenn das Startsegment nicht aus dem einen oder den mehreren vorbestimmten Segmenten durch die erste Bestimmungseinheit (413) bestimmt wird, die Auswahl von Probepunkten durch die erste Auswahleinheit (411), die Schätzung der Geometrie der Straßenoberfläche durch die erste Schätzeinheit (412) und die Bestimmung durch die erste Bestimmungseinheit (413), ob die erleichterte Bedingung erfüllt ist, für die vorbestimmte Anzahl von Malen in weniger Segmenten wiederholt werden, als der vorbestimmte eine oder die vorbestimmten mehreren Segmente.

5. Bildverarbeitungsvorrichtung nach einem der Ansprüche 1 bis 4, ferner umfassend eine Einstelleinheit, welche konfiguriert ist, um ein vorbestimmtes Segment unter den Segmenten, welche durch Unterteilung durch die Unterteilungseinheit (403) erhalten wurden, als das Startsegment einzustellen, wenn das Startsegment nicht durch die erste Bestimmungseinheit (413) bestimmt wird, selbst wenn die Auswahl von Probepunkten durch die erste Auswahleinheit (411), die Schätzung der Geometrie der Straßenoberfläche durch die erste Schätzeinheit (412) und die Bestimmung durch die erste Bestimmungseinheit (413), ob die erleichterte Bedingung erfüllt ist, für die vorbestimmte Anzahl von Malen wiederholt werden.

6. Bildverarbeitungsvorrichtung nach Anspruch 5, wobei die Einstelleinheit als erste geschätzte Straßenoberfläche, welche dem eingestellten Startsegment entspricht, eine Straßenoberfläche einstellt, von welcher angenommen wird, dass es sich um eine ebene Straßenoberfläche oder um eine Straßenoberfläche handelt, welche auf einer Straßenoberfläche basiert, welche in Rahmen geschätzt wurde, die früher als ein Rahmen liegen, der dem Abstandsbild entspricht.

7. Bildverarbeitungsvorrichtung nach einem der Ansprüche 1 bis 6, ferner umfassend:

eine zweite Auswahleinheit, welche konfiguriert ist, um, nachdem das Startsegment bestimmt wurde, in einem weiter entfernten Segment als das Startsegment, Probepunkte aus der Position jeder horizontalen Koordinate jedes Segments auszuwählen;
die zweite Schätzeinheit, die konfiguriert ist, um die Geometrie einer Straßenoberfläche aus einer Gruppe von Probepunkten zu schätzen, welche durch die zweite Auswahleinheit ausgewählt werden; und
eine zweite Bestimmungseinheit, welche konfiguriert ist, um zu bestimmen, ob eine zweite geschätzte Straßenoberfläche, welche die durch die zweite Schätzeinheit geschätzte Straßenoberfläche ist, eine Erfolg-Fehlerbestimmungsbedingung erfüllt, um zu bestimmen, ob die zweite geschätzte Straßenoberfläche geeignet ist, und um zu bestimmen, falls die zweite geschätzte Straßenoberfläche die Erfolg-Fehlerbestimmungsbedingung erfüllt, die zweite geschätzte Straßenoberfläche eine geeignete geschätzte Straßenoberfläche in dem entsprechenden Segment ist.

8. Bildverarbeitungsvorrichtung nach einem der Ansprüche 1 bis 7, ferner umfassend eine Interpolationseinheit, welche konfiguriert ist, um, falls ein Segment in einer Richtung vorliegt, welche einer Richtung eines Bestimmungsvorgangs durch die erste Bestimmungseinheit (413) entgegengesetzt ist, zum Bestimmen, ob die Erfolg-Fehlerbestimmungsbedingung erfüllt ist, nachdem das Startsegment bestimmt wurde, als eine Straßenoberfläche in einem Segment, welches in der der Vorgangsrichtung entgegengesetzten Richtung vorliegt, eine gerade Linie zu interpolieren, welche einen vorbestimmten Punkt auf der ersten geschätzten Straßenoberfläche, welche in dem Startsegment eingeschlossen ist, mit einem vorbestimmten Punkt verbindet, welcher in der der Vorgangsrichtung entgegengesetzten Richtung relativ zum vorbestimmten Punkt auf der ersten geschätzten Straßenoberfläche vorliegt.

9. Bildverarbeitungsvorrichtung nach einem der Ansprüche 1 bis 7, ferner umfassend eine Interpolationseinheit, welche konfiguriert ist, um, falls ein Segment in einer Richtung vorliegt, welche einer Richtung eines Bestimmungsvorgangs durch die erste Bestimmungseinheit (413) entgegengesetzt ist, zum Bestimmen, ob die Erfolg-Fehlerbestimmungsbedingung erfüllt ist, nachdem das Startsegment bestimmt wurde, als eine Straßenoberfläche in dem Segment, welches in der der Vorgangsrichtung entgegengesetzten Richtung vorliegt, eine Straßenoberfläche zu interpolieren, welche durch Fortsetzen der ersten geschätzten Straßenoberfläche gebildet wird, welche in dem Startsegment in der der Vorgangsrichtung entgegengesetzten Richtung eingeschlossen ist.

10. Bildverarbeitungsvorrichtung nach einem der Ansprüche 1 bis 9, wobei die Unterteilungseinheit (403) konfiguriert ist, um das Frequenzbild so zu unterteilen, dass je weiter weg ein Segment liegt, desto kleiner eine Breite des Segments entlang einer Richtung von Abstandswerten ist.

11. Bildverarbeitungsvorrichtung nach Anspruch 1, wobei
die erste Bestimmungseinheit (413) konfiguriert ist, um zu bestimmen, ob die erste geschätzte Straßenoberfläche eine erste Bedingung erfüllt, welche die Erfolg-Fehlerbestimmungsbedingung ist, und
die Bildverarbeitungsvorrichtung (400) ferner eine erste Einstelleinheit umfasst, welche konfiguriert ist, um, wenn die erste Bestimmungseinheit (413) bestimmt, dass eine Mehrzahl von ersten geschätzten Straßenoberflächen die erste Bedingung erfüllen, als das Startsegment ein Segment einzustellen, welches eine erste geschätzte Straßenoberfläche umfasst, welche eine zweite Bedingung zum Bestimmen des geeignetsten Segments als das Startsegment erfüllt.

12. Bildverarbeitungsvorrichtung nach Anspruch 11, wobei die erste Einstelleinheit konfiguriert ist, um als Startsegment ein Segment einzustellen, welches als das die vorbestimmte Bedingung erfüllende Segment, eine erste geschätzte Straßenoberfläche umfasst, welche die am nächsten gelegene unter der Mehrzahl von ersten geschätzten Straßenoberflächen ist, von denen bestimmt wurde, dass sie die erste Bedingung erfüllen.

13. Bildverarbeitungsvorrichtung nach Anspruch 12, wobei die erste Einstelleinheit konfiguriert ist, um als das Startsegment ein Segment einzustellen, welches, als das die vorbestimmte Bedingung erfüllende Segment, eine erste geschätzte Straßenoberfläche umfasst, dessen Unterschied von einer historischen Straßenoberfläche, welche auf einer Straßenoberfläche basiert, welche in einem früheren Rahmen geschätzt wurde als ein Rahmen, welcher dem Abstandsbild entspricht, am kleinsten ist unter der Mehrzahl von ersten geschätzten Straßenoberflächen, von welchen bestimmt wurde, dass sie die erste Bedingung erfüllen.

14. Bildverarbeitungsvorrichtung nach Anspruch 13, ferner umfassend eine Speichereinheit, welche konfiguriert ist, um Informationen über eine Straßenoberfläche zu speichern, welche in einem früheren Rahmen als ein dem Abstandsbild entsprechenden Rahmen geschätzt wurde, wobei
die erste Einstelleinheit konfiguriert ist, um aus der Speichereinheit die Straßenoberfläche zu lesen, welche in dem früheren Rahmen geschätzt wurde, und um die historische Straßenoberfläche zu erhalten.

15. Bildverarbeitungsvorrichtung nach Anspruch 13 oder 14, wobei die erste Einstelleinheit konfiguriert ist, um, in einem Segment, welches eine erste geschätzte Oberfläche umfasst, von welcher bestimmt wurde, dass sie die erste Bedingung erfüllt, als Differenz die Summe der Differenzen in der vertikalen Richtung zwischen der ersten geschätzten Straßenoberfläche und der historischen Straßenoberfläche an Stellen von beiden Enden in der Richtung der Abstandswerte zu erhalten.

16. Bildverarbeitungsvorrichtung nach einem der Ansprüche 11 bis 15, wobei die erste Bedingung eine Bedingung darstellt, welche sich auf mindestens eines von einer Anzahl von Probepunkten, welche durch die erste Auswahleinheit (411) ausgewählt sind, der Streuung der Probepunkte oder einem Winkel der ersten geschätzten Straßenoberfläche bezieht.

17. Bildverarbeitungsvorrichtung nach einem der Ansprüche 11 bis 16, wobei die erste Einstelleinheit konfiguriert ist, um, wenn die erste Bestimmungseinheit (413) bestimmt, dass die erste geschätzte Straßenoberfläche, die die erste Bedingung erfüllt, nicht vorliegt, als Startsegment ein vorbestimmtes Segment unter den Segmenten einzustellen, welche bei der Unterteilung durch die Unterteilungseinheit (403) erhalten werden.

18. Bildverarbeitungsvorrichtung nach Anspruch 17, wobei die erste Einstelleinheit konfiguriert ist, um als die erste geschätzte Straßenoberfläche, welche dem eingestellten Startsegment entspricht, eine als eben angenommene Straßenoberfläche oder eine historische Straßenoberfläche einzustellen, welche auf einer Straßenoberfläche basiert, die in einem früheren Rahmen als ein dem Abstandsbild entsprechenden Rahmen geschätzt wurde.

19. Bildverarbeitungsvorrichtung nach einem der Ansprüche 11 bis 18, ferner umfassend:

eine zweite Auswahleinheit, welche konfiguriert ist, um, nachdem das Startsegment bestimmt wurde, in einem weiter weg liegenden Segment als das Startsegment, Probepunkte aus der Position jeder horizontalen Koordinate jedes Segments auszuwählen;

die zweite Schätzeinheit, die konfiguriert ist, um die Geometrie einer Straßenoberfläche aus einer Gruppe von Probepunkten zu schätzen, welche durch die zweite Auswahleinheit ausgewählt werden;

eine zweite Bestimmungseinheit, welche konfiguriert ist, um zu bestimmen, ob eine zweite geschätzte Straßenoberfläche, welche die durch die zweite Schätzeinheit geschätzte Straßenoberfläche ist, eine zweite Bedingung erfüllt; und

eine zweite Einstelleinheit, welche konfiguriert ist, um, wenn die zweite Bestimmungseinheit bestimmt, dass die zweite Schätzeinheit die zweite Bedingung erfüllt, die zweite geschätzte Straßenoberfläche als eine geeignete geschätzte Straßenoberfläche in dem entsprechenden Segment einzustellen.

20. Bildverarbeitungsvorrichtung nach einem der Ansprüche 11 bis 19, ferner umfassend eine Interpolationseinheit, welche konfiguriert ist, um, falls ein Segment in einer Richtung vorliegt, welche einer Richtung eines Bestimmungsvorgangs durch die erste Bestimmungseinheit (413) entgegengesetzt ist, zum Bestimmen ob die erste Bedingung erfüllt ist, nachdem das Startsegment eingestellt wurde, als eine Straßenoberfläche in dem in der der Vorgangsrichtung entgegengesetzten Richtung vorliegenden Segment, eine gerade Linie zu interpolieren, welche einen vorbestimmten Punkt auf der ersten geschätzten Straßenoberfläche, welche in dem Startsegment eingeschlossen ist, mit einem vorbestimmten Punkt verbindet, welcher in der der Vorgangsrichtung entgegengesetzten Richtung relativ zum vorbestimmten Punkt auf der ersten geschätzten Straßenoberfläche vorliegt.

21. Bildverarbeitungsvorrichtung nach einem der Ansprüche 11 bis 19, ferner umfassend eine Interpolationseinheit, welche konfiguriert ist, um, falls ein Segment in einer Richtung vorliegt, welche einer Richtung eines Bestimmungsvorgangs durch die erste Bestimmungseinheit (413) entgegengesetzt ist, zum Bestimmen, ob die erste Bedingung erfüllt ist, nachdem das Startsegment bestimmt wurde, als eine Straßenoberfläche in einem Segment, welches in der der Vorgangsrichtung entgegengesetzten Richtung vorliegt, eine Straßenoberfläche zu interpolieren, welche durch Fortsetzen der ersten geschätzten Straßenoberfläche gebildet wird, welche in dem Startsegment in der der Vorgangsrichtung entgegengesetzten Richtung eingeschlossen ist.

22. Objekterkennungsvorrichtung, umfassend die Bildverarbeitungsvorrichtung (400) nach einem der Ansprüche 1 bis 21, und umfassend:

eine erste Bildgebungseinheit, welche konfiguriert ist, um ein Bild eines photographischen Subjekts aufzunehmen, um ein erstes Aufnahmebild zu erhalten;

eine zweite Bildgebungseinheit, welche an einer von der Position der ersten Bildgebungseinheit unterschiedlichen Position installiert und konfiguriert ist, um ein Bild des photographischen Subjekts aufzunehmen, um ein zweites Aufnahmebild zu erhalten;

eine erste Erzeugungseinheit, welche konfiguriert ist, um das Abstandsbild basierend auf Abstandswerten zu erzeugen, welche in Bezug auf das photographische Subjekt aus dem ersten Aufnahmebild und dem zweiten Aufnahmebild erhalten werden; und

eine zweite Erzeugungseinheit, welche konfiguriert ist, um das Frequenzbild basierend auf dem Abstandsbild zu erzeugen.

23. Vorrichtungssteuerungssystem, umfassend:

die Objekterkennungsvorrichtung nach Anspruch 22; und

eine Steuervorrichtung, welche konfiguriert ist, um ein Ziel basierend auf Informationen über das Objekt zu steuern, welches durch die Objekterkennungsvorrichtung detektiert wird.

24. Beweglicher Körper, umfassend das Vorrichtungssteuerungssystem nach Anspruch 23.

25. Computerimplementiertes Bildverarbeitungsverfahren, umfassend:

Unterteilen eines Frequenzbilds, in welchem die vertikale Achse des Bilds den y-Koordinaten eines Abstandsbilds und die horizontale Achse Abstandswerten des Abstandsbilds entspricht, und wobei die Abstandswerte, die auf den horizontalen Linien an vorbestimmten y-Koordinaten in dem Abstandsbild liegen, als die horizontalen Koordinaten in dem Bild gestimmt werden, in ein oder mehrere Segmente entlang einer Richtung der Abstandwerte;

Auswählen, in einem oder in mehreren vorbestimmten Segmenten unter den Segmenten, welche durch Unterteilung beim Unterteilen erhalten werden, von Probepunkten aus der Position jeder horizontalen Koordinate jedes Segments;

Schätzen der Geometrie einer Straßenoberfläche aus einer Gruppe von Probepunkten, welche durch die Auswahleinheit ausgewählt werden; und

Bestimmen, um zu bestimmen, ob ein Segment, welches eine erste geschätzte Straßenoberfläche umfasst, welche die bei der Schätzung geschätzte Straßenoberfläche ist, ein Startsegment zum Ausführen einer Straßenoberflächenschätzung ist, ob die erste geschätzte Straßenoberfläche eine Erfolg-Fehlerbestimmungsbedingung erfüllt; wobei das Bestimmen das sequentielle Bestimmen umfasst, ob jedes der Segmente, welche durch Unterteilung erhalten werden, eine Erfolg-Fehlerbestimmungsbedingung erfüllt, um ein Startsegment zu bestimmen; und

sequentielles Verarbeiten der Segmente, beginnend mit dem bestimmten Startsegment, um die Geometrie einer Straßenoberfläche zu schätzen, wobei wenn bestimmt wird, dass kein Segment die vorbestimmte Erfolg-Fehlerbestimmungsbedingung erfüllt, sequentielles Bestimmen, ob für jedes der Segmente eine erleichterte Bedingung erfüllt ist, welche durch Erleichtern der Erfolg-Fehlerbestimmungsbedingung erhalten wird, um das Startsegment zu bestimmen, wobei die vorbestimmte Erfolg-Fehlerbestimmungsbedingung eine Anzahl von Bedingungen umfasst, und das Erleichtern der Erfolg-Fehlerbestimmungsbedingung das Reduzieren der Anzahl von Bedingungen umfasst, welche bei der Ausführung der Bestimmung zu verwenden sind.

26. Computerprogramm, umfassend Anweisungen, welche, wenn das Programm durch einen Computer ausgeführt wird, veranlassen, dass der Computer die Schritte des Verfahrens nach Anspruch 25 ausführt.

**Revendications**

1. Dispositif de traitement d'image comprenant :

une unité de division (403) qui est configurée pour diviser une image de fréquences, où l'axe vertical de l'image correspond aux coordonnées y d'une image de distances et l'axe horizontal correspond à des valeurs de distance de l'image de distances, et les valeurs de distance qui sont présentes sur les lignes horizontales au niveau de coordonnées y prédéterminées dans l'image de distances sont choisies en tant que coordonnées horizontales dans l'image, en un ou plusieurs segments suivant une direction des valeurs de distance ;

une première unité de sélection (411) qui est configurée pour sélectionner, dans un ou plusieurs segments prédéterminés parmi les segments qui sont obtenus au moyen de la division qui est réalisée par l'unité de division (403), des points échantillons à partir de la position de chaque coordonnée horizontale de chaque segment ;

une première unité d'estimation (412) qui est configurée pour estimer la géométrie d'une surface de route à partir d'un groupe de points échantillons qui sont sélectionnés par la première unité de sélection (411) ;

une première unité de détermination (413) qui est configurée pour, afin de déterminer si oui ou non un segment qui inclut une première surface de route estimée qui est la surface de route qui est estimée par la première unité d'estimation (412) est un segment de début pour réaliser une estimation de surface de route, déterminer si oui ou non la première surface de route estimée satisfait une condition de détermination de succès - d'échec, dans lequel l'unité de détermination (413) est configurée pour déterminer de façon séquentielle si oui ou non chacun des segments qui sont obtenus au moyen de la division qui est réalisée par l'unité de division (403) satisfait une condition de détermination de succès - d'échec, afin de déterminer un segment de début ; et

une seconde unité d'estimation (422) qui est configurée pour traiter de façon séquentielle les segments en partant du segment de début qui est déterminé par l'unité de détermination, pour estimer la géométrie d'une surface de route ; dans lequel :

l'unité de détermination (413) est configurée pour, lorsqu'il est déterminé qu'aucun segment ne satisfait la condition de détermination de succès - d'échec, déterminer de façon séquentielle si oui ou non une condition relaxée qui est obtenue en relaxant la condition de détermination de succès - d'échec est satisfaite pour chacun des segments, afin de déterminer le segment de début, dans lequel la condition de détermination de succès - d'échec comprend un nombre de conditions, et la relaxation de la condition de détermination de succès - d'échec comprend la réduction du nombre de conditions à utiliser à l'instant de la réalisation de la détermination.

2. Dispositif de traitement d'image selon la revendication 1, dans lequel la première unité de sélection (411) est configurée pour sélectionner, dans les un ou plusieurs segments prédéterminés, les points échantillons de telle sorte qu'un nombre de points échantillons au niveau de chacune des positions soit égal ou inférieur à un nombre prédéterminé.

3. Dispositif de traitement d'image selon la revendication 1 ou 2, dans lequel la condition relaxée représente une condition dans laquelle au moins un quelconque critère parmi un nombre de points échantillons qui sont sélectionnés par la première unité de sélection (411) tel que spécifié selon la condition de détermination de succès - d'échec, une dispersion des points échantillons tel que spécifié selon la condition de détermination de succès - d'échec et une condition qui concerne un angle de la première surface de route estimée tel que spécifié selon la condition de détermination de succès - d'échec est relaxé.

4. Dispositif de traitement d'image selon l'une quelconque des revendications 1 à 3, dans lequel, lorsque le segment de début n'est pas déterminé parmi les un ou plusieurs segments prédéterminés par la première unité de détermination (413), la sélection de points échantillons par la première unité de sélection (411), l'estimation de la géométrie de la surface de route par la première unité d'estimation (412) et la détermination, par la première unité de détermination (413), concernant si oui ou non la condition relaxée est satisfaite sont répétées le nombre prédéterminé de fois pour des segments en un nombre moindre que les un ou plusieurs segments prédéterminés.

5. Dispositif de traitement d'image selon l'une quelconque des revendications 1 à 4, comprenant en outre une unité de définition qui est configurée pour définir un segment prédéterminé, parmi les segments qui sont obtenus au moyen de la division qui est réalisée par l'unité de division (403), en tant que segment de début lorsque le segment de début n'est pas déterminé par la première unité de détermination (413) même si la sélection de points échantillons qui est réalisée par la première unité de sélection (411), l'estimation de la géométrie de la surface de route qui est réalisée par la première unité d'estimation (412) et la détermination qui est réalisée par la première unité de détermination (413) concernant si oui ou non la condition relaxée est satisfaite sont répétées le nombre prédéterminé de fois.

6. Dispositif de traitement d'image selon la revendication 5, dans lequel l'unité de définition définit, en tant que première surface de route estimée qui correspond au segment de début qui a été défini, une surface de route qui est supposée être une surface de route plane ou une surface de route qui est basée sur une surface de route qui a été estimée dans des vues qui se situent plus tôt qu'une vue qui correspond à l'image de distances.

7. Dispositif de traitement d'image selon l'une quelconque des revendications 1 à 6, comprenant en outre :

une seconde unité de sélection qui est configurée pour, après que le segment de début a été déterminé, sélectionner, dans un segment plus éloigné que le segment de début, des points échantillons à partir de la position de chaque coordonnée horizontale de chaque segment ;
une seconde unité d'estimation qui est configurée pour estimer la géométrie d'une surface de route à partir d'un groupe de points échantillons qui sont sélectionnés par la seconde unité de sélection ; et
une seconde unité de détermination qui est configurée pour déterminer si oui ou non une seconde surface de route estimée qui est la surface de route qui est estimée par la seconde unité d'estimation satisfait une condition de détermination de succès - d'échec pour déterminer si oui ou non la seconde surface de route estimée est appropriée, et pour déterminer, si la seconde surface de route estimée satisfait la condition de détermination de succès - d'échec, la seconde surface de route estimée comme étant une surface de route estimée appropriée dans le segment concerné.

8. Dispositif de traitement d'image selon l'une quelconque des revendications 1 à 7, comprenant en outre une unité d'interpolation qui est configurée pour, si un segment est présent dans une direction opposée par rapport à une direction d'un processus de détermination qui est réalisé par la première unité de détermination (413) concernant si oui ou non la condition de détermination de succès - d'échec est satisfaite après que le segment de début a été déterminé, interpoler, en tant que surface de route dans un segment qui est présent dans la direction opposée par rapport à la direction du processus, une ligne droite qui joint un point prédéterminé sur la première surface de route estimée qui est incluse dans le segment de début et un point prédéterminé qui est présent dans la direction opposée par rapport à la direction du processus par référence au point prédéterminé sur la première surface de route estimée.

9. Dispositif de traitement d'image selon l'une quelconque des revendications 1 à 7, comprenant en outre une unité d'interpolation qui est configurée pour, si un segment est présent dans une direction opposée par rapport à une direction d'un processus de détermination qui est réalisé par la première unité de détermination (413) concernant si oui ou non la condition de détermination de succès - d'échec est satisfaite après que le segment de début a été déterminé, interpoler, en tant que surface de route dans le segment qui est présent dans la direction opposée par rapport à la direction du processus, une surface de route qui est formée en étendant la première surface de route estimée qui est incluse dans le segment de début dans la direction opposée par rapport à la direction du processus.

10. Dispositif de traitement d'image selon l'une quelconque des revendications 1 à 9, dans lequel l'unité de division (403) est configurée pour diviser l'image de fréquences de telle sorte que, plus un segment est éloigné, plus une largeur du segment suivant une direction des valeurs de distance soit petite.

11. Dispositif de traitement d'image selon la revendication 1, dans lequel :

la première unité de détermination (413) est configurée pour déterminer si oui ou non la première surface de route estimée satisfait une première condition qui est la condition de détermination de succès - d'échec ; et le dispositif de traitement d'image (400) comprend en outre une première unité de définition qui est configurée pour, lorsque la première unité de détermination (413) détermine qu'une pluralité de premières surfaces de route estimées satisfont la première condition, définir, en tant que segment de début, un segment qui inclut une première surface de route estimée qui satisfait une seconde condition pour déterminer le segment le plus approprié en tant que segment de début.

12. Dispositif de traitement d'image selon la revendication 11, dans lequel la première unité de définition est configurée pour définir, en tant que segment de début, un segment qui, en tant que segment qui satisfait le critère prédéterminé, inclut une première surface de route estimée qui est la plus proche parmi la pluralité de premières surfaces estimées qui sont déterminées comme satisfaisant la première condition.

13. Dispositif de traitement d'image selon la revendication 12, dans lequel la première unité de définition est configurée pour définir, en tant que segment de début, un segment qui, en tant que segment qui satisfait le critère prédéterminé, inclut une première surface de route estimée dont la différence, par rapport à une surface de route historique qui est basée sur une surface de route qui a été estimée dans une vue qui se situe plus tôt qu'une vue qui correspond à l'image de distances, est la plus petite, parmi la pluralité de premières surfaces estimées qui sont déterminées comme satisfaisant la première condition.

14. Dispositif de traitement d'image selon la revendication 13, comprenant en outre une unité de mémoire qui est configurée pour stocker une information qui concerne une surface de route qui est estimée dans une vue qui se situe plus tôt qu'une vue qui correspond à l'image de distances, dans lequel :
la première unité de définition est configurée pour lire, à partir de l'unité de mémoire, la surface de route qui a été estimée dans la vue qui se situe plus tôt et pour obtenir la surface de route historique.

15. Dispositif de traitement d'image selon la revendication 13 ou 14, dans lequel la première unité de définition est configurée pour, dans un segment qui inclut une première surface de route estimée qui est déterminée comme satisfaisant la première condition, obtenir, en tant que différence, une somme de différences dans la direction verticale entre la première surface de route estimée et la surface de route historique au niveau de positions des deux extrémités dans la direction des valeurs de distance.

16. Dispositif de traitement d'image selon l'une quelconque des revendications 11 à 15, dans lequel la première condition représente une condition qui concerne au moins un quelconque critère parmi un nombre des points échantillons qui sont sélectionnés par la première unité de sélection (411), une dispersion des points échantillons ou un angle de la première surface de route estimée.

17. Dispositif de traitement d'image selon l'une quelconque des revendications 11 à 16, dans lequel la première unité de définition est configurée pour, lorsque la première unité de détermination (413) détermine que la première surface de route estimée qui satisfait la première condition n'est pas présente, définir, en tant que segment de début, un segment prédéterminé parmi les segments qui sont obtenus au moyen de la division qui est réalisée par l'unité de division (403).

18. Dispositif de traitement d'image selon la revendication 17, dans lequel la première unité de définition est configurée pour définir, en tant que première surface de route estimée qui correspond au segment de début qui a été défini, une surface de route qui est supposée être une surface de route plane ou une surface de route historique qui est basée sur une surface de route qui a été estimée dans une vue qui se situe plus tôt qu'une vue qui correspond à l'image de distances.

**19.** Dispositif de traitement d'image selon l'une quelconque des revendications 11 à 18, comprenant en outre :

une seconde unité de sélection qui est configurée pour, après que le segment de début a été déterminé, sélectionner, dans un segment plus éloigné que le segment de début, des points échantillons à partir de la position de chaque coordonnée horizontale de chaque segment ;
la seconde unité d'estimation qui est configurée pour estimer la géométrie d'une surface de route à partir d'un groupe de points échantillons qui sont sélectionnés par la seconde unité de sélection ;
une seconde unité de détermination qui est configurée pour déterminer si oui ou non une seconde surface de route estimée qui est la surface de route qui est estimée par la seconde unité d'estimation satisfait une seconde condition ; et
une seconde unité de définition qui est configurée pour, lorsque la seconde unité de détermination détermine que la seconde unité d'estimation satisfait la seconde condition, définir la seconde surface de route estimée en tant que surface de route estimée appropriée dans le segment concerné.

**20.** Dispositif de traitement d'image selon l'une quelconque des revendications 11 à 19, comprenant en outre une unité d'interpolation qui est configurée pour, si un segment est présent dans une direction opposée par rapport à une direction d'un processus de détermination qui est réalisé par la première unité de détermination (413) concernant si oui ou non la première condition est satisfaite après que le segment de début a été défini, interpoler, en tant que surface de route dans le segment qui est présent dans la direction opposée par rapport à la direction du processus, une ligne droite qui joint un point prédéterminé sur la première surface de route estimée qui est incluse dans le segment de début et un point prédéterminé qui est présent dans la direction opposée par rapport à la direction du processus par référence au point prédéterminé sur la première surface de route estimée.

**21.** Dispositif de traitement d'image selon l'une quelconque des revendications 11 à 19, comprenant en outre une unité d'interpolation qui est configurée pour, si un segment est présent dans une direction opposée par rapport à une direction d'un processus de détermination qui est réalisé par la première unité de détermination (413) concernant si oui ou non la première condition est satisfaite après que le segment de début a été défini, interpoler, en tant que surface de route dans le segment qui est présent dans la direction opposée par rapport à la direction du processus, une surface de route qui est formée en étendant la première surface de route estimée qui est incluse dans le segment de début dans la direction opposée par rapport à la direction du processus.

**22.** Dispositif de reconnaissance d'objet incluant le dispositif de traitement d'image (400) selon l'une quelconque des revendications 1 à 21, et comprenant :

une première unité de prise d'image qui est configurée pour prendre une image d'un sujet photographique, pour obtenir une première image prise ;
une seconde unité de prise d'image qui est installée au niveau d'une position différente d'une position de la première unité de prise d'image et qui est configurée pour prendre une image du sujet photographique, pour obtenir une seconde image prise ;
une première unité de génération qui est configurée pour générer l'image de distances sur la base des valeurs de distance qui sont obtenues en relation avec le sujet photographique à partir de la première image prise et de la seconde image prise ; et
une seconde unité de génération qui est configurée pour générer l'image de fréquences sur la base de l'image de distances.

**23.** Système de commande de dispositif comprenant :

le dispositif de reconnaissance d'objet selon la revendication 22 ; et
un dispositif de commande qui est configuré pour commander une cible pour une commande sur la base d'une information portant sur l'objet qui est détecté par le dispositif de reconnaissance d'objet.

**24.** Corps mobile comprenant le système de commande de dispositif selon la revendication 23.

**25.** Procédé de traitement d'image mis en œuvre par un ordinateur comprenant :

la division d'une image de fréquences, où l'axe vertical de l'image correspond aux coordonnées y d'une image de distances et l'axe horizontal correspond à des valeurs de distance de l'image de distances, et les valeurs de distance qui sont présentes sur les lignes horizontales au niveau de coordonnées y prédéterminées dans l'image de distances sont choisies en tant que coordonnées horizontales dans l'image, dans un ou plusieurs segments suivant une direction des valeurs de distance ;

la sélection, dans un ou plusieurs segments prédéterminés parmi les segments qui sont obtenus au moyen de la division qui est réalisée au niveau de la division, de points échantillons à partir de la position de chaque coordonnée horizontale de chaque segment ;

l'estimation de la géométrie d'une surface de route à partir d'un groupe de points échantillons qui sont sélectionnés au niveau de la sélection ; et

la détermination, afin de déterminer si oui ou non un segment qui inclut une première surface de route estimée qui est la surface de route qui est estimée au niveau de l'estimation est un segment de début pour réaliser une estimation de surface de route, de si oui ou non la première surface de route estimée satisfait une condition de détermination de succès - d'échec ; dans lequel la détermination comprend la détermination de façon séquentielle de si oui ou non chacun des segments qui sont obtenus au moyen de la division satisfait une condition de détermination de succès - d'échec, afin de déterminer un segment de début ; et

le traitement de façon séquentielle des segments en partant du segment de début déterminé, pour estimer la géométrie d'une surface de route, dans lequel, lorsqu'il est déterminé qu'aucun segment ne satisfait la condition de détermination de succès - d'échec prédéterminée, la détermination de façon séquentielle de si oui ou non une condition relaxée qui est obtenue en relaxant la condition de détermination de succès - d'échec est satisfaite pour chacun des segments, afin de déterminer le segment de début, dans lequel la condition de détermination de succès - d'échec prédéterminée comprend un nombre de conditions, et la relaxation de la condition de détermination de succès - d'échec comprend la réduction du nombre de conditions à utiliser à l'instant de la réalisation de la détermination.

26. Programme informatique comprenant des instructions qui, lorsque le programme est exécuté par un ordinateur, amènent l'ordinateur à mettre en œuvre les étapes du procédé de la revendication 25.

# FIG.1A

# FIG.1B

# FIG.2

# FIG.3

# FIG.4

# FIG.5A

# FIG.5B

# FIG.6

# FIG.7

# FIG.8A

Ip

600    601

# FIG.8B

VM
dp

y

601a

600a

# FIG.9A

Ip1

# FIG.9B

VM1

DR
ER1

# FIG.10A

lp2

# FIG.10B

VM2

ER2

DR

# FIG.11A

lp3

# FIG.11B

VM3

DR

ER3

FIG.12A

FIG.12B

# FIG.13

DISPARITY VALUE COMPUTING UNIT 300

REFERENCE IMAGE

COMPAR-ISON IMAGE

COST CALCU-LATING UNIT 301

COST VALUE

DETER-MINING UNIT 302

DIS-PARITY VALUE

GENER-ATING UNIT 303

DISPARITY IMAGE

# FIG.14

# FIG.15

# FIG.16

# FIG.17A

VM4

dp

DR

y

ER4

SEQUENCE OF
OPERATIONS

# FIG.17B

VM5

dp

ER5

y

SEQUENCE OF
OPERATIONS

# FIG.18

START

GENERATE ANALOG IMAGE SIGNAL ⟋S1-1

GENERATE ANALOG IMAGE SIGNAL ⟋S1-2

CONVERT TO DIGITAL IMAGE DATA ⟋S2-1

CONVERT TO DIGITAL IMAGE DATA ⟋S2-2

OUTPUT DATA OF COMPARISON IMAGE ⟋S3-1

OUTPUT DATA OF REFERENCE IMAGE ⟋S3-2

CALCULATE COST VALUE C ⟋S4

GENERATE DISPARITY IMAGE ⟋S5

END

**FIG.19**

START

→ S11
INPUT DISPARITY IMAGE

→ S12
GENERATE V MAP FROM DISPARITY IMAGE

→ S13
DIVIDE V MAP INTO SEGMENTS

→ S14
INITIALIZE seg_index TO 0

→ S15
START OF LOOPS WHOSE NUMBER OF ITERATIONS IS EQUAL TO PREDETERMINED NUMBER OF SEGMENTS

→ S16
SELECT SAMPLE POINT AT EACH dp COORDINATE IN TARGET SEGMENT

→ S17
ESTIMATE GEOMETRY OF ROAD SURFACE USING GROUP OF SAMPLE POINTS

→ S18
DETERMINE WHETHER ESTIMATED ROAD SURFACE IS SUCCESSFUL OR FAILURE

→ S19
HAS ESTIMATION FAILED? — NO →

YES ↓ S20
INCREMENT seg_index BY ONE

→ S21
END OF LOOPS WHOSE NUMBER OF ITERATIONS IS EQUAL TO PREDETERMINED NUMBER OF SEGMENTS

→ S22
IS START SEGMENT SEARCH OPERATION PERFORMED FOR PREDETERMINED NUMBER OF TIMES? — YES →

NO ↓ S24
RELAX CONDITION

→ S23
SET START SEGMENT

→ S25
WHEN NEEDED, INTERPOLATE ROAD SURFACE IN NEARER SEGMENTS

→ S26
IN seg_index, SET VALUE OBTAINED BY INCREMENTING INDEX OF START SEGMENT BY ONE

→ S27
START OF LOOPS WHOSE NUMBER OF ITERATIONS IS EQUAL TO NUMBER OF SUBSEQUENT SEGMENTS

→ S28
SELECT SAMPLE POINT AT EACH dp COORDINATE IN TARGET SEGMENT

→ S29
ESTIMATE GEOMETRY OF ROAD SURFACE USING GROUP OF SAMPLE POINTS

→ S30
DETERMINE WHETHER ESTIMATED ROAD SURFACE IS SUCCESSFUL OR FAILURE

→ S31
INCREMENT seg_index BY ONE

→ S32
END OF LOOPS WHOSE NUMBER OF ITERATIONS IS EQUAL TO NUMBER OF SUBSEQUENT SEGMENTS

END

## FIG.20

ROAD SURFACE ESTIMATING UNIT 400a

DIS-PARITY IMAGE → INPUT UNIT 401 → V MAP GENER-ATING UNIT 402 → DIVID-ING UNIT 403 → START SEGMENT SEARCHING UNIT 404a

START SEGMENT SEARCHING UNIT 404a:
- FIRST SAMPLE-POINT SELECTING UNIT 411a
- FIRST GEOMETRY ESTIMATING UNIT 412
- FIRST DETERMINING UNIT 413

CONTINUED ESTIMATING UNIT 405:
- SECOND SAMPLE-POINT SELECTING UNIT 421
- SECOND GEOMETRY ESTIMATING UNIT 422
- SECOND DETERMINING UNIT 423
- INTER-POLATING UNIT 424

SMOOTHING UNIT 406 → OUT-PUT UNIT 407 → ROAD SURFACE INFOR-MATION

EP 3 293 671 B1

62

## FIG.21A

VM6

dp

0

ER6

y

## FIG.21B

VM6

dp

0

ER6a

y

## FIG.22A

lp7

620    621    622

## FIG.22B

VM7

dp

0

621a

y    ER7b    ER7a

# FIG.23

EP 3 293 671 B1

# FIG.24

SEQUENCE OF
OPERATIONS

# FIG.25

START

INPUT DISPARITY IMAGE — S51

GENERATE V MAP FROM DISPARITY IMAGE — S52

DIVIDE V MAP INTO SEGMENTS — S53

INITIALIZE seg_index TO 0 — S54

START OF LOOPS WHOSE NUMBER OF ITERATIONS IS EQUAL TO PREDETERMINED NUMBER OF SEGMENTS — S55

SELECT SAMPLE POINT AT EACH dp COORDINATE IN TARGET SEGMENT — S56

ESTIMATE GEOMETRY OF ROAD SURFACE USING GROUP OF SAMPLE POINTS — S57

DETERMINE WHETHER ESTIMATED ROAD SURFACE IS SUCCESSFUL OR FAILURE — S58

INCREMENT seg_index BY ONE — S59

END OF LOOPS WHOSE NUMBER OF ITERATIONS IS EQUAL TO PREDETERMINED NUMBER OF SEGMENTS — S60

AS START SEGMENT, SET SEGMENT THAT INCLUDES NEAREST ROAD SURFACE FROM AMONG ROAD SURFACES FOR WHICH ESTIMATION IS SUCCESSFUL — S61

WHEN NEEDED, INTERPOLATE ROAD SURFACE IN NEARER SEGMENTS — S62

IN seg_index, SET VALUE OBTAINED BY INCREMENTING INDEX OF START SEGMENT BY ONE — S63

START OF LOOPS WHOSE NUMBER OF ITERATIONS IS EQUAL TO NUMBER OF SUBSEQUENT SEGMENTS — S64

SELECT SAMPLE POINT AT EACH dp COORDINATE IN TARGET SEGMENT — S65

ESTIMATE GEOMETRY OF ROAD SURFACE USING GROUP OF SAMPLE POINTS — S66

DETERMINE WHETHER ESTIMATED ROAD SURFACE IS SUCCESSFUL OR FAILURE — S67

INCREMENT seg_index BY ONE — S68

END OF LOOPS WHOSE NUMBER OF ITERATIONS IS EQUAL TO NUMBER OF SUBSEQUENT SEGMENTS — S69

END

FIG.26

## FIG.27A

Ip9

## FIG.27B

VM9

ER9

DR

## FIG.28

VM10

ER10a

α₂

α₁

ER10b  β₁

β₂

VM10

ER10a

ER10b

RR

# FIG.29A

# FIG.29B

# FIG.30A

# FIG.30B

# FIG.31A

# FIG.31B

# FIG.32

# FIG.33

START

INPUT DISPARITY IMAGE ⟋S71

GENERATE V MAP FROM DISPARITY IMAGE ⟋S72

DIVIDE V MAP INTO SEGMENTS ⟋S73

INITIALIZE seg_index TO 0 ⟋S74

START OF LOOPS WHOSE NUMBER OF ITERATIONS IS EQUAL TO PREDETERMINED NUMBER OF SEGMENTS ⟋S75

SELECT SAMPLE POINT AT EACH dp COORDINATE IN TARGET SEGMENT ⟋S76

ESTIMATE GEOMETRY OF ROAD SURFACE USING GROUP OF SAMPLE POINTS ⟋S77

DETERMINE WHETHER ESTIMATED ROAD SURFACE IS SUCCESSFUL OR FAILURE ⟋S78

INCREMENT seg_index BY ONE ⟋S79

END OF LOOPS WHOSE NUMBER OF ITERATIONS IS EQUAL TO PREDETERMINED NUMBER OF SEGMENTS ⟋S80

AS START SEGMENT, SET SEGMENT THAT INCLUDES ROAD SURFACE WHOSE DIFFERENCE FROM HISTORICAL ROAD SURFACE IS SMALLEST ⟋S81

WHEN NEEDED, INTERPOLATE ROAD SURFACE IN NEARER SEGMENTS ⟋S82

IN seg_index, SET VALUE OBTAINED BY INCREMENTING INDEX OF START SEGMENT BY ONE ⟋S83

START OF LOOPS WHOSE NUMBER OF ITERATIONS IS EQUAL TO NUMBER OF SUBSEQUENT SEGMENTS ⟋S84

SELECT SAMPLE POINT AT EACH dp COORDINATE IN TARGET SEGMENT ⟋S85

ESTIMATE GEOMETRY OF ROAD SURFACE USING GROUP OF SAMPLE POINTS ⟋S86

DETERMINE WHETHER ESTIMATED ROAD SURFACE IS SUCCESSFUL OR FAILURE ⟋S87

INCREMENT seg_index BY ONE ⟋S88

END OF LOOPS WHOSE NUMBER OF ITERATIONS IS EQUAL TO NUMBER OF SUBSEQUENT SEGMENTS ⟋S89

STORE ESTIMATED ROAD SURFACE ⟋S90

END

71

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011128844 A
- US 20150294160 A
- EP 2767927 A